(19) Europäisches Patentamt
European Patent Office
Office européen des brevets

(11) Veröffentlichungsnummer : **0 417 555 B1**

# (12) EUROPÄISCHE PATENTSCHRIFT

(45) Veröffentlichungstag der Patentschrift : **03.11.93 Patentblatt 93/44**

(51) Int. Cl.[5] : **C09B 23/08,** B41M 5/00, G11B 7/24

(21) Anmeldenummer : **90116605.8**

(22) Anmeldetag : **30.08.90**

## (54) Pentamethinfarbstoffe und Derivate.

(30) Priorität : **13.09.89 DE 3930520**

(43) Veröffentlichungstag der Anmeldung : **20.03.91 Patentblatt 91/12**

(45) Bekanntmachung des Hinweises auf die Patenterteilung : **03.11.93 Patentblatt 93/44**

(84) Benannte Vertragsstaaten : **CH DE FR GB LI**

(56) Entgegenhaltungen :
**DE-A- 3 704 263**
**DE-A- 3 738 240**

(73) Patentinhaber : **BAYER AG**
**D-51368 Leverkusen (DE)**

(72) Erfinder : **Berneth, Horst, Dr.**
**Erfurter Strasse 1**
**D-5090 Leverkusen 1 (DE)**

EP 0 417 555 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der Erfindung sind Pentamethinfarbstoffe der Formel

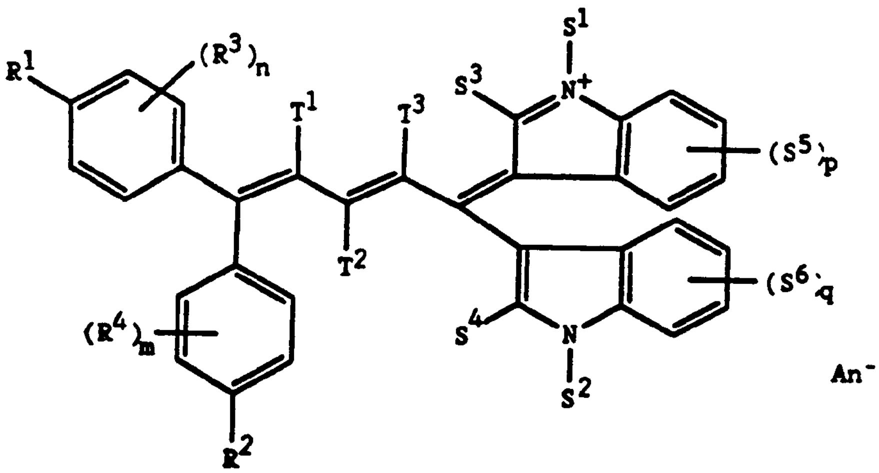

I

An⁻

sowie Derivate von Pentamethinfarbstoffen der isomeren Formeln

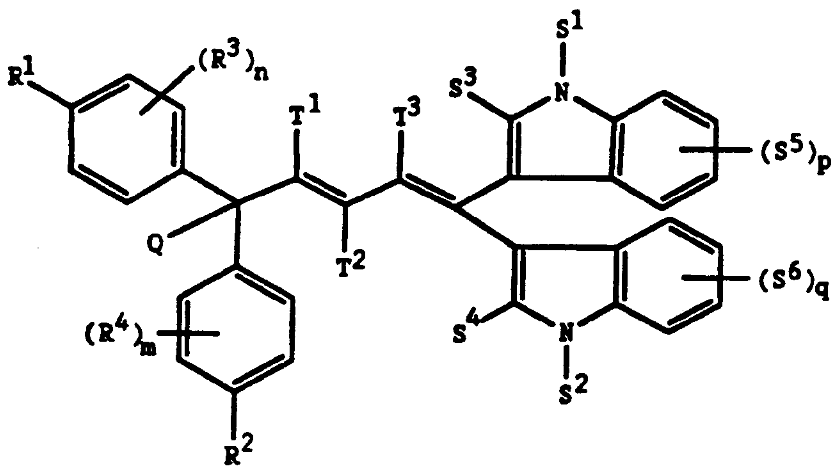

II,

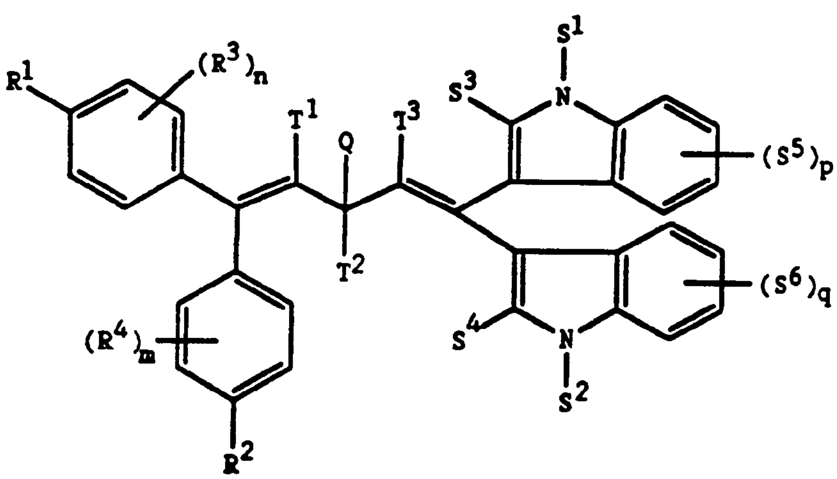

III

und

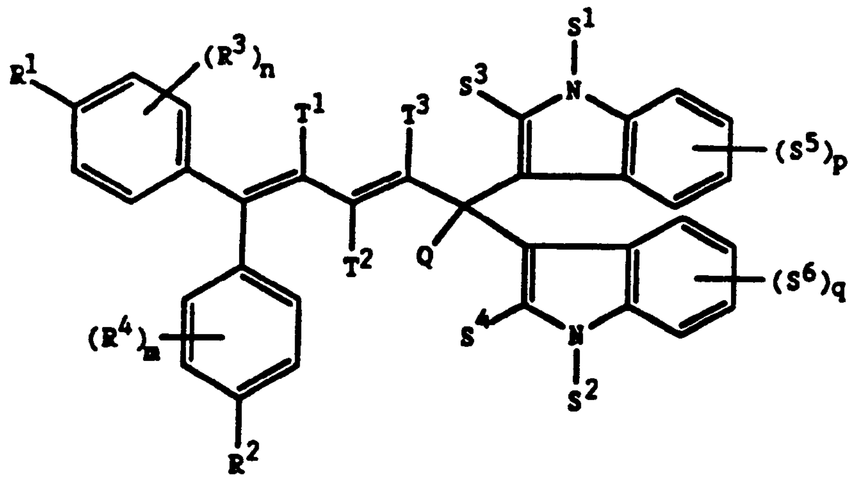

IV,

worin

| | |
|---|---|
| $R^1$ und $R^2$ | unabhängig voneinander Wasserstoff, Halogen, Alkyl, Cycloalkyl, Aralkyl, Alkoxy, Cycloalkoxy, Phenoxy, Alkylthio oder $NP^1P^2$, |
| $R^3$ und $R^4$ | unabhängig voneinander Wasserstoff, Halogen, Alkyl, Alkoxy oder Phenyl, |
| $P^1$ und $P^2$ | unabhängig voneinander Wasserstoff, Alkyl, Cycloalkyl, Alkenyl, Aralkyl, Aryl oder ein ggf. über Alkyl gebundener heterocyclischer Rest oder |
| $P^1$ und $P^2$ | zusammen mit N einen 5-, 6- oder 7-gliedrigen gesättigten oder teilweise ungesättigten Ring, der 0-2 weitere Heteroatome wie N, O oder S enthalten und durch Alkyl oder Phenyl substituiert sein kann, oder |
| $P^1$ und/oder $P^2$ | mit $R^3$ und/oder $R^4$ die restlichen Atome eines 5- oder 6-gliedrigen Ringes, der noch ein O oder N enthalten und durch Alkyl oder Phenyl substituiert sein kann, bilden, |
| Q | OV, $NV^1V^2$, SW, $SO_2X$ oder $CLY^1Y^2$, |
| $S^1$ und $S^2$ | unabhängig voneinander Wasserstoff, Alkyl, Alkenyl, Cycloalkyl, Aralkyl oder ein über Alkyl gebundener heterocyclischer Rest, |
| $S^3$ und $S^4$ | unabhängig voneinander Wasserstoff, Alkyl, Alkenyl, Cycloalkyl, Aralkyl, Aryl oder ein gegebenenfalls über Alkyl gebundener heterocyclischer Rest, |
| $T^1$ bis $T^3$ | Wasserstoff, Alkyl, Alkenyl, Cycloalkyl, Aralkyl, Halogen, Alkoxy, Dialkylamino, Cyano, Hydroxycarbonyl, Alkoxycarbonyl, Aryl, ein ggf. über Alkyl gebundener heterocyclischer Rest oder jeweils zwei der Reste $T^1$ bis $T^3$ die fehlenden Glieder eines 5- bis 7-gliedrigen Ringes, der aromatisch oder teilhydriert sein und bis zu 2 Heteroatome aus der Reihe O, N oder S enthalten kann, |
| $S^5$ und $S^6$ | unabhängig voneinander Wasserstoff, Alkyl, Alkenyl, Cycloalkyl, Aralkyl, Aryl, Hydroxy, Alkoxy, Halogen, Dialkylamino, Nitro, Cyano, Alkylthio, Alkoxycarbonyl, Dialkylaminocarbonyl, Alkoxycarbonyloxy oder Alkylsulfonyl oder zusammen mit $S^1$ bzw. $S^2$ eine $C_2$- oder $C_3$-Brücke, |
| V, $V^1$, $V^2$ | unabhängig voneinander Wasserstoff, Alkyl, Alkenyl, Cycloalkyl, ggf. über Alkyl gebundene Aryl- oder heterocyclische Reste, -CO-$Z^1$, |

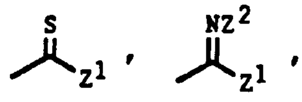

CN oder $V^1$ und $V^2$ gemeinsam mit dem Stickstoff einen ggf. vollständig oder teilweise hydrierten, 0-3 Heteroatome der Reihe O, N, S, $SO_2$ enthaltenden Ring,

| | |
|---|---|
| W | Wasserstoff, Alkyl, Alkenyl, Cycloalkyl, ggf. über Alkyl gebundene Aryl- oder heterocyclische Reste, |

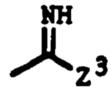

oder CN,

| | |
|---|---|
| X | Alkyl, Alkenyl, Cycloalkyl oder ggf. über Alkyl gebundene Aryl- oder heterocyclische Reste, |
| L | Wasserstoff, Alkyl, Alkenyl, Cycloalkyl, Halogen, über Alkyl gebundene Aryl- oder heterocyclische Reste, oder die Bedeutung von $Y^1$ bzw. $Y^2$ hat, |
| $Y^1$ und $Y^2$ | $-CO-Z^1$, |

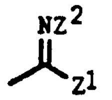

$-CN$, $-SO_2-Z^1$, $NO_2$, Aryl oder ein heterocyclischer Rest,

| | |
|---|---|
| $Z^1$ bis $Z^3$ | Wasserstoff, Alkyl, Alkenyl, Cycloalkyl, Alkoxy, Alkylthio, Cycloalkoxy, Amino, Mono- oder Bisalkylamino, Arylamino oder ggf. über Alkyl oder Alkoxy gebundene Aryl- oder heterocyclische Reste oder |
| $Z^1$ und $Z^2$ | mit $V^1$ oder $V^2$ bzw. $Y^1$ oder $Y^2$ oder einem anderen Rest $Z^{1'}$ oder $Z^{2'}$ die fehlenden Glieder eines ggf. vollständig oder teilweise hydrierten, 0-2 Heteroatome der Reihe O, N, S oder $SO_2$ enthaltenden, ggf. benzanellierten Ringes, wobei |
| $Z^{1'}$ und $Z^{2'}$ | die Bedeutung von $Z^1$ bzw. $Z^2$ besitzen, |
| n, m, p und q | 1 oder 2 bedeuten und |
| $An^-$ | für ein Anion steht |

und alle cyclischen und nichtcyclischen Reste in der Farbstoffchemie übliche nichtionische Substituierten tragen können,
ihre Herstellung, die Verwendung der Farbstoffe in optischen Aufzeichnungsmaterialien sowie optische Aufzeichnungsmaterialien, die diese Farbstoffe enthalten, und die Verwendung der Derivate in druck- und thermoempfindlichen Aufzeichnungsmaterialien, die im Wellenlängenbereich 600 bis 900 nm gelesen werden können, sowie Aufzeichnungsmaterialien, die diese Derivate enthalten.

Alkylreste, auch solche in z.B. Alkoxy, Alkylamino oder Aralkyl, können bis zu 18 C-Atome aufweisen und z.B. durch Halogen, $C_1$-$C_4$-Alkoxy, Nitro, Cyano, $C_1$-$C_4$-Alkoxycarbonyl oder $C_1$-$C_4$-Alkylsulfonyl substituiert sein.

Alkenylreste können bis zu 18 C-Atome aufweisen und z.B. durch Halogen, $C_1$-$C_4$-Alkoxy, Cyano oder $C_1$-$C_4$-Alkoxycarbonyl substituiert sein.

Cycloalkylreste können 3-8 C-Atome aufweisen und z.B. durch $C_1$-$C_4$-Alkyl, $C_1$-$C_4$-Alkoxy, Halogen, Cyano, $C_1$-$C_4$-Alkoxycarbonyl oder Aryl substituiert sein.

Arylreste, auch solche in Aralkylgruppen, sind Phenyl, Naphthyl oder Anthracenyl, die z.B. durch $C_1$-$C_4$-Alkyl, $C_1$-$C_4$-Alkoxy, Halogen, Cyano, $C_1$-$C_4$-Alkoxycarbonyl, Nitro, Aryl oder heterocyclische Reste substituiert sein können, wobei bis zu 5 Substituenten, die nicht gleich sein müssen, möglich sind.

Heterocyclische Reste, auch solche, die über Alkyl gebunden sind, sind fünf- bis siebengliedrige aromatische oder quasiaromatische Heterocyclen oder ihre teilweise oder vollständig hydrierten Derivate, die O, N, S oder $SO_2$ als Heteroatome enthalten, wobei maximal 4 solcher Heteroatome, die auch untereinander gemischt sein können in einem Ring auftreten, und wobei diese Heterocyclen durch Benzol, Naphthalin oder Pyridin anelliert und/oder durch $C_1$-$C_4$-Alkyl, $C_1$-$C_4$-Alkoxy, Halogen, Cyano, $C_1$-$C_4$-Alkoxycarbonyl, Nitro oder Aryl substituiert sein können.

Halogen bedeutet Fluor, Chlor, Brom, insbesondere Chlor.

Anionen $An^-$ sind z.B. Halogenid-Ionen, $BF_4^-$, $ClO_4^-$, $SiF_6^{2-}$, $PF_6^-$, $B(C_6H_5)_4^-$, $H_2PO_4^-$ oder die Anionen von ggf. durch Halogen, $C_1$-$C_4$-Alkyl, $C_1$-$C_4$-Alkoxy, Hydroxy, Cyano, $C_1$-$C_4$-Alkoxycarbonyl, Nitro oder $C_1$-$C_4$-Alkylsulfonyl substituierten $C_1$- bis $C_{18}$-Carbonsäuren, $C_2$-$C_{18}$-Dicarbonsäuren, $C_1$-$C_{18}$-Alkansulfonsäuren, Benzol- oder Naphthalin-mono- oder -dicarbon- oder - sulfonsäuren.

Bevorzugt sind Pentamethinfarbstoffe der Formel

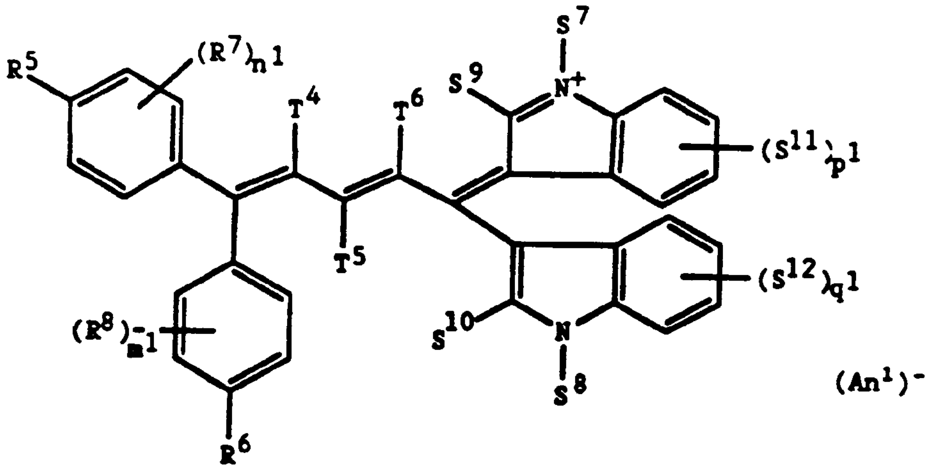

V

sowie Derivate von Pentamethinfarbstoffen der isomeren Formeln

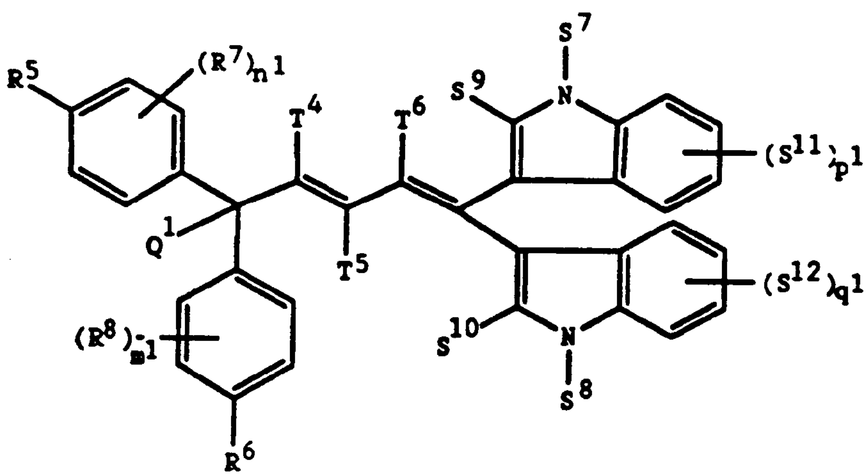

VI,

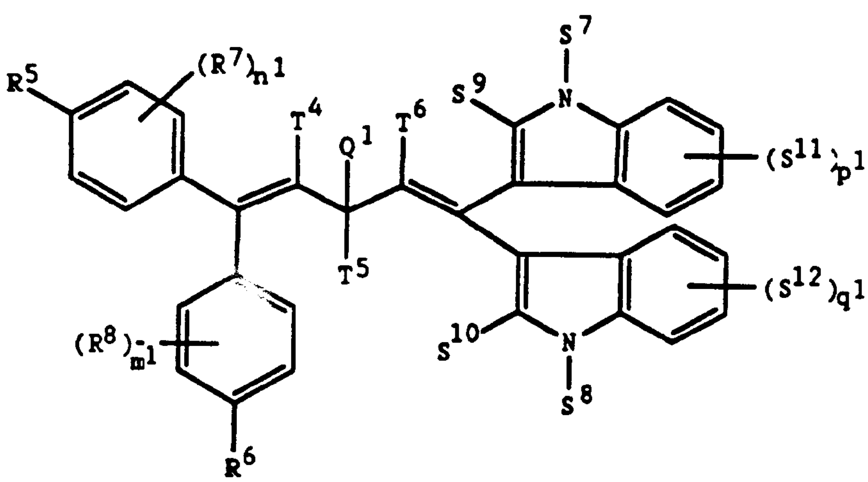

VII

und

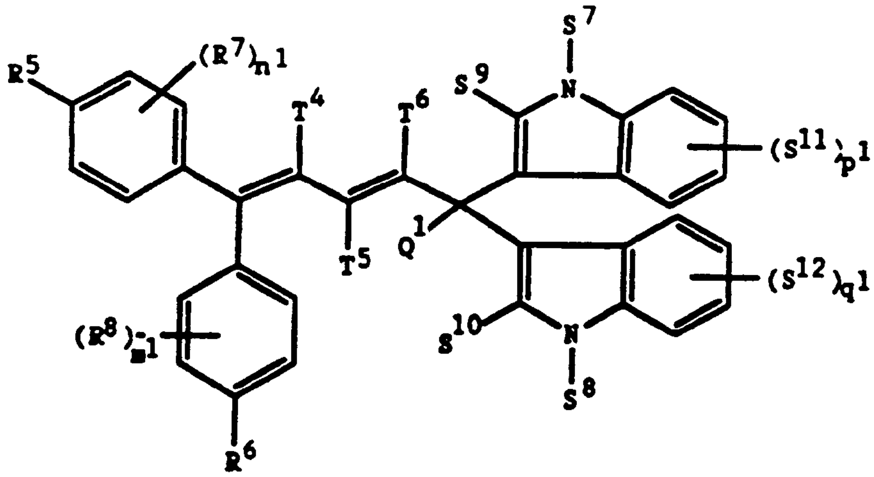

VIII,

worin

| | |
|---|---|
| $R^5$ | $C_1$-$C_{18}$-Alkoxy- oder $C_1$-$C_{18}$-Alkylthioreste, die durch Chlor oder $C_1$-$C_4$-Alkoxy substituiert sein können, Cyclopentoxy-, Cyclohexoxy-, Benzyloxy- oder Phenyloxy-Reste, die durch $C_1$-$C_4$-Alkyl, $C_1$-$C_4$-Alkoxy und/oder Chlor substituiert sein können, oder $NP^3P^4$, |
| $R^6$ | Wasserstoff, Chlor, $C_1$-$C_{18}$-Alkyl, Cyclopentyl, Cyclohexyl, Benzyl oder die Bedeutung von $R^5$ hat, |
| $R^7$ und $R^8$ | unabhängig voneinander Wasserstoff, Chlor, $C_1$-$C_4$-Alkyl, $C_1$-$C_4$-Alkoxy oder Phenyl, |
| $P^3$ und $P^4$ | unabhängig voneinander Wasserstoff, $C_1$-$C_{18}$-Alkyl, das auch durch Chlor, Hydroxy, $C_1$-$C_4$-Alkoxy, Cyano, $C_1$-$C_4$-Alkoxycarbonyl und/oder $C_1$-$C_4$-Alkanoyloxy substituiert sein kann, Cyclopentyl, Cyclohexyl, $C_3$-$C_{10}$-Alkenyl, Benzyl-, Phenethyl-, Phenyl-, Pyridylmethyl- oder Pyridylethyl-Reste, die durch Chlor, $C_1$-$C_4$-Alkyl, $C_1$-$C_4$-Alkoxy, Nitro, Cyano und/oder $C_1$-$C_4$-Alkoxycarbonyl substituiert sein können, oder |
| $P^3$ und $P^4$ | zusammen mit dem N einen ggf. durch Chlor, $C_1$-$C_4$-Alkyl und/oder Phenyl substituierten Pyrrolidin-, Piperidin-, Piperazin-, Morpholin oder Pyrazolin-Rest |
| $P^3$-$R^7$, $P^4$-$R^7$, $P^3$-$R^8$ oder $P^4$-$R^8$ | eine Atomgruppe der Formeln $-CH_2-CH_2-$, $-CH_2-CH_2-CH_2-$, |

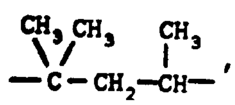

$-CH_2-CH_2-O-$,

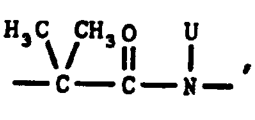 , 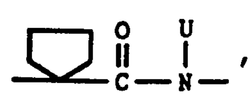 ,

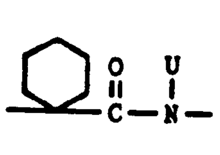 , 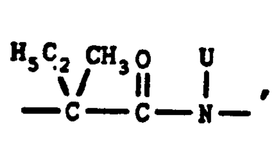 , 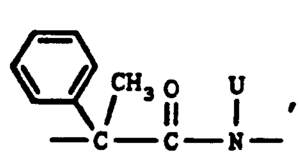 ,

| | |
|---|---|
| U | Wasserstoff, $C_1$-$C_4$-Alkyl oder Benzyl, |
| $Q^1$ | Hydroxy, $C_1$-$C_{18}$-Alkoxy, das durch Chlor, $C_1$-$C_4$-Alkoxy, Cyano oder $C_1$-$C_4$- |

Alkoxycarbonyl substituiert sein kann, Allyloxy, Cylopentoxy, Cyclohexoxy, ggf. durch $C_1$-$C_4$-Alkyl, Chlor und/oder $C_1$-$C_4$-Alkoxy substituierte Benzyloxy-, Phenethoxy-, Naphthylmethoxy-, Picolyloxy-, Phenoxy- oder Naphthoxy-Reste, -$NV^3V^4$,

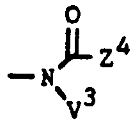 , 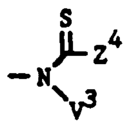 , 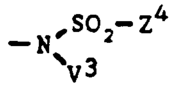 ,

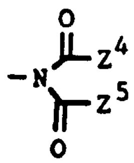 , 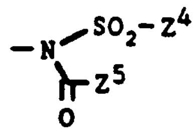 , 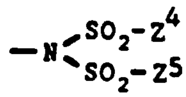 ,

-$SW^1$,

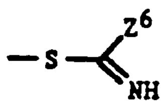 ,

-$SO_2X^1$,

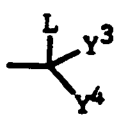 , 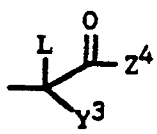 ,

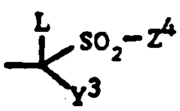 , 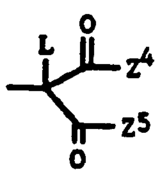 , 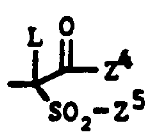 , 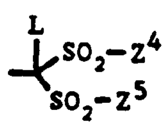 ,

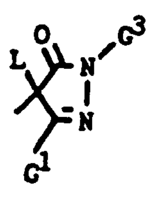 , 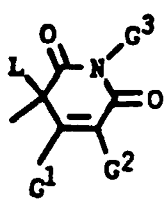 ,

$S^7$ und $S^8$ unabhängig voneinander Wasserstoff, $C_1$-$C_{18}$-Alkyl, das durch Chlor, $C_1$-$C_4$-Alkoxy, Cyano oder $C_1$-$C_4$-Alkoxycarbonyl substituiert sein kann, Allyl, Cyclopentyl, Cyclohexyl, ggf. durch $C_1$-$C_4$-Alkyl, Chlor und/oder $C_1$-$C_4$-Alkoxy substituierte Benzyl-, Phenethyl-, Naphthylmethyl- oder Picolyl-Reste,

$S^9$ u. $S^{10}$ unabhängig voneinander Wasserstoff, $C_1$-$C_{18}$-Alkyl, das durch Chlor, $C_1$-$C_4$-Alkoxy, Cyano oder $C_1$-$C_4$-Alkoxycarbonyl substituiert sein kann, Allyl,

Cyclopentyl, Cyclohexyl, ggf. durch $C_1$-$C_4$-Alkyl, Chlor, Brom, $C_1$-$C_4$-Alkoxy, Cyano, Nitro und/oder $C_1$-$C_4$-Alkoxycarbonyl substituierte Benzyl-, Phenethyl-, Naphthylmethyl-, Picolyl-, Chinolylmethyl-, Phenyl-, Naphthyl-, Pyridyl-, Pyrimidyl-, Pyrazinyl-, Imidazolyl-, Oxazolyl-, Thiazolyl-, Triazolyl-, Benzimidazolyl-, Benzoxazolyl-, Benzthiazolyl- oder Chinolyl-Reste,

$T^4$ - $T^6$ Wasserstoff, $C_1$-$C_8$-Alkyl, das durch Chlor, $C_1$-$C_4$-Alkoxy, Cyano oder $C_1$-$C_4$-Alkoxycarbonyl substituiert sein kann, Vinyl, Allyl, Cyclopentyl, Cyclohexyl, Fluor, Chlor, Brom, $C_1$-$C_8$-Alkoxy, das noch durch $C_1$-$C_4$-Alkoxy substituiert sein kann, $C_1$-$C_4$-Dialkylamino, Piperidino, Pyrrolidino, Nitro, Cyano, $C_1$-$C_4$-Alkoxycarbonyl, ggf. durch $C_1$-$C_4$-Alkyl, Chlor, $C_1$-$C_4$-Alkoxy, $C_1$-$C_4$-Alkylsulfonyl, Cyano und/oder $C_1$-$C_4$-Alkoxycarbonyl substituierte Benzyl-, Phenethyl-, Naphthylmethyl-, Picolyl-, Phenyl-, Naphthyl-, Pyridyl-, Chinolyl-, Pyrimidyl-, Pyrazinyl-, Indolyl-, Indolenyl-, Indolizinyl-, Imidazolyl-, Oxazolyl-, Thiazolyl-, Triazolyl-, Benzimidazolyl-, Benzoxazolyl- oder Benzthiazolyl-Reste oder jeweils zwei der Reste $T^4$ bis $T^6$ eine Brücke der Formeln $-CH_2CH_2-$, $-CH_2CH_2CH_2-$, $-CH_2CH_2CH_2CH_2-$, $-CH_2SCH_2-$,

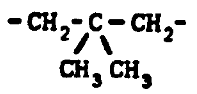 , 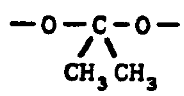 ,

$-CH=CH-CH_2-$, $-CH=CH-CH=CH-$,

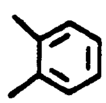 , 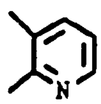 ,

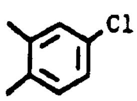 ,

$S^{11}$ u. $S^{12}$ Wasserstoff, $C_1$-$C_8$-Alkyl, Allyl, Cyclohexyl, Benzyl, Phenyl, Hydroxy, $C_1$-$C_4$-Alkoxy, Chlor, Brom, $C_1$-$C_4$-Dialkylamino, Nitro, Cyano, $C_1$-$C_4$-Alkylthio, $C_1$-$C_4$-Alkoxycarbonyl, $C_1$-$C_4$-Dialkylaminocarbonyl, $C_1$-$C_4$-Alkoxycarbonyloxy oder $C_1$-$C_4$-Alkylsulfonyl oder zusammen mit $S^7$ bzw. $S^8$ eine $-CH_2CH_2-$ oder $-CH_2CH_2CH_2$-Brücke, die durch maximal drei Methylgruppen substituiert sein kann,

$V^3$, $V^4$ und $W^1$ unabhängig voneinander Wasserstoff, $C_1$-$C_{18}$-Alkyl, das durch Chlor, $C_1$-$C_4$-Alkoxy, Cyano oder $C_1$-$C_4$-Alkoxycarbonyl substituiert sein kann, Allyl, Cyclopentyl, Cyclohexyl, Cyano, ggf. durch $C_1$-$C_4$-Alkyl, Chlor, Brom, $C_1$-$C_4$-Alkoxy, Cyano, Nitro oder $C_1$-$C_4$-Alkoxycarbonyl substituierte Benzyl-, Phenethyl-, Naphthylmethyl-, Picolyl-, Chinolylmethyl-, Phenyl-, Naphthyl-, Pyridyl-, Pyrimidyl-, Pyrazinyl-, Imidazolyl-, Oxazolyl-, Thiazolyl-, Triazolyl-, Benzimidazolyl-, Benzoxazolyl-, Benzthiazolyl-, Chinolyl-, 1,1-Dioxo-tetrahydrothien-3-yl-, Piperidin-4-yl- oder Piperazin-1-yl-ethyl-Reste oder

$V^3$ und $V^4$ zusammen mit dem Stickstoff ggf. durch $C_1$-$C_4$-Alkyl, Chlor, $C_1$-$C_4$-Alkoxy oder Phenyl substituierte Pyrrolidin-, Piperidin-, Piperazin-, Morpholin-, Pyrazolin-, Pyrazol-, Imidazol-, Triazol- oder Tetrazol-Reste,

$X^1$ $C_1$-$C_{18}$-Alkyl, das durch Chlor, $C_1$-$C_4$-Alkoxy, Cyano oder $C_1$-$C_4$-Alkoxycarbonyl substituiert sein kann, Allyl, Cyclopentyl, Cyclohexyl, ggf. durch $C_1$-$C_4$-Alkyl, Chlor, Brom, $C_1$-$C_4$-Alkoxy, Cyano, Nitro oder $C_1$-$C_4$-Alkoxycarbonyl substituierte Benzyl-, Phenethyl-, Naphthylmethyl-, Picolyl-,

Chinolylmethyl-, Phenyl-, Naphthyl-, Pyridyl-, Pyrimidyl-, Pyrazinyl-, Imidazolyl-, Oxazolyl-, Thiazolyl-, Triazolyl, Benzimidazolyl-, Benzoxazolyl-, Benzthiazolyl- oder Chinolyl-Reste,

L Wasserstoff, $C_1$-$C_8$-Alkyl, das durch Chlor, $C_1$-$C_4$-Alkoxy, Cyano oder $C_1$-$C_4$-Alkoxycarbonyl substituiert sein kann, Allyl, Cyclopentyl, Cyclohexyl, Chlor, Cyano, $C_1$-$C_8$- Alkoxycarbonyl, ggf. durch $C_1$-$C_4$-Alkyl, Chlor, $C_1$-$C_4$-Alkoxy, Cyano, Nitro oder $C_1$-$C_4$-Alkoxycarbonyl substituierte Benzyl-, Phenethyl-, Picolyl-, Phenyl-, Naphthyl- oder Pyridyl-Reste,

$Y^3$ und $Y^4$ Cyano, Nitro oder gegebenenfalls durch $C_1$-$C_4$-Alkyl, Chlor, Brom, $C_1$-$C_4$-Alkoxy, Cyano, Nitro, $C_1$-$C_4$-Alkylsulfonyl oder $C_1$-$C_4$-Alkoxycarbonyl substituierte Phenyl-, Naphthyl-, Pyridyl-, Pyrimidyl-, Pyrazinyl-, Imidazolyl-, Oxazolyl-, Thiazolyl-, Triazolyl-, Benzimidazolyl-, Benzoxazolyl-, Benzthiazolyl- oder ChinolylReste,

$Z^4$,$Z^5$,$Z^6$ unabhängig voneinander Wasserstoff, $C_1$-$C_{18}$-Alkyl, das durch Chlor, $C_1$-$C_4$-Alkoxy, Cyano oder $C_1$-$C_4$-Alkoxycarbonyl substituiert sein kann, Allyl, Cyclopentyl, Cyclohexyl, $C_1$-$C_{18}$-Alkoxy, $C_1$-$C_{18}$-Alkylthio, Cyclopentoxy, Cyclohexoxy, Amino, mono- oder bis-$C_1$-$C_{12}$-Alkylamino, ggf. durch $C_1$-$C_4$-Alkyl, Chlor, Brom, $C_1$-$C_4$-Alkoxy, Cyano, Nitro oder $C_1$- $C_4$-Alkoxycarbonyl substituierte Anilino-, N-$C_1$-$C_4$-Alkylanilino-, Diphenylamino-, Benzyl-, Benzyloxy-, Benzylamino-, N-$C_1$-$C_4$-Alkylbenzylamino-, Dibenzyl- amino-, Phenethyl-, Phenethoxy-, Phenethamino-, Pyridylet- hoxy-, Pyridylamino-, Picolyl-, Phenyl-, Naphthyl-, Pyridyl-, Pyrimidyl-, Pyrazinyl-, Imidazolyl-, Oxazolyl-, Thiazolyl-, Triazolyl-, Benzimidazolyl-, Benzoxazolyl-, Benzthiazolyl-, Chinolyl- oder Piperazin-1-yl-ethyl-Reste oder

$Z^4$ mit $Z^5$ oder $V^3$ oder $Y^3$ eine Brücke der Formeln $-CH_2CH_2-$, $-CH=CH-$, $-CH_2CH_2CH_2-$, $-CH_2CH_2CH_2CH_2-$,

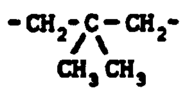 , 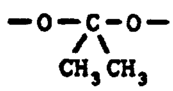 ,

$-CH=CH-CH_2-$, $-CH=CH-CH=CH-$,

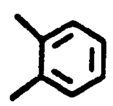 , 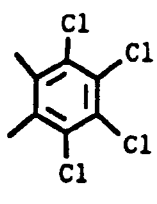 ,

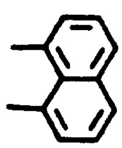 , 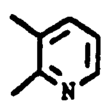 , 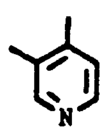 ,

$G^1$ und $G^2$ unabhängig voneinander Wasserstoff, $C_1$-$C_8$-Alkyl, das durch Chlor, $C_1$-$C_4$-Alkoxy, Cyano oder $C_1$-$C_4$-Alkoxycarbonyl substituiert sein kann, Allyl, Cyclopentyl, Cyclohexyl, Hydroxy, Chlor, $C_1$-$C_8$-Alkoxy, Cyano, $C_1$-$C_8$-Alkoxycarbonyl, Nitro, $C_1$-$C_8$-Alkylsulfonyl, ggf. durch $C_1$-$C_4$-Alkyl, Chlor, $C_1$-$C_4$-Alkoxy, Cyano, Nitro oder $C_1$-$C_4$-Alkoxycarbonyl substituierte Benzyl-, Phenethyl-, Picolyl-, Phenyl-, Naphthyl-, Pyridyl-, Imidazolyl-, Oxazolyl-, Thiazolyl-, Triazolyl-, Benzimidazolyl-, Benzthiazolyl- oder Benzoxazolyl-Reste,

$G^3$ Wasserstoff, $C_1$-$C_8$-Alkyl, das durch Chlor, $C_1$-$C_4$-Alkoxy, Cyano oder $C_1$-$C_4$-Alkoxycarbonyl substituiert sein kann, Allyl, Cyclopentyl, Cyclohexyl, ggf. durch $C_1$-$C_4$-Alkyl, Chlor, $C_1$-$C_4$-Alkoxy, Cyano, Nitro oder $C_1$-$C_4$-Alkoxy-

carbonyl substituierte Benzyl-, Phenethyl-, Picolyl-, Phenyl-, Naphthyl- oder Pyridyl-Reste,

$n^1, m^1, p^1$ u. $q^1$ unabhängig voneinander 1 oder 2 und

$(An^1)^-$ Chlorid, Bromid, $BF_4^-$, $ClO_4^-$, $SiF_6^{2-}$, $PF_6^-$, $B(C_6H_5)_4^-$, $H_2PO_4^-$ oder die Anionen von ggf. durch Halogen, $C_1$-$C_4$-Alkyl, $C_1$-$C_4$-Alkoxy, Hydroxy, Cyano, $C_1$-$C_4$-Alkoxycarbonyl, Nitro oder $C_1$-$C_4$-Alkylsulfonyl substituierten $C_1$- bis $C_{18}$-Carbonsäuren, $C_2$-$C_{18}$- Dicarbonsäuren, $C_1$-$C_{18}$-Alkansulfonsäuren, Benzol- oder Naphthalin-mono- oder -dicarbon- oder -sulfonsäuren bedeuten.

Besonders bevorzugt sind Pentamethinfarbstoffe und Derivate von Pentamethinfarbstoffen der Formeln V bis VIII, worin

$R^5$ $C_1$-$C_4$-Alkoxy, das durch Chlor oder Methoxy substituiert sein kann, Cyclohexoxy-, Benzyloxy- oder Phenoxy-Reste, die durch Methyl, Methoxy und/oder Chlor substituiert sein können, oder $NP^3P^4$,

$R^6$ Wasserstoff, Chlor, $C_1$-$C_4$-Alkyl oder die Bedeutung von $R^5$ hat,

$R^7$ und $R^8$ unabhängig voneinander Wasserstoff, Chlor, Methyl, Methoxy oder Phenyl,

$P^3$ und $P^4$ unabhängig voneinander Wasserstoff, $C_1$-$C_4$-Alkyl, das durch Chlor, Hydroxy, Methoxy, Ethoxy, Cyano, Methoxycarbonyl und/oder Acetoxy substituiert sein kann, Cyclohexyl, Allyl, Benzyl-, Phenethyl- oder Phenyl-Reste, die durch Chlor, Methyl, Methoxy, Ethoxy, Nitro, Cyano und/oder Methoxycarbonyl substituiert sein können, oder

$NP^3P^4$ Pyrrolidino, Piperidino, Piperazino, N-Methyl- oder -Ethylpiperazino, Morpholino, Pyrazolino, 3,5,5-Trimethylpyrazolino, 5-Methyl-3,5-diphenylpyrazolino oder

$P^3$-$R^7$, $P^4$-$R^7$, $P^3$-$R^8$ oder $P^4$-$R^8$ eine Atomgruppe der Formeln $-CH_2-CH_2-$, $-CH_2-CH_2-CH_2-$,

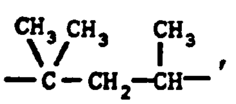

$-CH_2-CH_2-O-$,

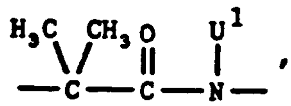

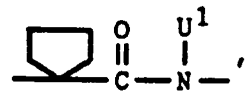

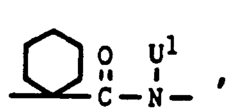

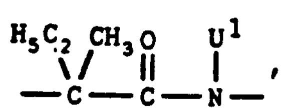

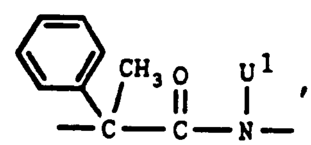

$U^1$ Wasserstoff oder Methyl,

$Q^1$ Hydroxy, $C_1$-$C_8$-Alkoxy, das durch Chlor, Methoxy, Ethoxy oder Cyano substituiert sein kann, Allyloxy, Cyclopentoxy, Cyclohexoxy, ggf. durch Methyl, Chlor oder Methoxy substituierte Benzyloxy-, 2-Phenylethoxy- oder Picolyloxy-Reste, $C_1$-$C_8$-Mono- oder Dialkylamino, ggf. durch Methyl, Chlor oder Methoxy substituierte Pyrrolidino-, Piperidino-, Morpholino-, Piperazino-, Hydroxyethylpiperazino-, Pyrazolo-, Imidazolo-, Triazolo-, Tetrazolo-Reste, ggf. durch Methyl, Ethyl, Chlor, Cyano oder Nitro substituierte Anilino-, N-$C_1$-$C_4$-Alkylanilino-, Diphenylamino-, Benzylamino-, N-$C_1$-$C_4$-Alkyl-N-benzylamino-, Pyridylamino-, Benzoyl- amino-, N-$C_1$-$C_4$-Alkylbenzoylamino-, N-Phenylbenzoylamino-, Benzol- sulfonylamino-, N-$C_1$-$C_4$-Alkylbenzolsulfonylamino-, Phthalimido-, Naphthalimido-, Homophthalimido-, Benzoesäure-2-sulfonsäureimido-, Succinimido-,

Maleinimidoreste, Aminocarbonylamino, $C_1$-$C_8$-Alkoxycarbonylamino, $C_1$-$C_8$-Alkylthio, ggf. durch Methyl, Chlor oder Methoxy substituiertes Phenylthio,

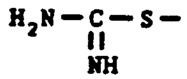,

$C_1$-$C_8$-Alkylsulfonyl, ggf. durch Methyl, Ethyl, Chlor, Brom, Cyano oder Methoxycarbonyl substituierte Phenylsulfonyl-, Benzylsulfonyl-, Naphthylsulfonyl-Reste, α-Stellung durch Cyano, $C_1$-$C_4$- Alkoxycarbonyl, $C_1$-$C_4$-Alkylsulfonyl, $C_1$-$C_4$- Alkanoyl oder Benzoyl substituierte, ggf. weiterhin durch Methyl, Ethyl, Chlor, Brom, Cyano, Nitro oder Methoxycarbonyl substituierte Benzyl-, Naphthylmethyl-, Picolyl-, Chinolylmethyl-, Imidazolylmethyl-, Benzimidazolylmethyl-, Oxazolylmethyl-, Benzoxazolylmethyl-, Thiazolylmethyl-, Benzthiazolylmethyl-, Triazolylmethyl-, Tetrazolylmethylreste, Dicyanomethyl, Cyano-$C_1$-$C_4$-alkoxycarbonylmethyl, Bis-$C_1$-$C_4$-alkoxycarbonylmethyl, Cyano-$C_1$-$C_4$-alkanoylmethyl, Bis-$C_1$-$C_4$-alkanoylmethyl, ggf. durch Methyl, Ethyl, Chlor, Cyano, Nitro oder Methoxycarbonyl substituierte Cyano-benzoylmethyl-, $C_1$-$C_4$-Alkanoyl-benzoylmethyl-, $C_1$-$C_4$-Alkoxycarbonylbenzoylmethyl-, Dibenzoylmethyl-, Cyanophenylsulfonylmethyl-, $C_1$-$C_4$-Alkanoyl-phenylsulfonylmethyl-, $C_1$-$C_4$-Alkoxycarbonyl-phenylsulfonylmethyl-, BisphenylsulfonylmethylReste, die Reste von ggf. durch Methyl, Ethyl, Chlor, Methoxy, Ethoxy, Phenyl, Cyano, Methoxy- oder Ethoxycarbonyl substituiertem 1,3-Cyclopentandion, 1,3-Cyclohexandion, 1,3-Indandion, Meldrumsäure, Pyrazolon, 2-Hydroxy-6-pyridon oder Barbitursäure,

$S^7$ und $S^8$ unabhängig voneinander Wasserstoff, $C_1$-$C_8$-Alkyl, das durch Chlor, Methoxy, Ethoxy, Cyano oder Methoxycarbonyl substituiert sein kann, Allyl, Cyclopentyl, Cyclohexyl, ggf. durch Methyl, Chlor oder Methoxy substituierte Benzyl-, Phenethyl- oder Picolyl-Reste,

$S^9$ u. $S^{10}$ unabhängig voneinander Wasserstoff, $C_1$-$C_8$-Alkyl, das durch Chlor, Methoxy, Ethoxy, Cyano oder Methoxycarbonyl substituiert sein kann, Allyl, Cyclopentyl, Cyclohexyl, ggf. durch Methyl, Chlor, Methoxy, Cyano, Nitro und/oder Methoxycarbonyl substituierte Benzyl-, Phenethyl-, Picolyl-, Phenyl-, Naphthyl-, Pyridyl-, Pyrimidyl-, Benzimidazolyl-, Benzoxazolyl-, Benzthiazolyl- oder Chinolyl-Reste,

$T^4$ u. $T^6$ Wasserstoff, $C_1$-$C_8$-Alkyl, das durch Chlor, Methoxy, Cyano oder Methoxycarbonyl substituiert sein kann, Vinyl, Allyl, Cyclopentyl, Cyclohexyl, Chlor, $C_1$-$C_8$-Alkoxy, Cyano, Methoxycarbonyl, Nitro, Benzyl, ggf. durch Methyl, Chlor, Cyano oder Methoxy substituierte Phenyl- oder Pyridyl-Reste,

$T^5$ Wasserstoff oder Methyl,

$S^{11}$u. $S^{12}$ unabhängig voneinander Wasserstoff, $C_1$-$C_4$-Alkyl, Cyclohexyl, Benzyl, $C_1$-$C_4$-Alkoxy, Chlor, $C_1$-$C_4$-Dialkylamino, Nitro, Cyano, Methoxy- oder Ethoxycarbonyl oder Methylsulfonyl, wobei $S^{11}$ oder $S^{12}$ in 5-, 6- und/oder 7-Position am Indolylrest stehen kann, oder ein in 7-Position stehender Rest $S^{11}$ oder $S^{12}$ zusammen mit $S^7$ bzw. $S^8$ eine Brücke der Formel $-CH_2CH_2-$,

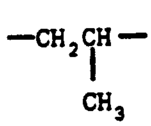, 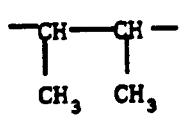, 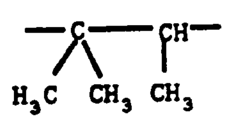,

$-CH_2CH_2CH_2-$,

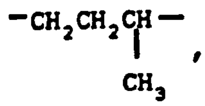

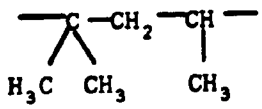

bilden kann, und

$n^1$, $m^1$, $p^1$, $q^1$ unabhängig voneinander 1 oder 2 und

$(An^1)^-$ Chlorid, Bromid, $BF_4^-$, $ClO_4^-$, $SiF_6^{2-}$ oder die Anionen von durch Fluor, Chlor, Methyl, Methoxy, Hydroxy, Cyano oder Methoxycarbonyl substituierten $C_1$-$C_8$-Carbonsäuren, $C_2$-$C_8$-Dicarbonsäuren, $C_1$-$C_8$-Alkansulfonsäuren, Benzoesäure, Benzolsulfonsäure oder Phthalsäure bedeuten.

Ganz besonders bevorzugt sind Pentamethinfarbstoffe der Formel

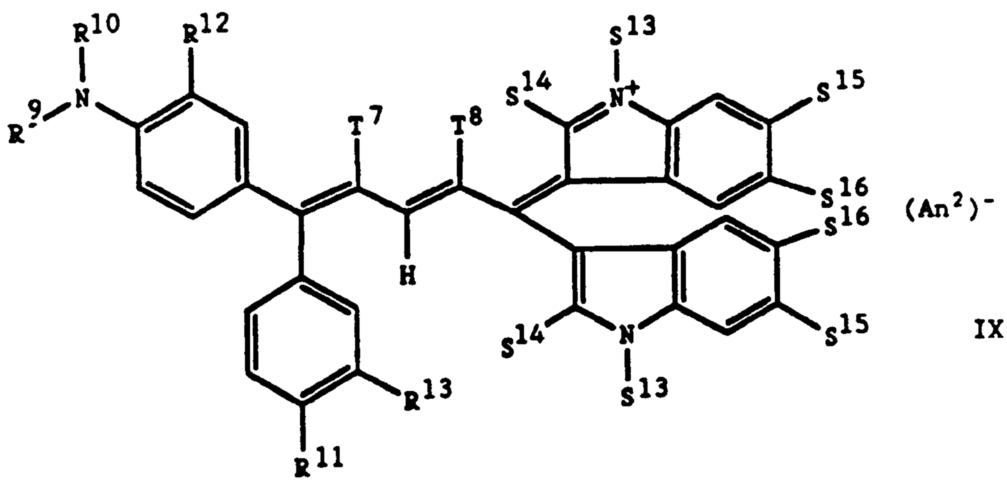

IX

sowie Derivate von Pentamethinfarbstoffen der Formel

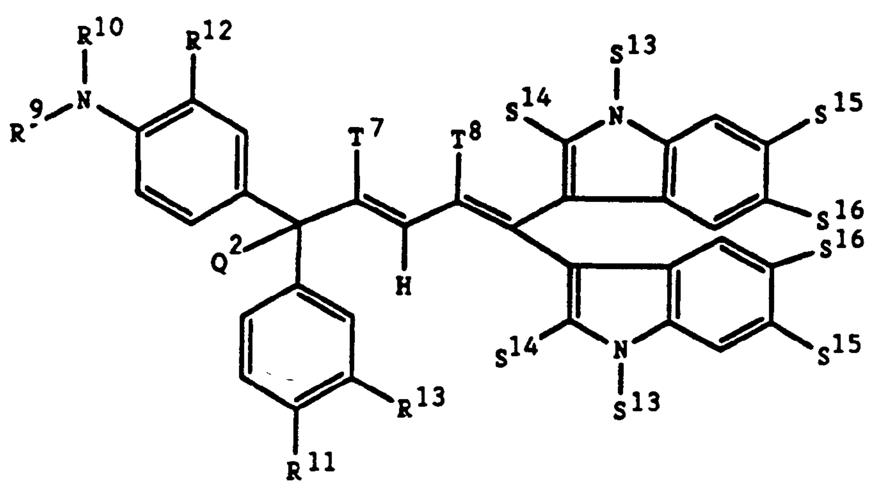

X

und ihre bezüglich der Stellung der $Q^2$-Gruppe isomeren Formen, wie sie in den Formeln III, IV bzw. VII, VIII wiedergegeben sind, worin

$R^9$ u. $R^{10}$ unabhängig voneinander Wasserstoff, Methyl, Ethyl, 1- oder 2-Propyl, 1- oder 2-Butyl, 2-Methyl-1-propyl, Cyclohexyl, Allyl, Benzyl, 4-Tolyl, 4-Anisyl, 4-Ethoxyphenyl, 4-Cyanophenyl oder

$NR^9R^{10}$ Pyrrolidino, Piperidino, Morpholino, 3,5,5-Trimethylpyrazolino,

$R^{11}$ Wasserstoff, Chlor, Methyl, Ethyl, Methoxy, Ethoxy, Phenoxy oder $NR^9R^{10}$,

$R^{12}$u. $R^{13}$ unabhängig voneinander Wasserstoff, Methyl, Chlor, Methoxy oder zusammen mit $R^9$ eine Gruppe der Formeln $-CH_2-CH_2-$, $-CH_2-CH_2-CH_2-$,

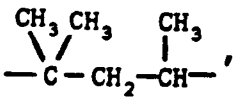 , 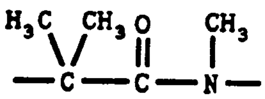 , 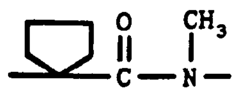 ,

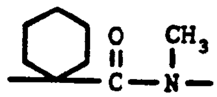 ,

$Q^2$ Hydroxy, Methoxy, Ethoxy, 1- oder 2-Propoxy, 1- oder 2-Butoxy, 2- Methyl-1-propoxy, 1,1-Dimethylethoxy, Dimethylamino-, Diethylamino, Dipropylamino, Dibutylamino, Propylamino, Butylamino, Pyrrolidino, Piperidino, Morpholino, Piperazino, Pyrazolo, Imidazolo, Triazolo, Anilino, 4-Methylanilino, 4-Chloranilino, 4-Methoxyanilino, 4-Nitroanilino, N-Methylanilino, Benzylamino, N-Methylbenzylamino, N-Ethylbenzylamino, Benzoylamino, Benzolsulfonylamino, Phthalimido, Naphthalimido, Succinimido, Maleinimido, Methylthio, Ethylthio, Phenylthio, Methylsulfonyl, Ethylsulfonyl, Propylsulfonyl, Butylsulfonyl, Hexylsulfonyl, Octylsulfonyl, Benzolsulfonyl, 4-Methylbenzolsulfonyl, 4-Chlorbenzolsulfonyl, α-Cyanobenzyl, α-Cyano-4-methylbenzyl, α-Cyano-4-chlorbenzyl, α-Cyano-4-nitrobenzyl, α-Cyano-α-picolyl, α-Cyano-γ-picolyl, Dicyanomethyl, Cyanomethoxycarbonylmethyl, Cyano-ethoxycarbonylmethyl, Bis-methoxycarbonylmethyl, Bis-ethoxycarbonylmethyl, 1-Cyanoaceton-1-yl, 1-Cyanobutanon-1-yl, 1-Methoxycarbonylaceton-1-yl, 1-Ethoxycarbonylaceton-1-yl, 1,3-Pentandion-3-yl, 1-Benzoylaceton-1-yl, 2-Cyano-1-phenylethanon-2-yl, 2-Methoxycarbonyl-1-phenylethanon-2-yl, Dibenzoylmethyl, Cyano-phenylsulfonylmethyl, Bisphenylsulfonylmethyl, 1,3-Cyclopentandion-2-yl, 1,3-Cyclohexandi-on-2-yl, 5,5-Dimethyl-1,3-cyclohexandion-2-yl, 1,3-Indandion-2-yl, 2,2-Dimethylperhydro-1,3-dioxin-4,6-dion-5-yl, 3-Methyl-1-phenyl-2-pyrazolin-5-on-4-yl, 1-(2-Chlorphenyl)-3-methyl-2-pyrazolin-5-on-4-yl, 3-Methyl-1-(4-methylphenyl)-2-pyrazolin-5-on-4-yl, 3-Methyl-1-(4-nitrophenyl)-2-pyrazolin-5-on-4-yl, 3-Methyl-1-phenyl-5-imino-2-pyrazolin-4-yl, 3-Methyl-1-(3-sulfolanyl)-2-pyrazolin-5-on-4-yl, 3-Ethoxycarbonyl-1-phenyl-2-pyrazolin-5-on-4-yl, 3-Aminocarbonyl-1-phenyl-2-pyrazolin-5-on-4-yl, 4-Hydroxy-1-methyl-2(1H)-chinolinon-3-yl, 3-Cyano-4-methyl-6-hydroxy-2(1H)-pyridon-5-yl, 3-Cyano-1,4-dimethyl-6-hydroxy-2 (1H)-pyridon-5-yl, 2,4,6-(1H,3H,5H)-Pyrimidintrion-5-yl,

$S^{13}$ Methyl, Ethyl, Propyl, Butyl, Hexyl, Octyl, 2-Cyanoethyl, 2-Methoxyethyl, 2-Methoxycarbonylethyl, 2-Chlorethyl, 2-Acetoxyethyl, Cyclohexyl, Allyl oder Benzyl,

$S^{14}$ Methyl, Ethyl, Propyl, Butyl, Hexyl, Octyl, Cyclohexyl, Benzyl, Phenyl, 2-, 3- oder 4-Chlorphenyl, 2-, 3- oder 4-Methoxyphenyl, 4-Nitrophenyl, 2,4-Dichlorphenyl, 2-, 3- oder 4-Tolyl oder 2-, 3- oder 4-Pyridyl,

$T^7$ und $T^8$ unabhängig voneinander Wasserstoff oder Methyl,

$S^{15}$u. $S^{16}$ Wasserstoff, Methyl, Methoxy, Chlor, Cyano, Methoxycarbonyl oder Nitro und

$(An^2)^-$ Chlorid, Bromid, Formiat, Acetat, Propionat, Butyrat, Hydroxyacetat, Chloracetat, Oxalat, Lactat, Benzoat, Silicylat, Methansulfonat, Ethansulfonat, Trifluormethansulfonat, Monofluorbutansulfonat, Benzolsulfonat, Toluolsulfonat, Chlorbenzolsulfonat, Dodecylbenzolsulfonat, $ClO_4^-$, $BF_4^-$ bedeuten.

Ebenfalls Gegenstand der Erfindung ist ein Verfahren zur Herstellung von Pentamethinfarbstoffen und Derivaten von Pentamethinfarbstoffen der Formeln I bis IV.

Die Herstellung erfolgt durch Kondensation eines Aldehyds oder Ketons der Formel

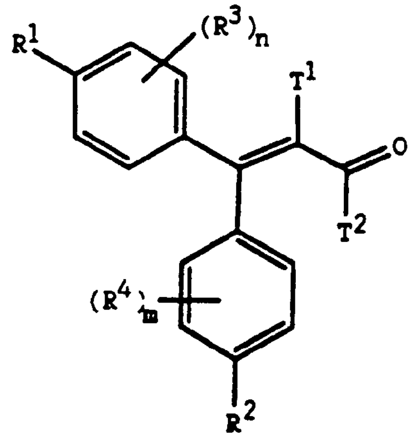

XI

mit einem Ethen der Formel

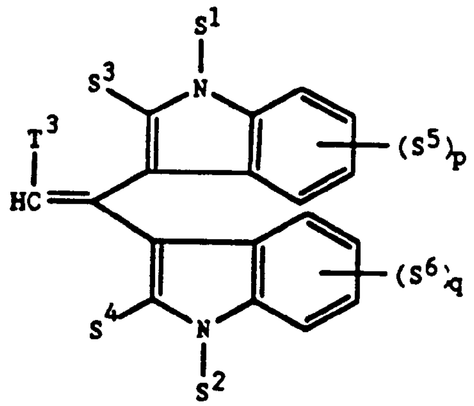

XII

oder ein Ethen der Formel

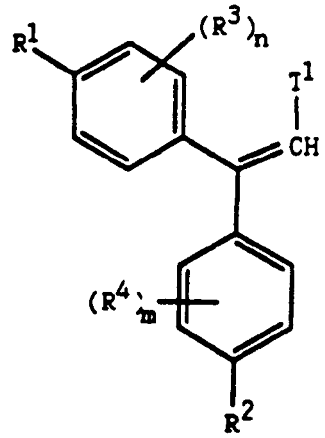

XIII

mit einem Aldehyd oder Keton der Formel

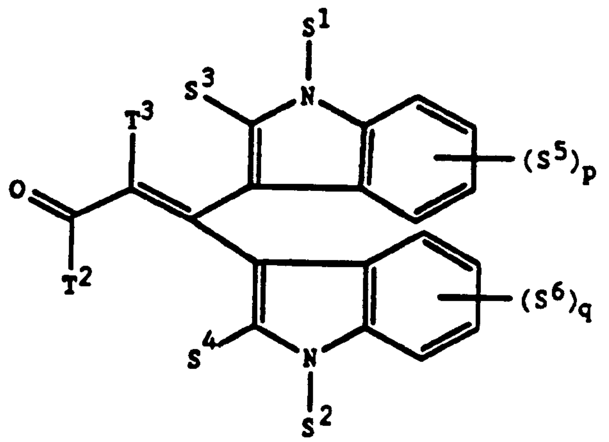

XIV

und - im Falle der Derivate - anschließende Umsetzung mit einer Verbindung der Formel

HQ XV,

worin

$R^1$-$R^4$, $T^1$-$T^3$, $S^1$-$S^6$, Q, n, m, p, q und $An^-$ die bei den Formeln I bis IV angegebene Bedeutung besitzen.

Die Kondensation erfolgt üblicherweise im Lösungsmittel unter sauren und/oder basischen Bedingungen, wobei ein wasser- oder alkoholentziehendes Mittel zugesetzt sein kann, bei Temperaturen zwischen Raumtemperatur und dem Siedepunkt des Mediums, vorzugsweise bei 40-140°C.

Geeignete Lösungsmittel sind Alkohole, wie Methanol, Ethanol, 1-Propanol, 2-Propanol, 1-Butanol, 1-Octanol, Cyclohexanol, Benzalkohol.

Andere geeignete Lösungsmittel sind Ester, wie Essigsäuremethyl, -ethyl- oder -butylester; chlorierte Kohlenwasserstoffe, wie Methylenchlorid, Ethylenchlorid, Chloroform; Ketone, wie Aceton, 2-Butanon; Aromaten, wie Benzol, Toluol, Xylol; chlorierte Aromaten, wie Chlorbenzol, Dichlorbenzol; Carbonsäuren, wie Ameisensäure, Essigsäure, Propionsäure; und Anhydride, wie Acetanhydrid.

Geeignete Säuren sind anorganische Säuren, wie Salzsäure, Schwefelsäure, Tetrafluorborsäure, Perchlorsäure, Phosphorsäure; Carbonsäuren, wie Ameisensäure, Essigsäure, Trifluoressigsäure; Sulfonsäuren, wie Methansulfonsäure, Ethansulfonsäure, Trifluormethansulfonsäure, Nonafluorbutansulfonsäure, Benzolsulfonsäure, Toluolsulfonsäure; Phosphonsäuren, wie Methanphosphonsäure; oder Ionenaustauscher, wie solche auf Basis sulfonierter Styrol-/Divinylbenzol-Polymerisate.

Geeignete Basen sind Amine, wie Triethylamin, Triethanolamin, Piperidin, Pyrrolidin oder Pyridin.

Geeignete wasser- oder alkoholentziehende Mittel sind Anhydride, wie Acetanhydrid, Trifluoressigsäureanhydrid, Benzoesäureanhydrid; Säurechloride, wie Acetylchlorid, Phosphoroxychlorid, Thionylchlorid, Oxalylchlorid, Phosgen; oder anorganische Oxide, wie Phosphorpentoxid.

Die bei dieser Kondensation erhaltenen Farbstoffe der Formel I können isoliert werden.

Zur Herstellung der Derivate der Formeln II bis IV wird jedoch vorteilhaft ohne Isolierung weiter mit den Verbindungen HQ der Formel XV umgesetzt. Dies geschieht in der Regel in dem Kondensationsmedium, wobei eines der oben beschriebenen Lösungsmittel zugesetzt werden kann. Die Temperaturen liegen zwischen Raumtemperatur und dem Siedepunkt des Mediums, vorzugsweise zwischen 20 und 140°C.

Hierzu wird in der Regel eine Base zugesetzt.

Für die Umsetzung mit XV geeignete Basen sind Amine, wie Triethylamin, Triethanolamin, Piperidin, Pyrrolidin oder Pyridin; Hydroxide, wie Lithiumhydroxid, Natriumhydroxid, Kaliumhydroxid, Calciumhydroxid, Tetrabutylammoniumhydroxid; Carbonate, wie Lithiumcarbonat, Natriumcarbonat, Kaliumcarbonat, Calciumcarbonat; oder Alkoholate, wie Lithiummethylat, Natriummethylat, Natriumethylat, Natriumpropylat, Kaliummethylat, Kaliumethylat, Kalium-tert.-butylat; oder Ionenaustauscher, wie solche auf Basis aminomethylierter Styroldivinylbenzol-Polymerisate.

Ebenfalls geeignete Basen sind die der Formel

MQ XVI,

wobei

M für Lithium, Natrium, Kalium, 1/2 Magnesium, 1/2 Calcium, 1/2 Barium, $N(C_2H_5)_4$,

steht und

Q die bei den Verbindungen der Formeln II bis IV angegebenen Bedeutung besitzt.

Gegenstand der Erfindung sind außerdem Mischungen der Verbindungen II bis IV. Die Substituenten $R^1$ bis $R^4$, $S^1$ bis $S^6$ und $T^1$ bis $T^3$ können untereinander gleich oder verschieden sein. Die Mischungen können durch Mischen der Komponenten erhalten werden. Bevorzugt sind Mischungen, die direkt bei dem Syntheseverfahren erhalten werden. Sie können in Abhängigkeit von den Substituenten der Ausgangskomponenten und deren Gemischen mehrere Isomere enthalten.

Solche Mischungen zeichnen sich in der Regel durch besonders gute Löslichkeit in den bei der Anwendung gebräuchlichen Lösungsmitteln aus.

Die Derivate der Pentamethinfarbstoffe der Formeln II bis IV und ihre Mischungen sind farblose bis bräunlich gefärbte Feststoffe.

Lösungen in Essigsäure zeigen eine starke Absorption mit einem Maximum im Bereich von 600-850 nm.

Wird eine toluolische Lösung, die farblos bis beigefarben ist, mit saurem Ton oder Kieselgel in Kontakt gebracht, so entwickelt sich spontan eine blaue bis grünliche graue Färbung. Zusätzlich kann im Bereich von 600 bis 850 nm eine sehr starke Absorption gemessen werden, z.B. mit Dr. Lange Farbmeßsystem Xenocolor LS 100.

Wird eine Probe eines Derivates der Formeln II bis IV mit 2,2-Bis-(4-hydroxy-phenyl)-propan vermahlen, so erhält man ein farbloses bis beigefarbenes Pulver. Erhitzt man dieses Pulver z.B. in einem Schmelzpunktröhrchen, so wird ab ca. 100°C eine kräftige schwarzblaue Farbe entwickelt.

Die Derivate der Formeln II bis IV eignen sich demnach erfindungsgemäß in hervorragender Weise für druck- oder thermoempfindliche Aufzeichnungsmaterialien, die im Bereich von 600-800 nm lesbar sind.

Aufzeichnungsmaterialien, die im nahen Infrarot absorbieren, werden benötigt, um die aufgezeichnete Information mit geeigneten Geräten lesen zu können. Die Verbreitung von Computern und die automatische Datenverarbeitung erfordern Geräte, die Informationen aus Dokumenten lesen können. Es wurden deshalb Einrichtungen zur optischen Buchstabenerkennung (OCR) entwickelt, die Textseiten lesen können, die in dem jeweiligen einprogrammierten Schrifttyp geschrieben sind. Üblicherweise arbeiten solche Einrichtungen im nahen Infrarot und deshalb muß natürlich die zu lesende Schrift Absorptionen im nahen Infrarot besitzen. Übliche druck- und thermoempfindliche Aufzeichnungsmaterialien weisen jedoch eine solche Absorption im nahen Infrarot nicht auf.

Aufzeichnungsmaterialien, die eine solche Absorption im nahen Infrarot besitzen sind z.B. in den US-Patentschriften 4 020 056, 4 022 771, 4 026 883, 4 107 428 und 4 119 776 und in der europäischen Anmeldung 0 124 377 beschrieben.

Die erfindungsgemäßen Derivate von Pentamethinfarbstoffen der Formeln II bis IV und ihre Mischungen eignen sich nun in hervorragender Weise für solche OCR-lesbare Aufzeichnungsmaterialien. Sie können in einfacher Weise bestehenden Farbbildnermischungen zugesetzt werden, die in bekannter Weise z.B. blaue oder schwarze Farbtöne entwickeln.

Geeignete Farbbildner, mit denen die erfindungsgemäßen Derivate der Formel II bis IV gemischt werden können, entstammen beispielsweise den Substanzklassen der Phthalide, Fluorane, Spirodipyrane, Chromenoindole, Phenoxazine, Phenothiazine, Carbazolylmethane, Dihydrochinazolone, Dihydro-3,1-benzoxazin-2-one, 3,1-Benzoxazine oder anderen Triarylmethanleukofarbstoffen.

Die Herstellung solcher druck- oder thermoempfindlicher Aufzeichnungsmaterialien geschieht in bekannter Weise.

Ein druckempfindliches Material besteht beispielsweise aus mindestens einem Paar von Blättern, die mindestens einen Farbbildner der Formeln II bis IV gelöst oder dispergiert in einem nichtflüchtigen organischen Lösungsmittel und einen sauren Entwickler enthalten.

Solche Verfahren und Zubereitungen sind beispielsweise aus den US-Patentschriften 2 800 457, 2 800 458, 2 948 753, 3 096 189 und 3 193 404 und aus den deutschen Offenlegungsschriften 2 555 080 und 2 700 937 bekannt.

Um eine frühzeitige Aktivierung der in dem druckempfindlichen Aufzeichnungsmaterial vorhandenen Farbbildner zu verhindern, werden diese vorzugsweise in Mikrokapseln eingeschlossen, die sich in der Regel durch Druck zerbrechen lassen.

Als Kapselwandmaterialien eignen sich z.B. Gelatine/Gummi arabicum, Polyamide, Polyurethane, Polyharnstoffe, Polysulfonamide, Polyester, Polycarbonate, Polysulfonate, Polyacrylate und Phenol-, Melamin- oder Harnstoff-Formaldehyd-Kondensate, wie sie beispielsweise in M. Gutcho, Capsule Technology and Microencapsulation, Noyes Data Corporation 1972, G. Baster, Microencapsulation, Processses and Applications, Herausgeber J.E. Vandegaar und den deutschen Offenlegungsschriften 2 237 545 und 2 119 933 beschrieben sind.

Bevorzugt werden Mikrokapseln verwendet, deren Hüllen aus Polyadditionsprodukten aus Polyisocyanaten und Polyaminen bestehen.

Isocyanate, Amine, Lösungsmittel und ein geeignetes Herstellungsverfahren für solche Mikrokapseln sind beispielsweise in DE-OS 3 203 059 beschrieben.

Ebenfalls bevorzugt werden Mikrokapseln verwendet, deren Hüllen aus Polyamiden oder Melamin-Formaldehyd-Kondensaten oder Gelatine/Gummi arabicum bestehen.

Als Entwickler sind Tone, sauer modifizierte Tone, Oxide oder saure Salze sowie monomere oder polymere Phenole oder Carbonsäuren zu nennen.

Besonders bevorzugte Farbentwickler sind Salze einer aromatischen Carbonsäure mit mindestens 10 Kohlenstoffatomen der Formel

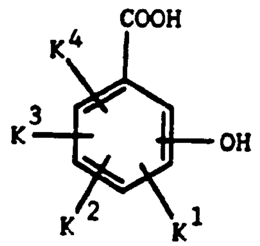 XVII,

worin $K^1$, $K^2$, $K^3$ und $K^4$ Wasserstoff, Halogen, Hydroxyl, Alkyl, Cycloalkyl, Aryl, Aralkyl, Alkoxy oder Aryloxy bedeuten oder zwei benachbarte Reste $K^1$, $K^2$, $K^3$ und $K^4$ gemeinsam einen Ring bilden können, und wobei diese Reste die oben genannten, in der Farbstoffchemie üblichen nichtionischen Substituenten tragen können. Derartige Verbindungen sind z.B. in DE-OS 3 635 311 und 3 635 742 beschrieben.

Die Derivate von Pentamethinfarbstoffen der Formel II bis IV sind in den zur Mikroverkapselung üblichen nichtflüchtigen organischen Lösungsmitteln in der Regel ausreichend bis sehr gut löslich.

Thermoreaktive Aufzeichnungssysteme umfassen z.B. wärmeempfindliche Aufzeichnungs- und Kopiermaterialien und -papiere.

Ein solches Material ist beispielsweise in der DE-OS 2 555 080 beschrieben.

Als Entwickler eignen sich die gleichen Elektronenakzeptoren, wie sie in druckempfindlichen Papieren verwendet werden, vorzugsweise phenolische Verbindungen, die beispielsweise in der DE-PS 1 251 348 beschrieben sind, sowie Borsäure und organische, vorzugsweise aliphatische Dicarbonsäuren.

Ein weiteres geeignetes thermoreaktives Entwicklungssystem ist in DE-OS 3 337 296 beschrieben, bei dem sauer modifizierte Polymerisate, vorzugsweise des Acrylnitrils, als Entwickler wirken.

Die Pentamethinfarbstoffe der Formel I sind geeignet für optische Aufzeichnungsmaterialien.

Solche optischen Aufzeichnungsmaterialien tragen auf einem Substrat, vorwiegend einer Kunststoffplatte, eine lichtabsorbierende Beschichtung. Diese Beschichtung enthält neben dem Farbstoff häufig auch ein Bindemittel. Vorteilhaft wird sie als Lösung, z.B. durch spin coating, aufgebracht. Diese Beschichtung muß sehr dünn, sehr gleichmäßig und von hoher optischer Qualität sein. Zusätzlich muß sie im Bereich der Lichtquelle stark absorbieren. Als Lichtquelle werden Laser verwendet, vorzugsweise Laserdioden, die im Wellenlängenbereich 700 bis 1.400 nm arbeiten.

Die Herstellung von solchen Beschichtungen und die Verwendung zur optischen Aufzeichnung ist beispielsweise in WO 84/02795 und EP 0 023 736 beschrieben.

Wegen ihrer ausgeprägten Absorption im Bereich 600 bis 850 nm sind die Pentamethinfarbstoffe der Formel I für die Verwendung in optischen Aufzeichnungsmaterialien besonders gut geeignet. Ebenfalls geeignet sind Mischungen. Sie sind in den zur Beschichtung gebräuchlichen Lösungsmitteln gut löslich. Solche Lösungsmittel sind beispielsweise chlorierte Kohlenwasserstoffe, z.B. Methylenchlorid, 1,2-Dichlorethan; Ketone, z.B. 2-Butanon, Cyclohexanon; Aromaten, z.B. Xylol; Ester, z.B. Essigsäureethyl- oder -butylester; Alkohole, z.B. Methanol, Ethanol oder Butanol oder Mischungen hiervon. Bevorzugt sind die Alkohole, da sie die Kunststoffplatte nicht angreifen.

Geeignete Bindemittel sind alle filmbildenden Materialien, vorzugsweise Polymeren, z.B. Polystyrol, Poly-α-methylstyrol, Polymethylmethacrylat, Polyvinylchlorid, Polyvinylacetat, Polyvinyl/-vinylpyrrolidon, Polycarbonat, Cellulosenitrat, Celluloseacetatbutyrat oder Mischungen oder Copolymere hiervon.

Die Pentamethinfarbstoffe der Formel I sind ebenfalls für das Lasertransferprinting-Verfahren, wie es in Siemens Forsch.- und Entwickl.-Bericht Bd. 17 (1988) Nr. 6, S. 291 beschrieben ist, geeignet.

Beispiel 1

8,82 g des Aldehyds der Formel

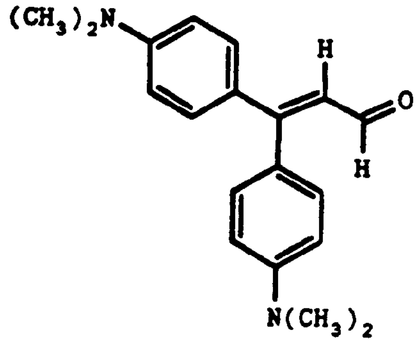

und 13,1 g des Ethens der Formel

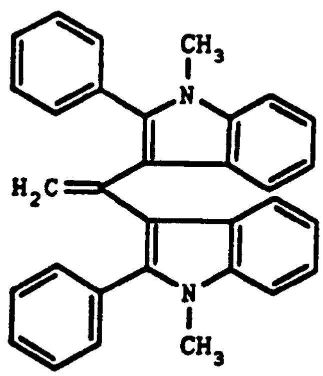

werden in 50 ml Acetanhydrid unter Zusatz von 3,0 g Methansulfonsäure 1 h bei 80°C gerührt. Nach Abkühlen wird die blaue Lösung, die den Farbstoffe der Formel

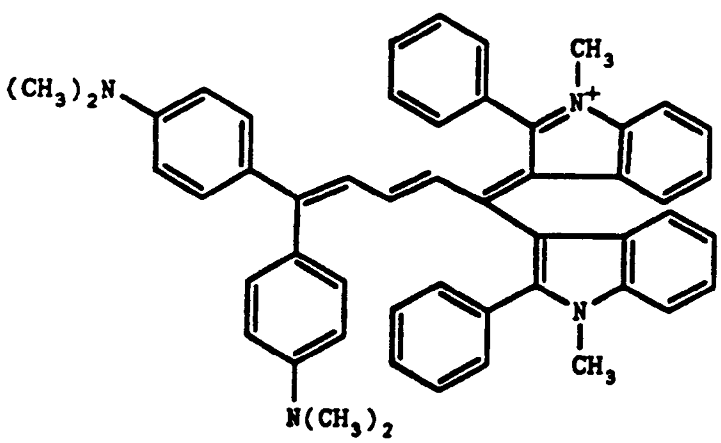

$CH_3SO_3^-$

enthält, in 300 ml Methanol gegossen. Durch Zutropfen von 115 ml 30%iger methanolischer Natriummethylatlösung und Erwärmen auf 40°C erhält man eine Suspension, die abgesaugt und mit Methanol und Wasser gewaschen und getrocknet wird:
16,0 g (71 % d. Th.) beiges Kristallpulver vom Schmelzpunkt 165-170°C, das in einer isomeren Form der Formel

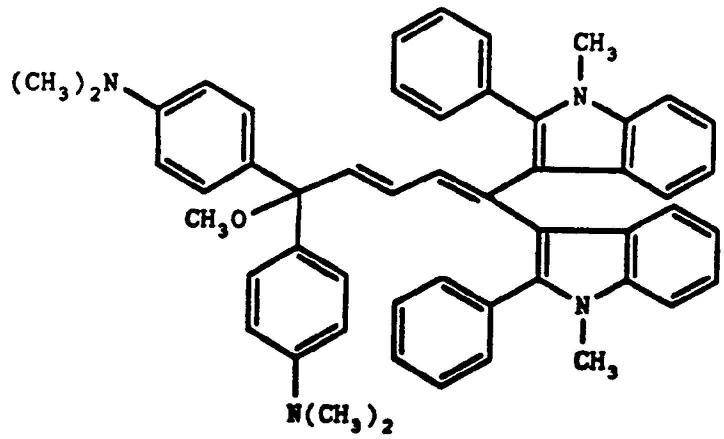

entspricht.
$\lambda_{max}$ in Eisessig: 633 und 787 nm.
Auf Säureton wird ein dunkelblauer Farbton entwickelt.

Beispiel 2

4,66 g des Aldehyds der Formel

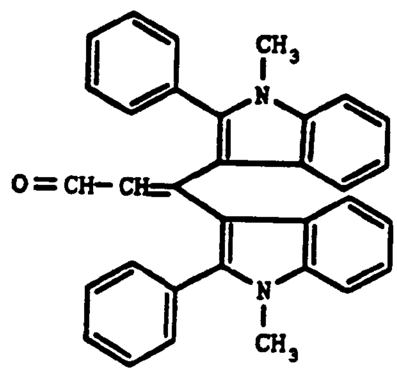

und 2,96 g des Ethens der Formel

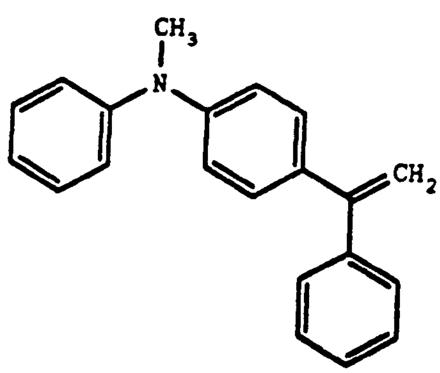

werden in 20 ml Acetanhydrid mit 1,5 g Trifluormethansulfonsäure 45 min bei 80-90°C gerührt. Nach dem Abkühlen wird die blaue Lösung, die den Farbstoff der Formel

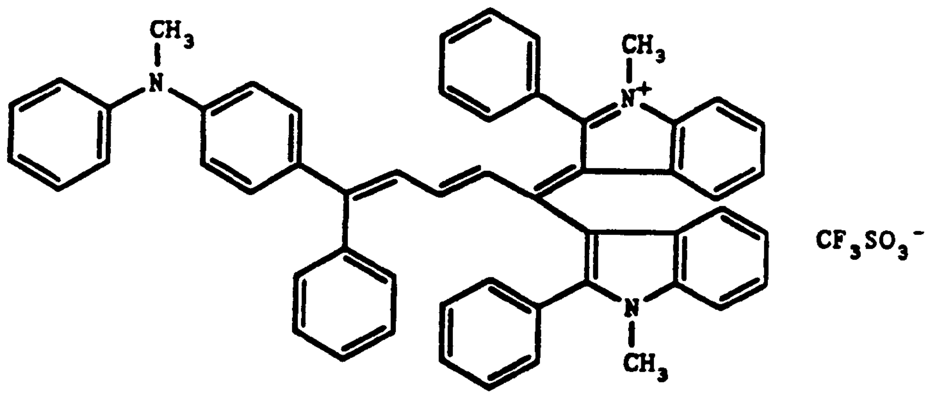

enthält, auf 100 ml Methanol ausgetragen. Durch Zutropfen von 45 ml 30%iger methanolischer Natriummethylatlösung entsteht eine beige Suspension, die abgesaugt, mit Methanol und Wasser gewaschen und getrocknet wird:

5,8 g (74 % der Theorie) beiges Pulver vom Schmelzpunkt 122°C, das in einer isomeren Form der Formel

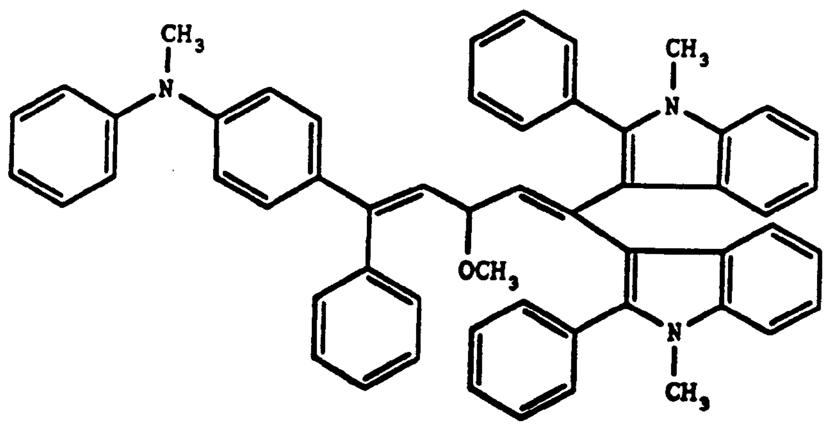

entspricht.

$\lambda_{max}$ in Eisessig: 790 nm.

Auf Säureton: graublau.

Beispiel 3

Analog Beispiel 2 werden bei Verwendung von 2,51 g des Ethens der Formel

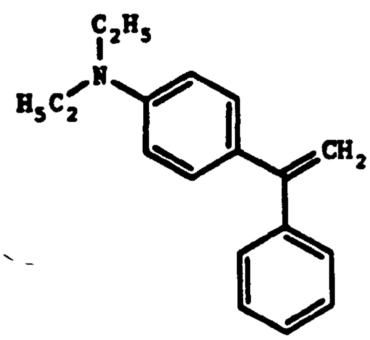

6,0 g (80 % d. Th.) beiges Pulver erhalten, das in einer isomeren Form der Formel

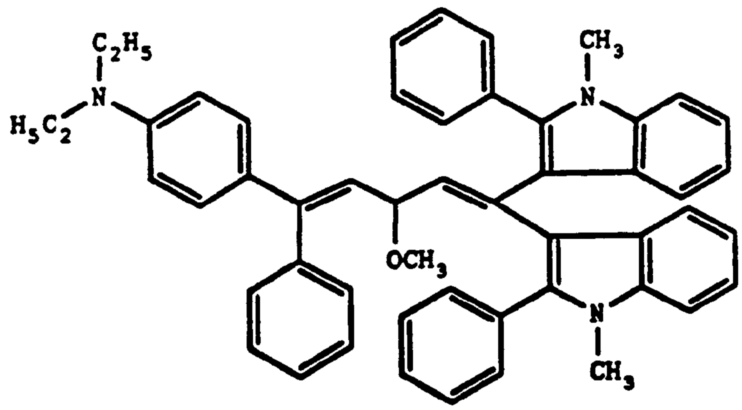

entspricht.
Schmelzpunkt: 125-126°C.
$\lambda_{max}$ in Eisessig: 805 nm.
Auf Säureton: graublau.

Beispiel 4

2,84 g des Aldehyds der Formel

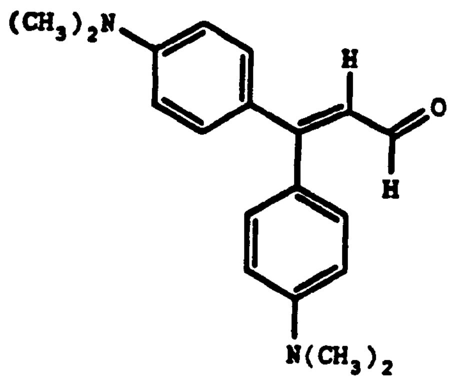

und 6,05 g des Propens der Formel

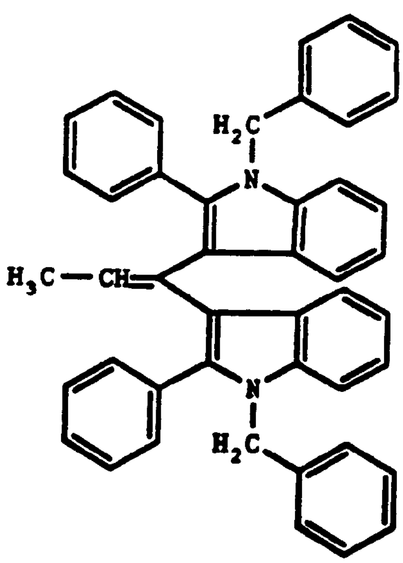

werden in 20 ml Acetanhydrid mit 1 g Methansulfonsäure 45 min bei 80-90°C gerührt. Nach dem Abkühlen wird die blaue Lösung, die den Farbstoff der Formel

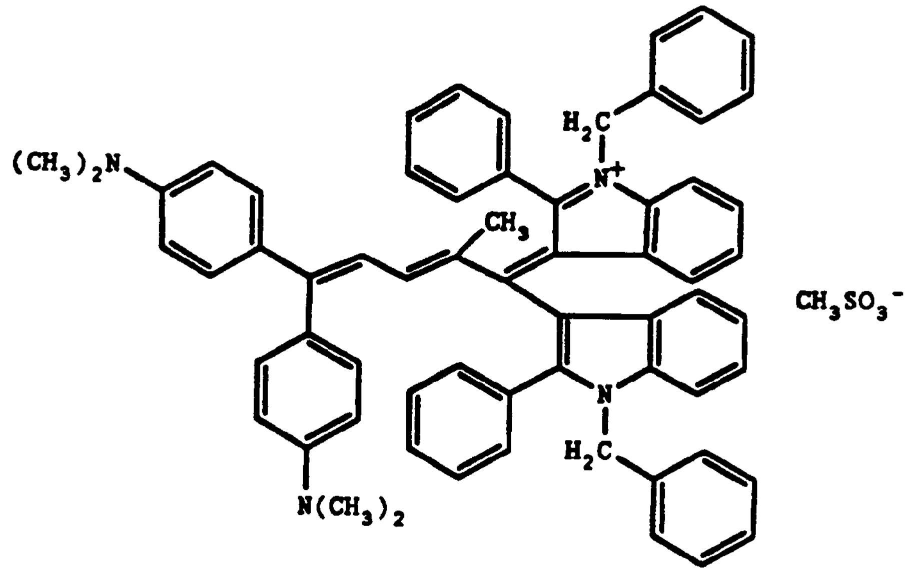

enthält, auf 100 ml Methanol ausgetragen und durch Zusatz von 45 ml methanolischer Natriummethylatlösung in eine grünlich beige Suspension überführt. Es wird abgesaugt, mit Methanol und Wasser gewaschen und getrocknet: 6,0 g (66 % d. Th.) beiges Pulver vom Schmelzpunkt 148°C, das in einer isomeren Form der Formel

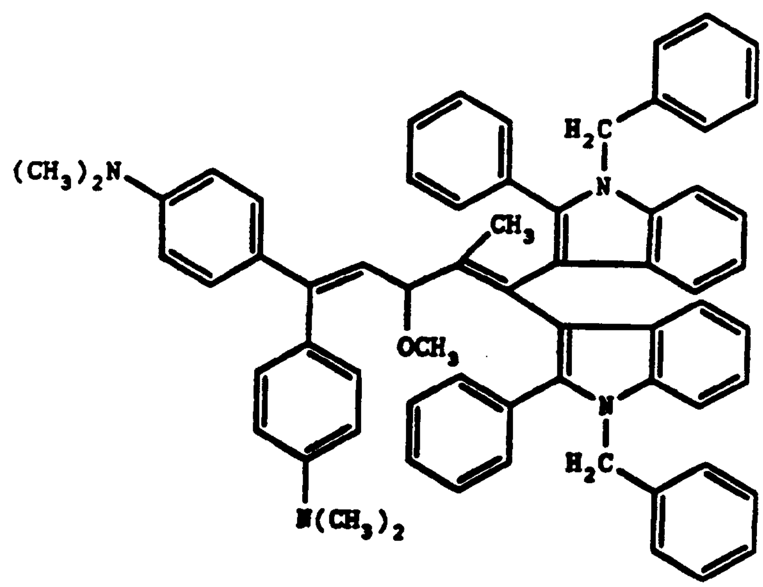

entspricht.
$\lambda_{max}$ in Eisessig: 640, 789 nm.
Auf Säureton: blau.

Beispiel 5

Analog Beispiel 4 erhält man bei Verwendung von 5,2 g des Ethens der Formel

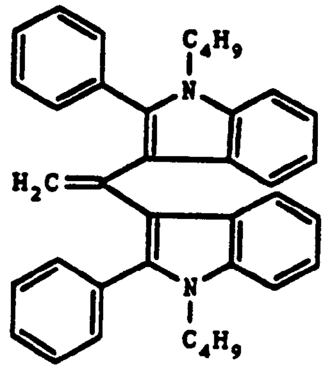

7,35 g (88 % d. Th.) beiges Pulver, das in einer isomeren Form der Formel

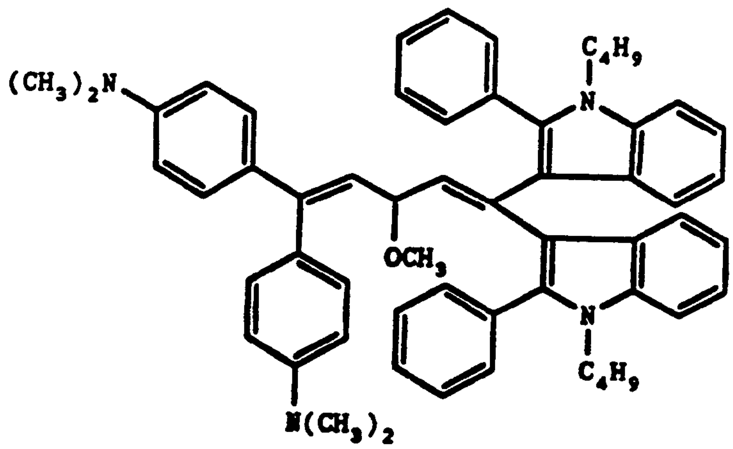

entspricht.
Schmelzpunkt: 158-160°C.
$\lambda_{max}$ in Eisessig: 638, 787 nm.
Auf Säureton: blau.

Beispiel 6

2,2 g des Ethens des Beispiels 3 werden in 20 ml Methanol unter Zusatz von 0,3 g Methansulfonsäure durch leichtes Erwärmen in Lösung gebracht. 1,8 g Natrium-p-toluolsulfonat werden zugesetzt. Nach 3 h Rühren wird abgesaugt, mit Methanol und Wasser gewaschen und getrocknet: 2,0 g (78 % d. Th.) graues Pulver vom Schmelzpunkt 203-205°C, das in einer isomeren Form der Formel

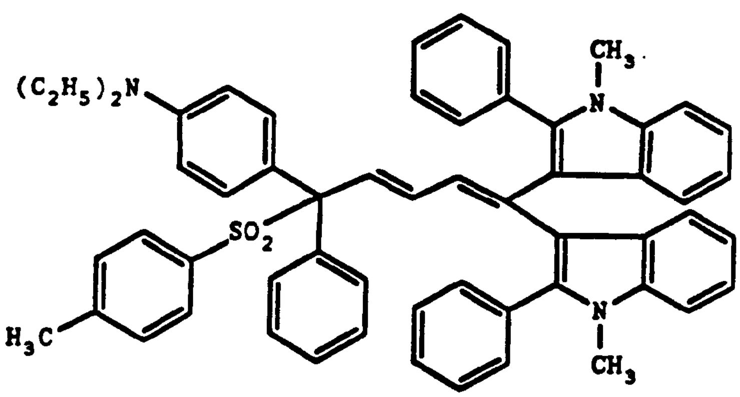

entspricht.
$\lambda_{max}$ in Eisessig: 805 nm.
Auf Säureton: graublau.

Beispiel 7

3,3 g des Ethens des Beispiels 5 werden in 20 ml Methanol mit 1 g Eisessig unter Erwärmen in Lösung gebracht. 3 g Acetylaceton und 8 g wasserfreies Natriumcarbonat werden zugesetzt. Nach Rühren über Nacht wird abgesaugt, mit Methanol und Wasser gewaschen und getrocknet:
3,3 g (92 % d. Th.) blaßgrünes Pulver vom Schmelzpunkt 115-116°C, das in einer isomeren Form der Formel

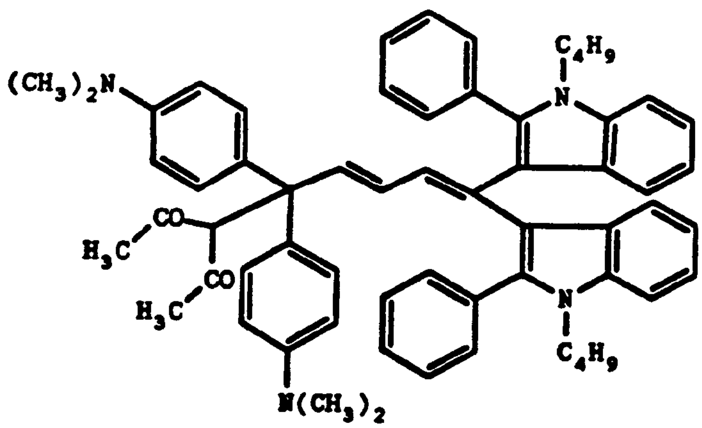

entspricht.
$\lambda_{max}$ in Eisessig: 638, 787 nm.
Auf Säureton: blau.

Analog lassen sich die folgenden Beispiele herstellen:

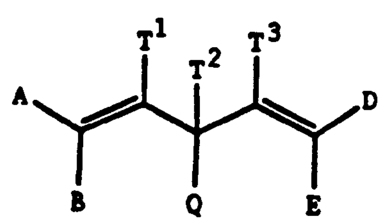

| Beisp. | A | B | D/E | $T^1$ | $T^2$ | $T^3$ | Q | $\lambda_{max}$ (nm) |
|---|---|---|---|---|---|---|---|---|
| 8 | 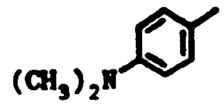 | 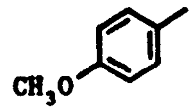 | 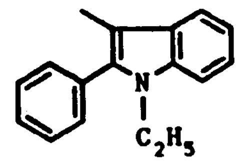 | H | H | H | $OCH_3$ | 530/800 |
| 9 | 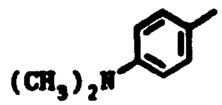 | 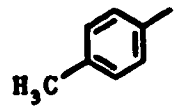 | 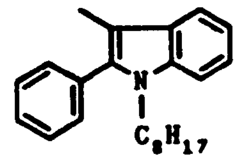 | H | H | H | $OCH_3$ | 804 |
| 10 | 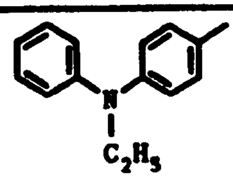 | 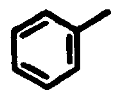 | 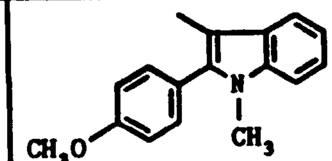 | H | H | H | $OC_2H_5$ | 791 |
| 11 | 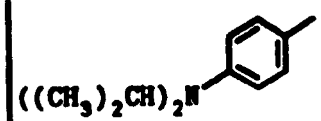 | 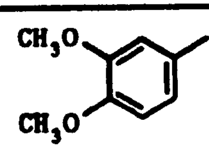 | 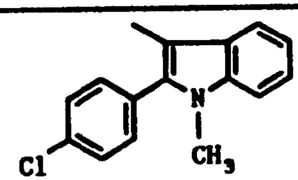 | H | H | H | OH | 550/806 |
| 12 | 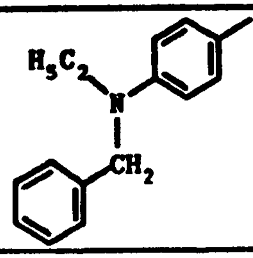 | 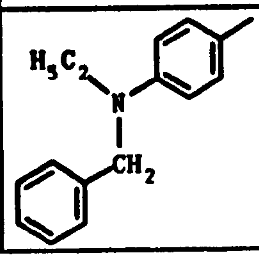 | 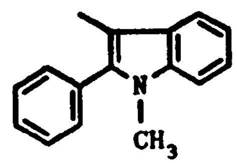 | H | H | H | $OCH(CH_3)_2$ | 638/790 |

| Beisp. | A | B | D/E | $T^1$ | $T^2$ | $T^3$ | Q | $\lambda_{max}$ (nm) |
|---|---|---|---|---|---|---|---|---|
| 13 | 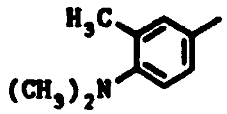 | 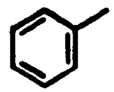 | 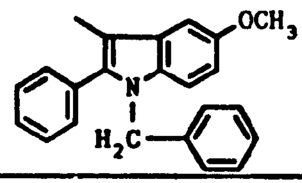 | H | H | H | 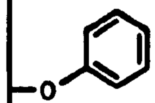 | 812 |
| 14 | 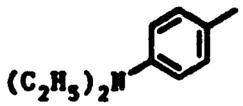 | 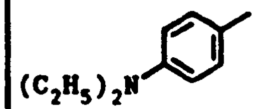 | 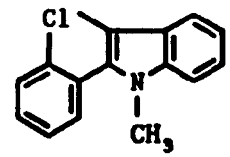 | $CH_3$ | H | H | $OCH_3$ | 633/783 |
| 15 | 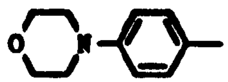 | 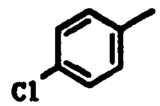 | 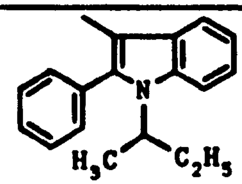 | H | H | $CH_3$ | $OC_8H_{17}$ | 803 |
| 16 | 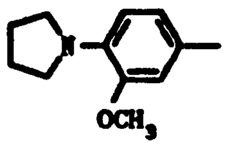 | 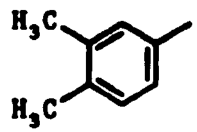 | 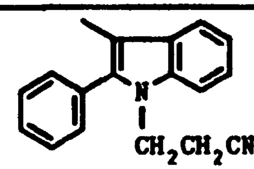 | H | H | H | $OC_4H_9$ | 802 |
| 17 | 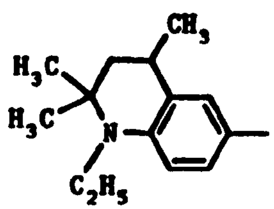 | 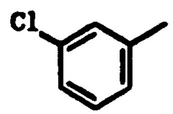 | 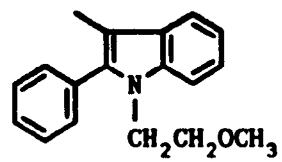 | H | H | H | 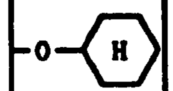 | 815 |

| Beisp. | A | B | D/E | $T^1$ | $T^2$ | $T^3$ | Q | $\lambda_{max}$ (nm) |
|---|---|---|---|---|---|---|---|---|
| 18 | 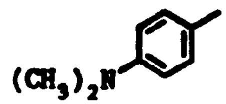 | 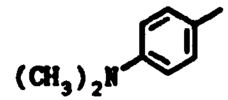 | 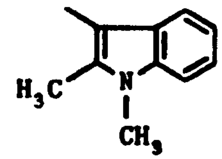 | H | H | Cl | $OC(CH_3)_3$ | 639/772 |
| 19 | 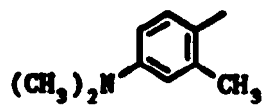 | 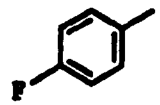 | 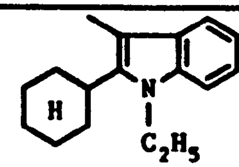 | H | H | $CH_3$ | OH | 770 |
| 20 | 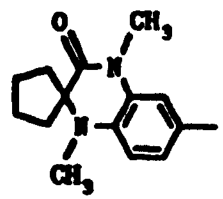 | 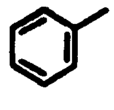 | 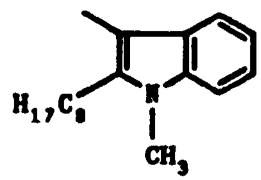 | H | $CH_3$ | H | $OCH_3$ | 770 |
| 21 | 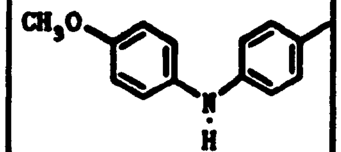 | 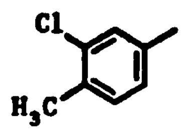 | 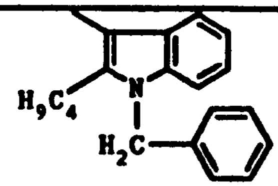 | H | H | H | 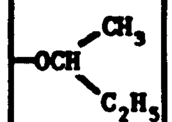 | 770 |
| 22 | 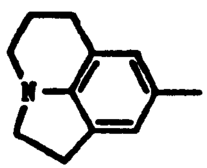 | 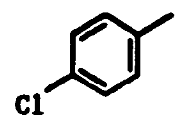 | 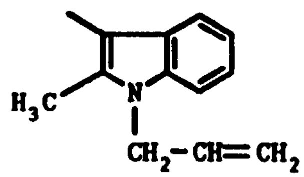 | H | H | H | $OCH_3$ | 768 |

| Beisp. | A | B | D/E | $T^1$ | $T^2$ | $T^3$ | Q | $\lambda_{max}$ (nm) |
|---|---|---|---|---|---|---|---|---|
| 23 | 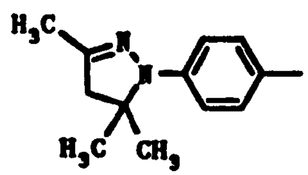 | 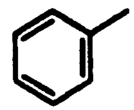 | 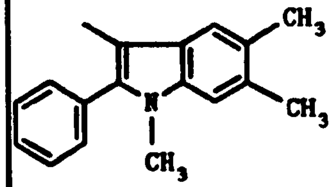 | H | H | H | $OCH_3$ | 810 |
| 24 | 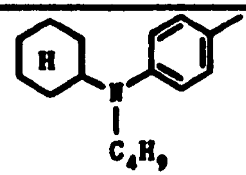 | 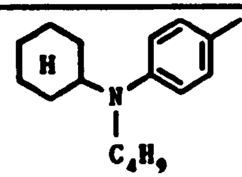 | 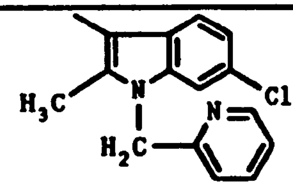 | H | H | H | $OCH_3$ | 645/771 |
| 25 | 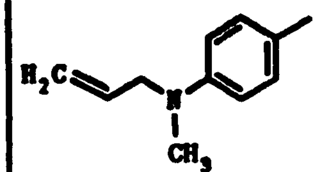 | 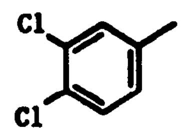 | 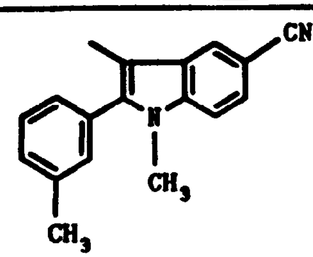 | H | H | H | $OCH_3$ | 795 |
| 26 | 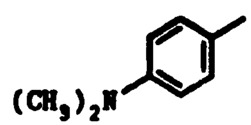 | 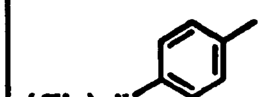 | 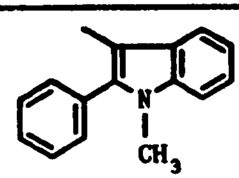 | H | H | H | $SCH_3$ | 635/788 |

| Beisp. | A | B | D/E | $T^1$ | $T^2$ | $T^3$ | Q | $\lambda_{max}$ (nm) |
|---|---|---|---|---|---|---|---|---|
| 27 | 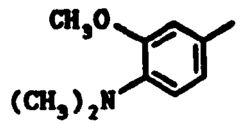 | 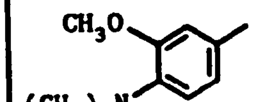 | 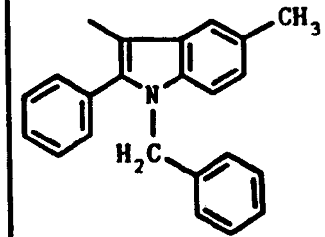 | H | H | H | 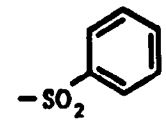 | 643/ 791 |
| 28 | 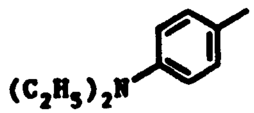 | 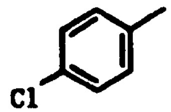 | 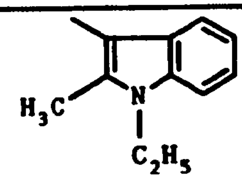 | $CH_3$ | H | H | 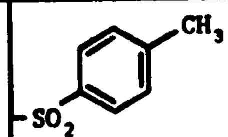 | 765 |
| 29 | 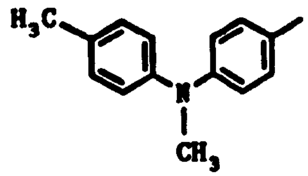 | 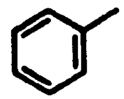 | 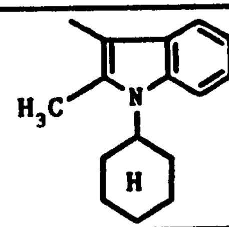 | H | H | H | 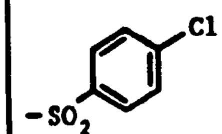 | 768 |
| 30 | 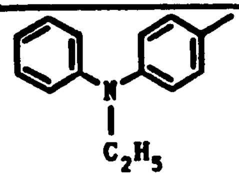 | 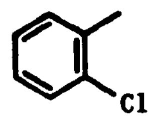 | 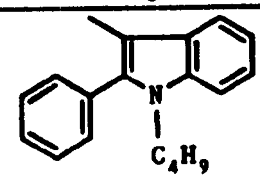 | H | H | H | 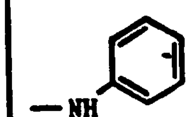 | 790 |

| Beisp. | A | B | D/E | $T^1$ | $T^2$ | $T^3$ | Q | $\lambda_{max}$ (nm) |
|---|---|---|---|---|---|---|---|---|
| 31 | 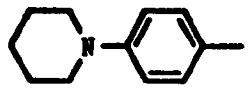 | 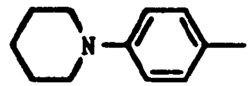 | 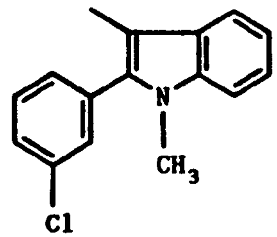 | H | H | H | 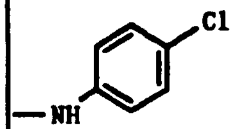 | 640/ 789 |
| 32 | 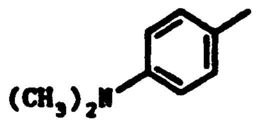 | 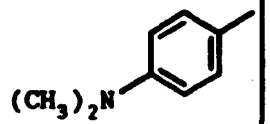 | 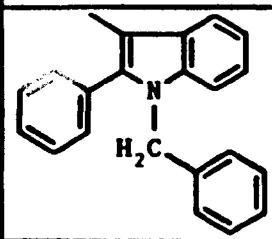 | H | H | H | 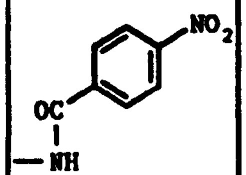 | 633/ 787 |
| 33 | 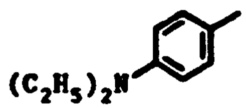 | 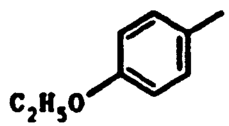 | 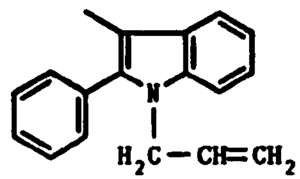 | H | H | Cl | 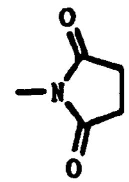 | 530/ 810 |
| 34 | 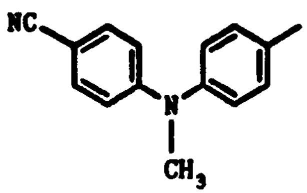 | 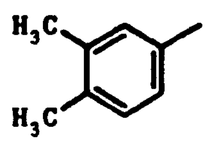 | 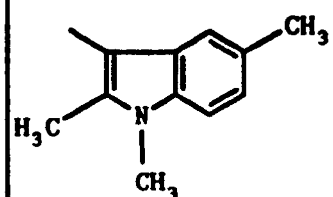 | H | H | H | 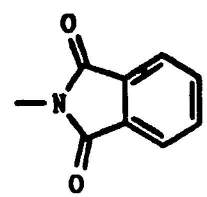 | 765 |

| Beisp. | A | B | D/E | $T^1$ | $T^2$ | $T^3$ | Q | $\lambda_{max}$ (nm) |
|---|---|---|---|---|---|---|---|---|
| 35 | 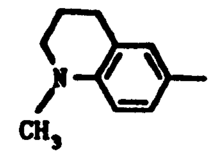 | 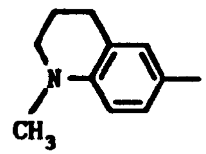 | 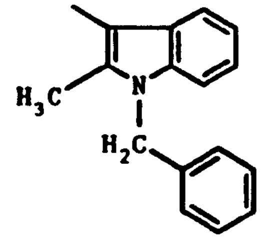 | H | H | H | 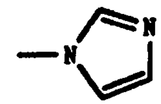 | 638/ 766 |
| 36 | 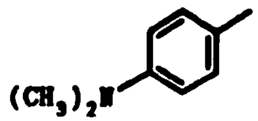 | 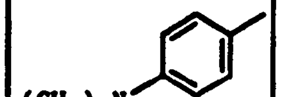 | 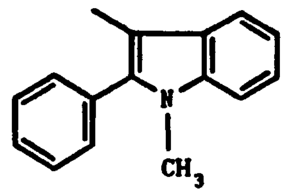 | $CH_3$ | H | $CH_3$ | 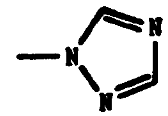 | 633/ 787 |
| 37 | 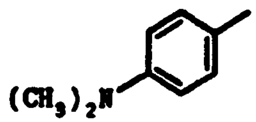 | 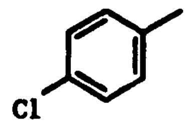 | 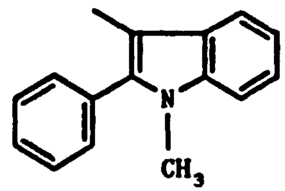 | H | $-(CH_2)_3-$ | | 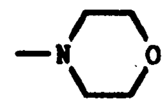 | 802 |
| 38 | 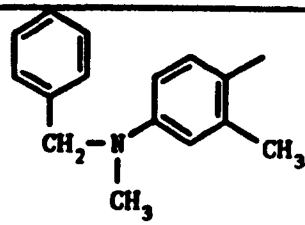 | 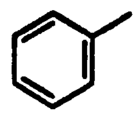 | 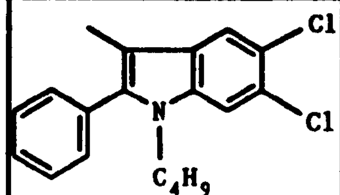 | H | H | H | $CH(C\bar{N})_2$ | 806 |

| Beisp. | A | B | D/E | $T^1$ | $T^2$ | $T^3$ | Q | $\lambda_{max}$ (nm) |
|---|---|---|---|---|---|---|---|---|
| 39 | 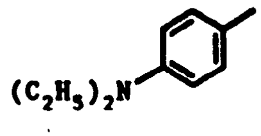 | 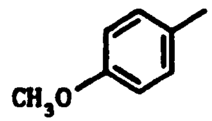 | 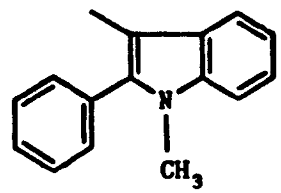 | H | H | H | $CH(COCH_3)_2$ | 530/ 799 |
| 40 | 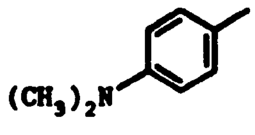 | 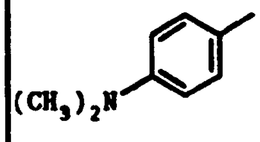 | 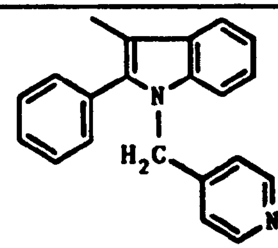 | H | H | H | 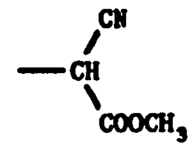 | 633/ 786 |
| 41 | 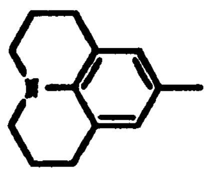 | 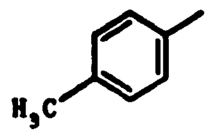 | 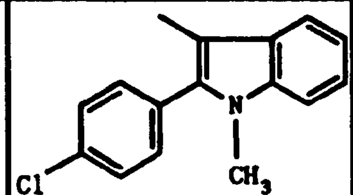 | H | H | H | 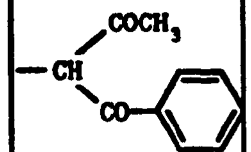 | 804 |
| 42 | 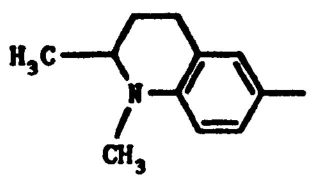 | 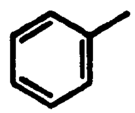 | 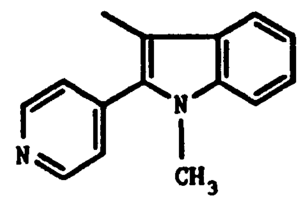 | H | H | H | 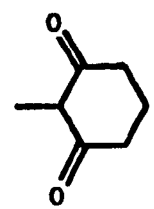 | 805 |

| Beisp. | A | B | D/E | $T^1$ | $T^2$ | $T^3$ | Q | $\lambda_{max}$ (nm) |
|---|---|---|---|---|---|---|---|---|
| 43 | 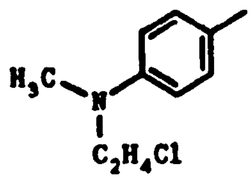 | 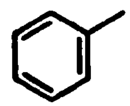 | 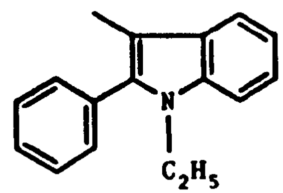 | H | H | H | 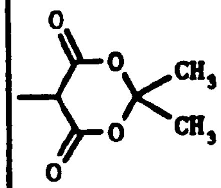 | 805 |
| 44 | 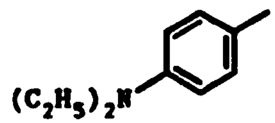 | 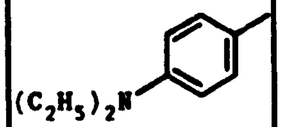 | 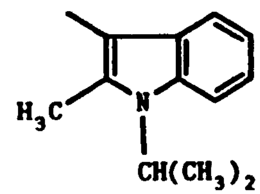 | H | H | H | 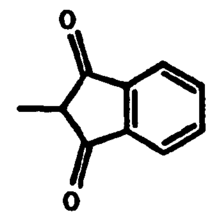 | 635/ 765 |
| 45 | 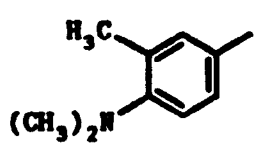 | 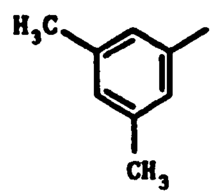 | 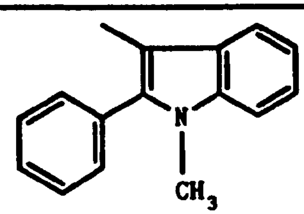 | H | H | H | 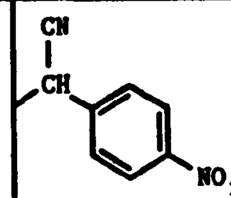 | 807 |
| 46 | 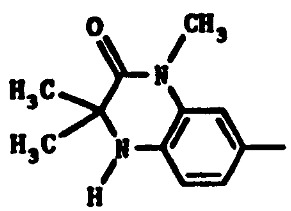 | 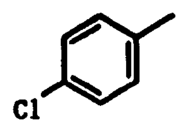 | 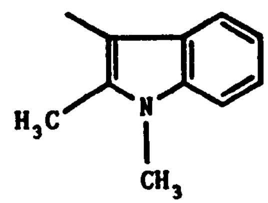 | H | H | $CH_3$ | 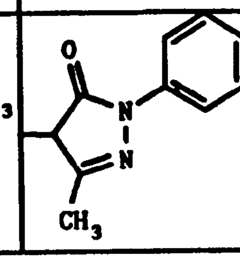 | 770 |

| Beisp. | A | B | D/E | $T^1$ | $T^2$ | $T^3$ | Q | $\lambda_{max}$ (nm) |
|---|---|---|---|---|---|---|---|---|
| 47 | 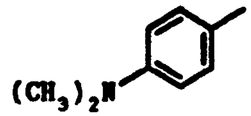 | 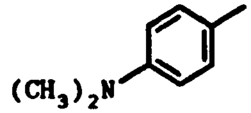 | 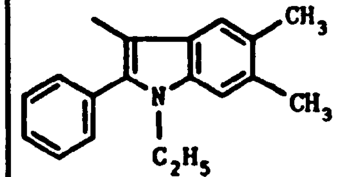 | H | H | H | 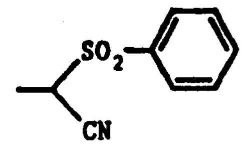 | 632/ 790 |
| 48 | 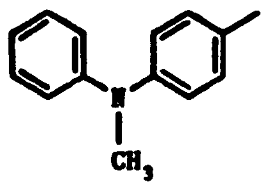 | 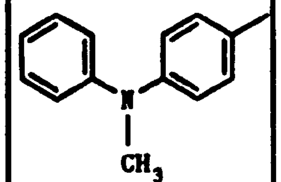 | 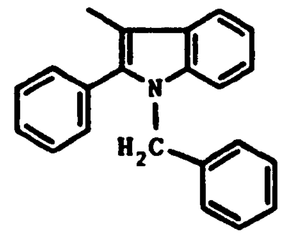 | H | H | H | 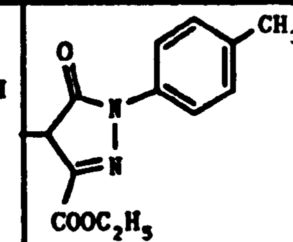 | 640/ 790 |
| 49 | 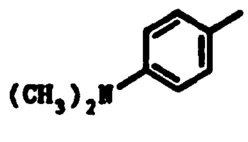 | 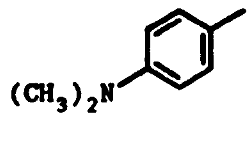 | 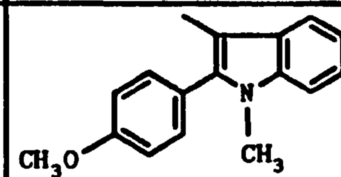 | H | H | H | 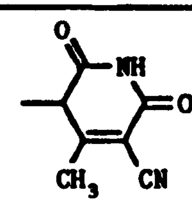 | 633/ 788 |
| 50 | 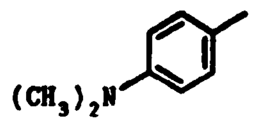 | 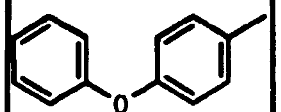 | 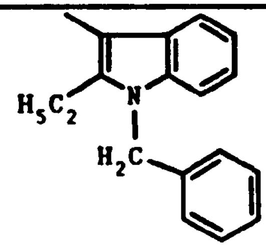 | H | H | H | 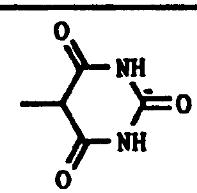 | 535/ 765 |

Beispiel 51:

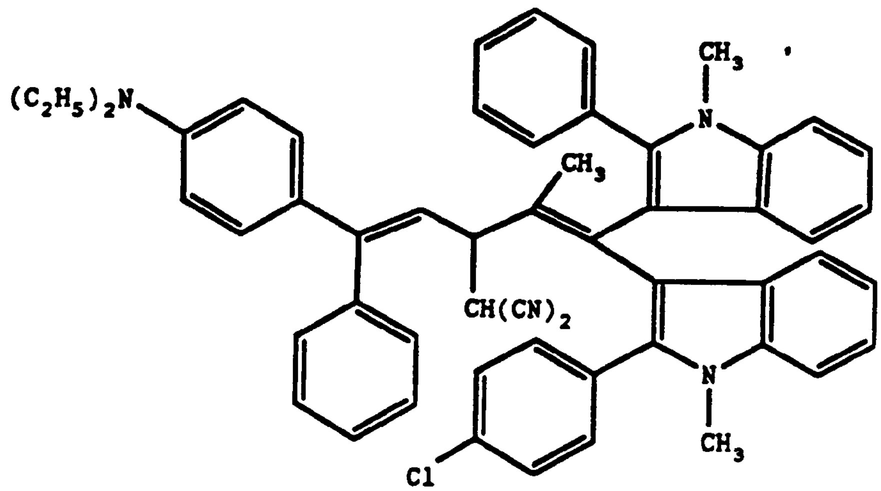

$\lambda_{max}$ = 805 nm

Beispiel 52

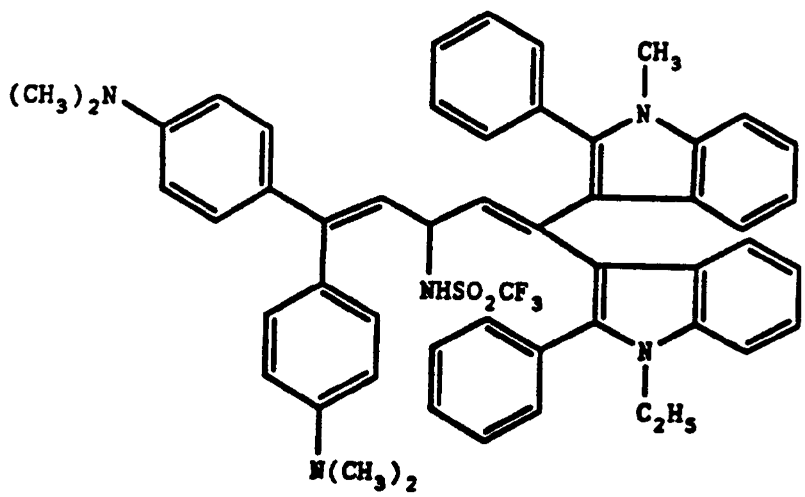

$\lambda_{max}$ = 633/789

Beispiel 53

2,3 g des Ethers des Beispiels 2 werden in 15 ml Methanol mit 0,6 g p-Toluolsulfonsäure in Lösung gebracht. Man erhält eine stabile blaue Lösung des Farbstoffes der Formel

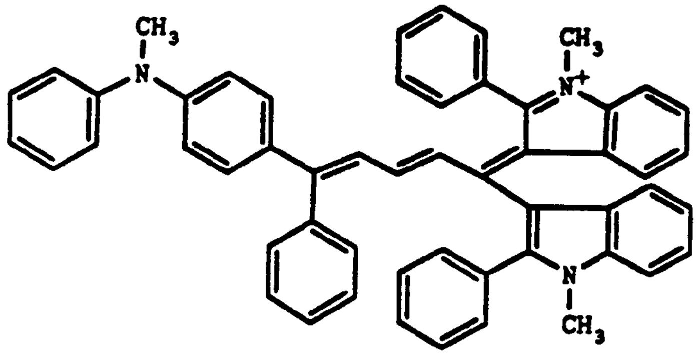

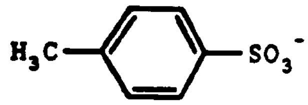

die zur Herstellung eines optischen Aufzeichnungsmediums verwendet werden kann.
Abziehen des Lösungsmittels ergibt 2,7 g des Farbstoffes der obigen Formel. Schmelzpunkt: 128-132°C.

Beispiel 54

3,3 g des Ethers des Beispiels 5 werden in 10 ml Butanol mit 0,4 g Methansulfonsäure in Lösung gebracht. Man erhält eine stabile blaue Lösung des Farbstoffes der Formel

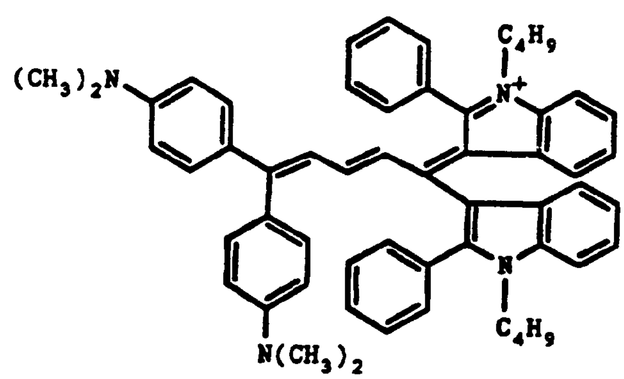

$CH_3SO_3^-$

die zur Herstellung eines optischen Aufzeichnungsmediums verwendet werden kann.

Ganz analog können die Derivate der Beispiele 1 - 52 in Farbstoffe durch Verwendung von beispielsweise Ameisensäure, Essigsäure, Propionsäure, Buttersäure, Hydroxyessigsäure, Chloressigsäure, Oxalsäure, Milchsäure, Citronensäure, Benzoesäure, Salicylsäure, Methansulfonsäure, Ethansulfonsäure, Trifluormethansulfonsäure, Nonafluorbutansulfonsäure, Benzolsulfonsäure, Toluolsulfonsäure, Chlorbenzolsulfonsäure, Dodecylbenzolsulfonsäure, Salzsäure, Bromwasserstoffsäure, Schwefelsäure, Perchlorsäure, Tetrafluorborsäure, Hexafluorkieselsäure, Hexafluorphosphorsäure überführt werden, die jedoch nicht in allen Fällen stabile alkoholische Lösungen liefern.

Beispiel 55

3 g des Pentamethinderivates des Beispiels 2 werden in einem Gemisch aus 40 g Dodecylbenzol und 60 g Chlorparaffin mit 45 % Cl-Gehalt (Marlican der Fa. Hüls) gelöst. 223 g einer solchen Lösung werden mit 39,5 g Oxadiazintrion von Desmodur H (NCO-Gehalt: 20,5 %) vermischt. Anschließend erfolgt die Vermischung mit 320 g 0,5%iger Polyvinylalkohollösung und die Emulgierung im Schergefälle eines Rotor/Stator-Emulgiergerätes. Die Vernetzung erfolgt mit 76 g 9,0%iger Diethylentriaminlösung. Die Nachbehandlung erfolgt durch Erwärmen der Dispersion auf 60°C und dreistündiges Rühren bei 60°C. Es wird dabei eine 40 % Kapseln enthaltende Dispersion der Kapselgröße 7,3 µm erhalten.

250 ml dieser Dispersion werden vorgelegt und unter intensivem Rühren 40 g Cellulosefeinschliff (Arbocell BE 600/30 der Fa. Rettenmeier & Söhne) langsam eingestreut. Nach mindestens 30-minütigem intensivem Rühren erfolgt die Zugabe von 40 ml 50%iger SBR-Latex (Baystal D 1600 der Fa. Bayer AG). Die resultierende 48,5%ige Streichfarbe wird mit Wasser auf 30 % Feststoffgehalt verdünnt und mit einer Luftbürste auf die Rückseite eines handelsüblichen Basis-Papiers gestrichen. Der Auftrag beträgt nach dem Trocknen 5 g/m².

Das so bestrichene Papier wird mit der beschichteten Seite auf die mit Entwicklersubstanz beschichtete Seite eines handelsüblichen kohlefreien Durchschreibepapiers gelegt. Bei Ausführung eines Schreibdruckes auf das mit Kapseln beschichtete Papier ergibt sich auf dem Durchschreibepapier eine graublaue Durchschrift, die im nahen Infrarotbereich von 650-850 nm eine intensive Absorption besitzt.

Analog lassen sich auch die anderen Derivat-Beispiele verwenden.

Beispiel 56

Eine Lösung aus 2 g des Pentamethinmethinderivates des Beispiels 3 und 3 g eines Benzoxazins der Formel

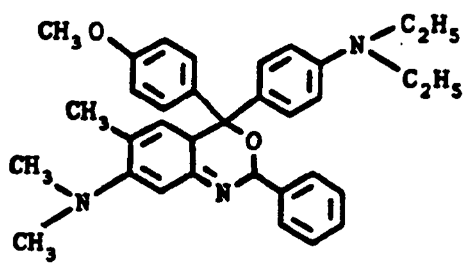

wie es in EP 187 329 beschrieben ist, in 80 g Diisopropylnaphthalin und 17 g Kerosin wird auf an sich bekannte Weise mit Gelatine und Gummi arabicum durch Koazervation mikroverkapselt, mit Stärkelösung vermischt und auf ein Blatt Papier gestrichen. Dieses Blatt wird mit der beschichteten Seite auf die mit Entwicklersubstanz beschichtete Seite eines handelsüblichen kohlefreien Durchschreibepapiers gelegt. Bei Ausübung eines Schreibdrucks auf das mit Kapseln beschichtete Papier ergibt sich auf dem Durchschreibepapier eine intensive blauschwarze Durchschrift, die im nahe Infrarot von 650 bis 850 nm ebenfalls eine intensive Absorption besitzt.

Analog lassen sich auch die anderen Derivat-Beispiele verwenden.

Beispiel 57

In einer Kugelmühle werden 32 g 4,4'-Isopropyliden-diphenol (Bisphenol A), 3,8 g Distearylamid des Ethylendiamins, 89 g Kaolin, 20 g eines Polyvinylalkohols und 55 ml Wasser gemahlen, bis die Teilchengröße ca. 5 µm beträgt. In einer 2. Kugelmühle werden 6 g des Pentamethinderivates des Beispiels 7, 3 g eines Polyvinylalkohols und 60 ml Wasser zu einer Teilchengröße von ca. 3 µm gemahlen. Die beiden Dispersionen werden zusammengegeben und mit einem Trockenauftragsgewicht von 5,5 g/m$^2$ auf Papier gestrichen. Durch Berühren des Papiers mit einem erhitzten Kugelschreiber wird eine blau-graue Aufzeichnung entwickelt, die im nahen Infrarot von 650-850 nm eine intensive Absorption zeigt.

Analog lassen sich auch die anderen Derivat-Beispiele verwenden.

Beispiel 58

Eine 5%ige Lösung des Pentamethinfarbstoffes des Beispiels 54 in Butanol/Methanol 2/1, die 2,5 % eines Polymeren auf Basis Polyvinylacetat enthält, wird nach dem Spin-Coating-Verfahren auf eine Trägerplatte aus Polymethylmethacrylat aufgebracht, wobei sich eine Schicht von 0,8 µm bildet. Die Platte kann mit Hilfe eines Halbleiterlasers beschrieben und gelesen werden.

Analog lassen sich auch die anderen Farbstoff-Beispiele verwenden.

## Patentansprüche

1. Pentamethinfarbstoffe der Formel

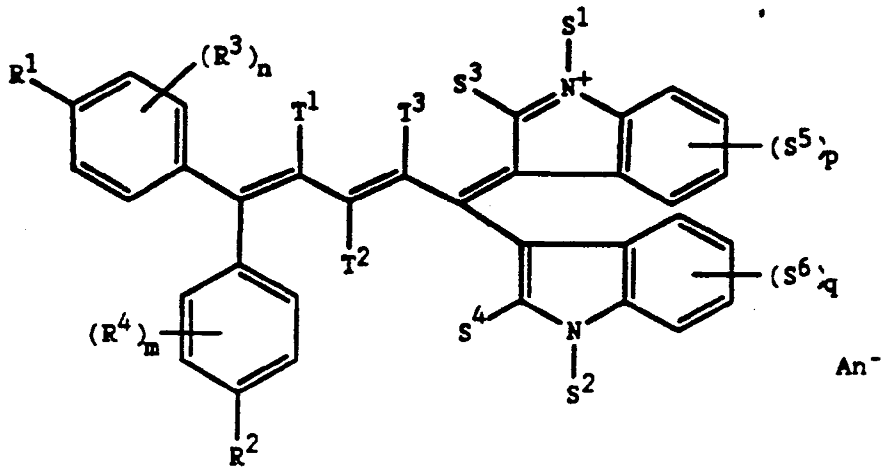

sowie Derivate von Pentamethinfarbstoffen der isomeren Formeln

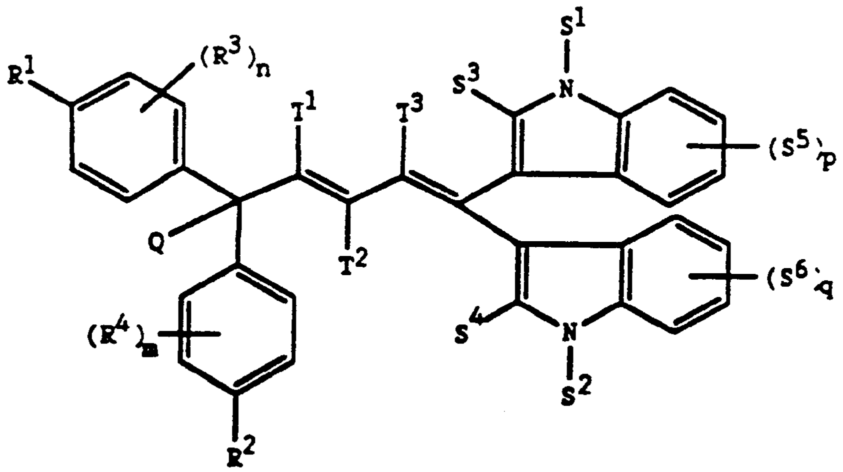

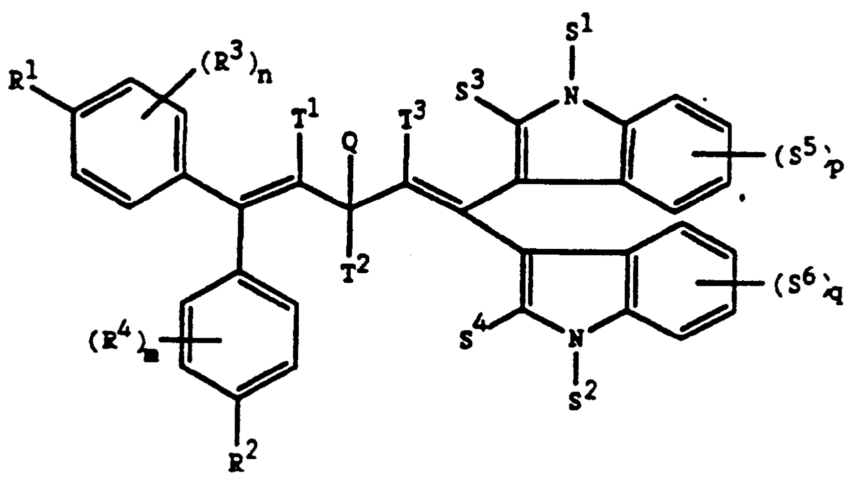

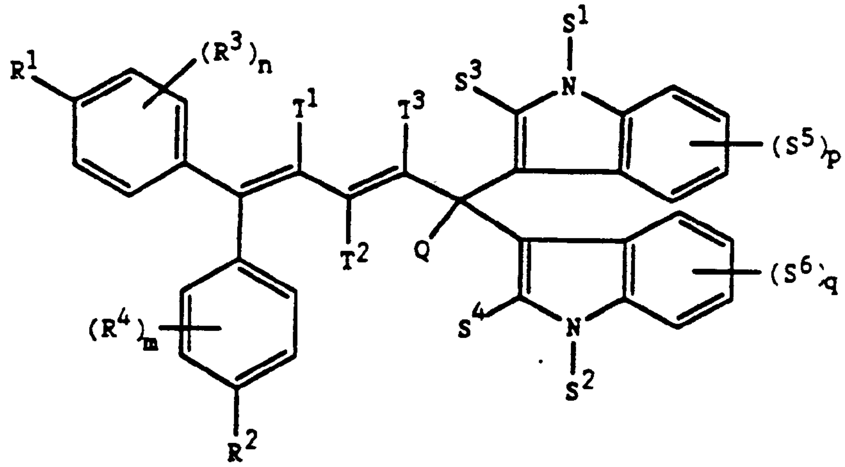

worin

| | |
|---|---|
| $R^1$ und $R^2$ | unabhängig voneinander Wasserstoff, Halogen, Alkyl, Cycloalkyl, Aralkyl, Alkoxy, Cycloalkoxy, Phenoxy, Alkylthio oder $NP^1P^2$, |
| $R^3$ und $R^4$ | unabhängig voneinander Wasserstoff, Halogen, Alkyl, Alkoxy oder Phenyl, |
| $P^1$ und $P^2$ | unabhängig voneinander Wasserstoff, Alkyl, Cycloalkyl, Alkenyl, Aralkyl, Aryl oder ein ggf. über Alkyl gebundener heterocyclischer Rest oder |
| $P^1$ und $P^2$ | zusammen mit N einen 5-, 6- oder 7-gliedrigen gesättigten oder teilweise ungesättigten Ring, der 0-2 weitere Heteroatome wie N, O oder S enthalten und durch Alkyl oder Phenyl substituiert sein kann, oder |
| $P^1$ und/oder | $P^2$ mit $R^3$ und/oder $R^4$ die restlichen Atome eines 5- oder 6-gliedrigen Ringes, der noch ein O oder N enthalten und durch Alkyl oder Phenyl substituiert sein kann, bilden, |
| Q | OV, $NV^1V^2$, SW, $SO_2X$ oder $CLY^1Y^2$, |
| $S^1$ und $S^2$ | unabhängig voneinander Wasserstoff, Alkyl, Alkenyl, Cycloalkyl, Aralkyl oder ein über Alkyl gebundener heterocyclischer Rest, |
| $S^3$ und $S^4$ | unabhängig voneinander Wasserstoff, Alkyl, Alkenyl, Cycloalkyl, Aralkyl, Aryl oder ein gegebenenfalls über Alkyl gebundener heterocyclischer Rest, |
| $T^1$ bis $T^3$ | Wasserstoff, Alkyl, Alkenyl, Cycloalkyl, Aralkyl, Halogen, Alkoxy, Dialkylamino, Cyano, Hydroxycarbonyl, Alkoxycarbonyl, Aryl, ein ggf. über Alkyl gebundener heterocyclisher Rest oder jeweils zwei der Reste $T^1$ bis $T^3$ die fehlenden Glieder eines 5- bis 7-gliedrigen Ringes, der aromatisch oder teilhydriert sein und bis zu 2 Heteroatome aus der Reihe O, N oder S enthalten kann, |
| $S^5$ und $S^6$ | unabhängig voneinander Wasserstoff, Alkyl, Alkenyl, Cycloalkyl, Aralkyl, Aryl, Hydroxy, Alkoxy, Halogen, Dialkylamino, Nitro, Cyano, Alkylthio, Alkoxycarbonyl, Dialkylaminocarbonyl, Alkoxycarbonyloxy oder Alkylsulfonyl oder zusammen mit $S^1$ bzw. $S^2$ eine $C_2$- oder $C_3$-Brücke, |
| V, $V^1$, $V^2$ | unabhängig voneinander Wasserstoff, Alkyl, Alkenyl, Cycloalkyl, ggf. über Alkyl gebundene Aryl- oder heterocyclische Reste, $-CO-Z^1$, 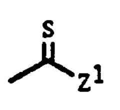 , 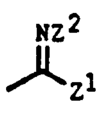 , CN oder $V^1$ und $V^2$ gemeinsam mit dem Stickstoff einen ggf. vollständig oder teilweise hydrierten, 0-3 Heteroatome der Reihe O, N, S, $SO_2$ enthaltenden Ring, |
| W | Wasserstoff, Alkyl, Alkenyl, Cycloalkyl, ggf. über Alkyl gebundene Aryl- oder heterocyclische Reste, |

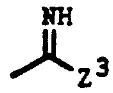

oder CN,

X — Alkyl, Alkenyl, Cycloalkyl oder ggf. über Alkyl gebundene Aryl- oder heterocyclische Reste,

L — Wasserstoff, Alkyl, Alkenyl, Cycloalkyl, Halogen, über Alkyl gebundene Aryl- oder heterocyclische Reste, oder die Bedeutung von $Y^1$ bzw. $Y^2$ hat,

$Y^1$ und $Y^2$ — $-CO-Z^1$,

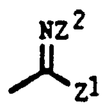 ,

$-CN$, $-SO_2-Z^1$, $NO_2$, Aryl oder ein heterocyclischer Rest,

$Z^1$ bis $Z^3$ — Wasserstoff, Alkyl, Alkenyl, Cycloalkyl, Alkoxy, Alkylthio, Cycloalkoxy, Amino, Mono- oder Bisalkylamino, Arylamino oder ggf. über Alkyl oder Alkoxy gebundene Aryl- oder heterocyclische Reste oder

$Z^1$ und $Z^2$ — mit $V^1$ oder $V^2$ bzw. $Y^1$ oder $Y^2$ oder einem anderen Rest $Z^{1'}$ oder $Z^{2'}$ die fehlenden Glieder eines ggf. vollständig oder teilweise hydrierten, 0-2 Heteroatome der Reihe O, N, S oder $SO_2$ enthaltenden, ggf. benzanellierten Ringes, wobei

$Z^{1'}$u. $Z^{2'}$ — die Bedeutung von $Z^1$ bzw. $Z^2$ besitzen und

n, m, p und q — 1 oder 2 bedeuten und

$An^-$ — für ein Anion steht

und alle cyclischen und nichtcyclischen Reste in der Farbstoffchemie übliche nichtionische Substituenten tragen können.

**2.** Pentamethinfarbstoffe der Formel

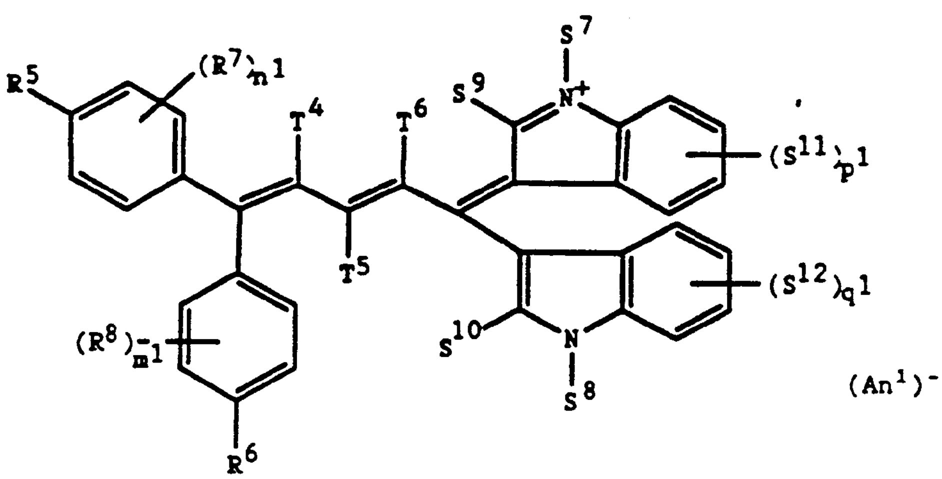

sowie Derivate von Pentamethinfarbstoffen der isomeren Formeln

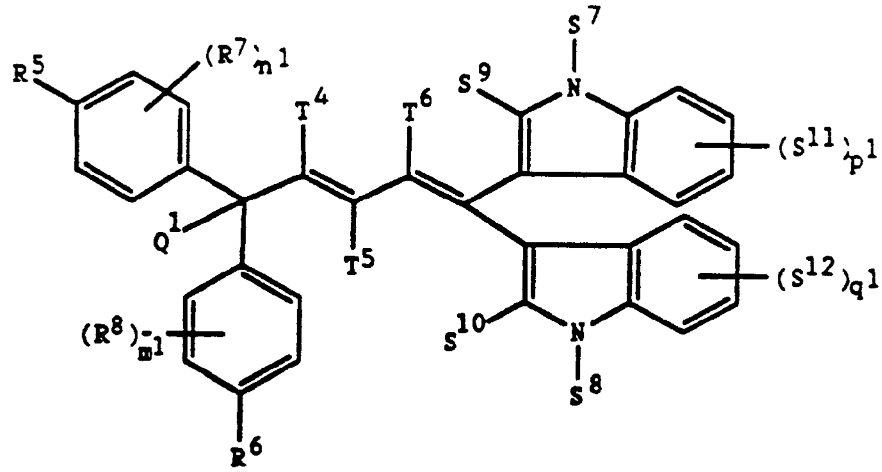

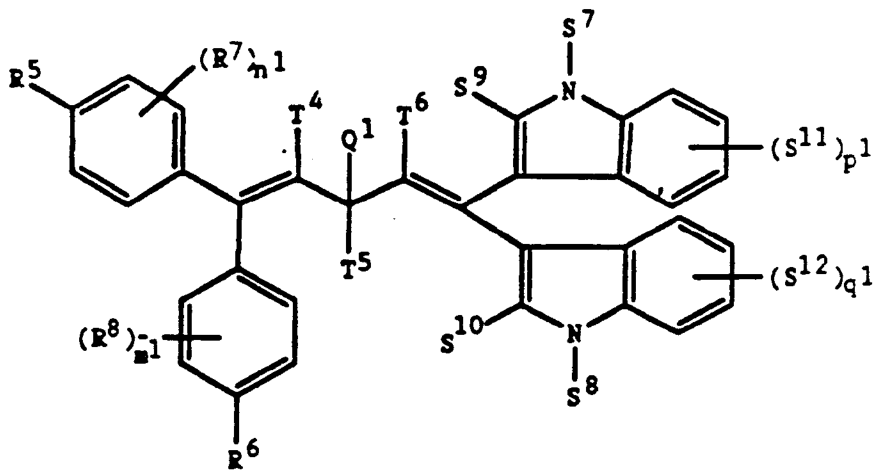

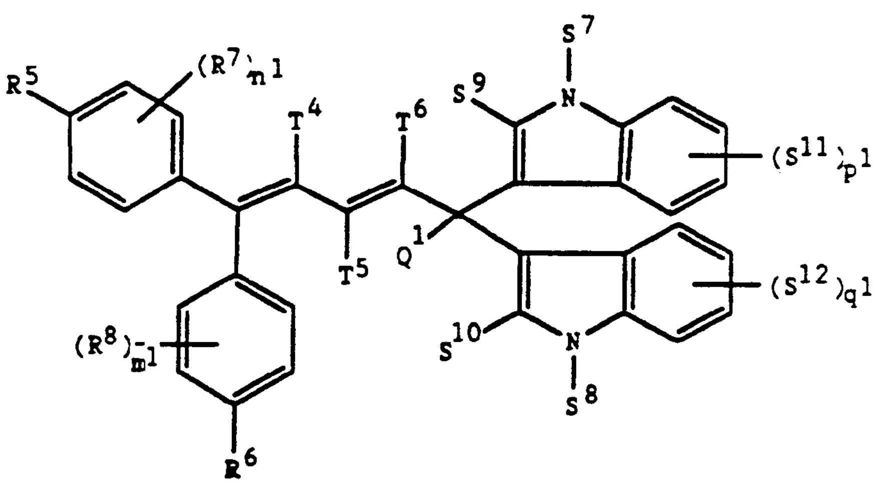

worin

$R^5$ $C_1$-$C_{18}$-Alkoxy- oder $C_1$-$C_{18}$-Alkylthio-Reste, die durch Chlor oder $C_1$-$C_4$-Alkoxy substituiert sein können, Cyclopentoxy-, Cyclohexoxy-, Benzyloxy- oder Phenyloxy-Reste, die durch $C_1$-$C_4$- Alkyl,$C_1$-$C_4$-Alkoxy und/oder Chlor substituiert sein können, oder $NP^3P^4$,

$R^6$ — Wasserstoff, Chlor, $C_1$-$C_{18}$-Alkyl, Cyclopentyl, Cyclohexyl, Benzyl oder die Bedeutung von $R^5$ hat,

$R^7$ und $R^8$ — unabhängig voneinander Wasserstoff, Chlor, $C_1$- $C_4$-Alkyl, $C_1$-$C_4$-Alkoxy oder Phenyl,

$P^3$ und $P^4$ — unabhängig voneinander Wasserstoff, $C_1$-$C_{18}$-Alkyl, das auch durch Chlor, Hydroxy, $C_1$-$C_4$-Alkoxy, Cyano, $C_1$-$C_4$-Alkoxycarbonyl und/oder $C_1$-$C_4$-Alkanoyloxy substituiert sein kann, Cyclopentyl, Cyclohexyl, $C_3$-$C_{10}$-Alkenyl, Benzyl-, Phenethyl-, Phenyl-, Pyridylmethyl- oder Pyridylethylreste, die durch Chlor, $C_1$-$C_4$-Alkyl, $C_1$-$C_4$-Alkoxy, Nitro, Cyano und/oder $C_1$-$C_4$-Alkoxycarbonyl substituiert sein können, oder

$P^3$ und $P^4$ — zusammen mit dem N einen ggf. durch Chlor, $C_1$- $C_4$-Alkyl und/oder Phenyl substituierten Pyrrolidin-, Piperidin-, Piperazin-, Morpholin- oder Pyrazolin-Rest oder

$P^3$-$R^7$, $P^4$-$R^7$, $P^3$-$R^8$ oder $P^4$-$R^8$ — eine Atomgruppe der Formeln $-CH_2-CH_2-$, $-CH_2-CH_2-CH_2-$,

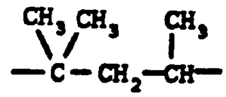 ,

$-CH_2-CH_2-O-$,

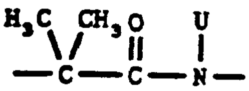 ,

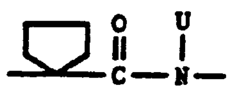 , 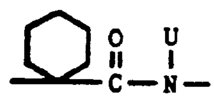 ,

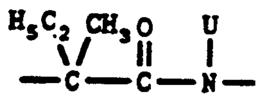 , 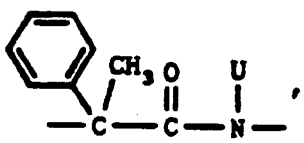 ,

U — Wasserstoff, $C_1$-$C_4$-Alkyl oder Benzyl,

$Q^1$ — Hydroxy, $C_1$-$C_{18}$-Alkoxy, das durch Chlor, $C_1$- $C_4$-Alkoxy, Cyano oder $C_1$-$C_4$-Alkoxycarbonyl substituiert sein kann, Allyloxy, Cyclopentoxy, Cyclohexoxy, ggf. durch $C_1$-$C_4$-Alkyl, Chlor und/oder $C_1$-$C_4$-Alkoxy substituierte Benzyloxy-, Phenethoxy-, Naphthylmethoxy-, Picolyloxy-, Phenoxy- oder Naphthoxy-Reste, $-NV^3V^4$,

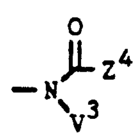 , 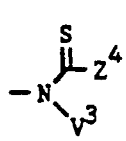 , 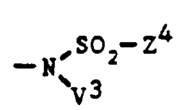 ,

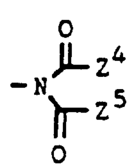 , 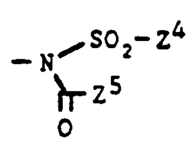 , 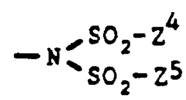 ,

-$SW^1$,

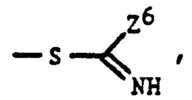

-$SO_2X^1$,

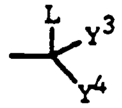 , 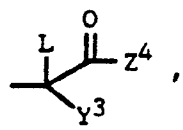 ,

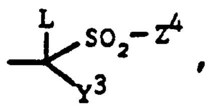 , 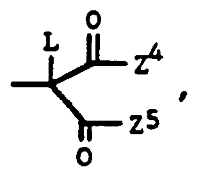 , 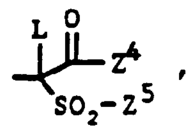 ,

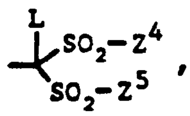 , 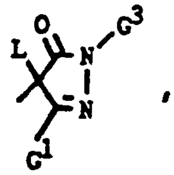 , 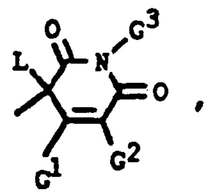 ,

$S^7$ und $S^8$ unabhängig voneinander Wasserstoff, $C_1$-$C_{18}$-Alkyl, das durch Chlor, $C_1$-$C_4$-Alkoxy, Cyano oder $C_1$-$C_4$-Alkoxycarbonyl substituiert sein kann, Allyl, Cyclopentyl, Cyclohexyl, ggf. durch $C_1$-$C_4$-Alkyl, Chlor und/oder $C_1$-$C_4$-Alkoxy substituierte Benzyl-, Phenethyl-, Naphthylmethyl- oder Picolylreste,

$S^9$ u. $S^{10}$ unabhängig voneinander Wasserstoff, $C_1$-$C_{18}$-Alkyl, das durch Chlor, $C_1$-$C_4$-Alkoxy, Cyano oder $C_1$-$C_4$-Alkoxycarbonyl substituiert sein kann, Allyl, Cyclopentyl, Cyclohexyl, ggf. durch $C_1$-$C_4$-Alkyl, Chlor, Brom, $C_1$-$C_4$-Alkoxy, Cyano, Nitro und/oder $C_1$-$C_4$-Alkoxycarbonyl substituierte Benzyl-, Phenethyl-, Naphthylmethyl-, Picolyl-, Chinolylmethyl-, Phenyl-, Naphthyl-, Pyridyl-, Pyrimidyl-, Pyrazinyl-, Imidazolyl-, Oxazolyl-, Thiazolyl-, Triazolyl-, Benzimidazolyl-, Benzoxazolyl-, Benzthiazoly- oder Chinolyl-Reste,

$T^4$ - $T^6$ Wasserstoff, $C_1$-$C_8$-Alkyl, das durch Chlor, $C_1$-$C_4$-Alkoxy, Cyano oder $C_1$-$C_4$-Alkoxycarbonyl substituiert sein kann, Vinyl, Allyl, Cyclopentyl, Cyclohexyl, Fluor, Chlor, Brom, $C_1$-$C_8$Alkoxy, das noch durch $C_1$-$C_4$-Alkoxy substituiert sein kann, $C_1$-$C_4$-Dialkylamino, Piperidino, Pyrrolidino, Nitro, Cyano, $C_1$-$C_4$-Alkoxycarbonyl, ggf. durch $C_1$-$C_4$-Alkyl, Chlor, $C_1$- $C_4$-Alkoxy, $C_1$-$C_4$-Alkylsulfonyl, Cyano und/oder $C_1$-$C_4$-Alkoxycarbonyl substituierte Benzyl-, Phenethyl-, Naphthylmethyl-, Picolyl-, Phenyl-, Naphthyl-, Pyridyl-, Chinolyl-, Pyrimidyl-, Pyrazinyl-, Indolyl-, Indolenyl-, Indolizinyl-, Imidazolyl-, Oxazolyl-, Thiazolyl-, Triazolyl-, Benzimidazolyl-, Benzoxazolyl- oder Benzthiazolylreste oder jeweils zwei der Reste $T^4$ bis $T^6$ eine Brücke der Formeln $-CH_2CH_2-$, $-CH_2CH_2CH_2-$, $-CH_2CH_2CH_2CH_2-$, $-CH_2SCH_2-$,

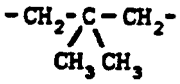 , 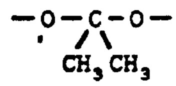 ,

$-CH=CH-CH_2-$, $-CH=CH-CH=CH-$,

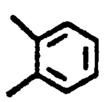 , 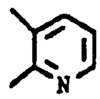 ,

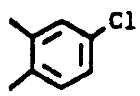 ,

$S^{11}$ u. $S^{12}$ Wasserstoff, $C_1$-$C_8$-Alkyl, Allyl, Cyclohexyl, Benzyl, Phenyl, Hydroxy, $C_1$-$C_4$-Alkoxy, Chlor, Brom, $C_1$-$C_4$-Dialkylamino, Nitro, Cyano, $C_1$-$C_4$-Alkylthio, $C_1$-$C_4$-Alkoxycarbonyl, $C_1$-$C_4$-Dialkylaminocarbonyl, $C_1$-$C_4$-Alkoxycarbonyloxy oder $C_1$-$C_4$-Alkylsulfonyl oder zusammen mit $S^7$ bzw. $S^8$ eine $-CH_2CH_2-$ oder $-CH_2CH_2CH_2-$Brücke, die durch maximal drei Methylgruppen substituiert sein kann,

$V^3$, $V^4$ und $W^1$ unabhängig voneinander Wasserstoff, $C_1$-$C_{18}$-Alkyl, das durch Chlor, $C_1$-$C_4$-Alkoxy, Cyano oder $C_1$-$C_4$-Alkoxycarbonyl substituiert sein kann, Allyl, Cyclopentyl, Cyclohexyl, Cyano, ggf. durch $C_1$-$C_4$-Alkyl, Chlor, Brom, $C_1$-$C_4$-Alkoxy, Cyano, Nitro oder $C_1$-$C_4$-Alkoxycarbonyl substituierte Benzyl-, Phenethyl-, Naphthylmethyl-, Picolyl-, Chinolylmethyl-, Phenyl-, Naphthyl-, Pyridyl-, Pyrimidyl-, Pyrazinyl-, Imidazolyl-, Oxazolyl-, Thiazolyl-, Triazolyl-, Benzimidazolyl-, Benzoxazolyl-, Benzthiazolyl-, Chinolyl-, 1,1-Dixo-tetrahydrothien-3-yl-, Piperidin-4-yl- oder Piperazin-1-yl-ethyl-Reste oder

$V^3$ und $V^4$ zusammen mit dem Stickstoff ggf. durch $C_1$-$C_4$-Alkyl, Chlor, $C_1$-$C_4$-Alkoxy oder Phenyl substituierte Pyrrolidin-, Piperidin-, Piperazin-, Morpholin-, Pyrazolin-, Pyrazol-, Imidazol-, Triazol- oder Tetrazol-Reste,

$X^1$ $C_1$-$C_{18}$-Alkyl, das durch Chlor, $C_1$-$C_4$-Alkoxy, Cyano oder $C_1$-$C_4$-Alkoxycarbonyl substituiert sein kann, Allyl, Cyclopentyl, Cyclohexyl, ggf. durch $C_1$-$C_4$-Alkyl, Chlor, Brom, $C_1$-$C_4$- Alkoxy, Cyano, Nitro oder $C_1$-$C_4$-Alkoxycarbonyl substituierte Benzyl-, Phenethyl-, Naphthylmethyl-, Picolyl-, Chinolylmethyl-, Phenyl-, Naphthyl-, Pyridyl-, Pyrimidyl-, Pyrazinyl-, Imidazolyl-, Oxazolyl-, Thiazolyl-, Triazolyl-, Benzimidazolyl-, Benzoxazolyl-, Benzthiazolyl- oder Chinolyl-Reste,

L Wasserstoff, $C_1$-$C_8$-Alkyl, das durch Chlor, $C_1$-$C_4$-Alkoxy, Cyano oder $C_1$-$C_4$-Alkoxycarbonyl substituiert sein kann, Allyl, Cyclopentyl, Cyclohexyl, Chlor, Cyano, $C_1$-$C_8$-Alkoxycarbonyl, ggf. durch $C_1$-$C_4$-Alkyl, Chlor, $C_1$-$C_4$-Alkoxy, Cyano, Nitro oder $C_1$-$C_4$-Alkoxycarbonyl substituierte Benzyl-, Phenethyl-, Picolyl-, Phenyl-, Naphthyl- oder Pyridyl-Reste,

$Y^3$ und $Y^4$ Cyano, Nitro oder gegebenenfalls durch $C_1$-$C_4$-Alkyl, Chlor, Brom, $C_1$-$C_4$-Alkoxy, Cyano, Nitro, $C_1$-$C_4$-Alkylsulfonyl oder $C_1$-$C_4$-Alkoxycarbonyl substituierte Phenyl-, Naphthyl-, Pyridyl-, Pyrimidyl-, Pyrazinyl-, Imidazolyl-, Oxazolyl-, Thiazolyl-, Triazolyl-, Benzimidazolyl-, Benzoxazolyl-, Benzthiazolyl- oder ChinolylReste,

$Z^4$,$Z^5$,$Z^6$ unabhängig voneinander Wasserstoff, $C_1$-$C_{18}$-Alkyl, das durch Chlor, $C_1$-$C_4$-Alkoxy, Cyano oder $C_1$-$C_4$-Alkoxycarbonyl substituiert sein kann, Allyl, Cyclopentyl, Cyclohexyl, $C_1$-$C_{18}$-Alkoxy, $C_1$-$C_{18}$-Alkylthio, Cyclopentoxy, Cyclohexoxy, Amino, mono- oder bis-$C_1$-$C_{12}$-Alkylamino, ggf. durch $C_1$-$C_4$-Alkyl, Chlor, Brom, $C_1$-$C_4$-Alkoxy, Cyano, Nitro oder $C_1$-$C_4$-Alkoxycarbonyl substituierte Anilino-, N-$C_1$-$C_4$-Alkylanilino-, Diphenylamino-, Benzyl-,

Benzyloxy-, Benzylamino-, N-$C_1$-$C_4$-Alkylbenzylamino-, Dibenzyl- amino-, Phenethyl-, Phenethoxy-, Phenethamino-, Pyridylethoxy-, Pyridylamino-, Picolyl-, Phenyl-, Naphthyl-, Pyridyl-, Pyrimidyl-, Pyrazinyl-, Imidazolyl-, Oxazolyl-, Thiazolyl-, Triazolyl-, Benzimidazolyl-, Benzoxazolyl-, Benzthiazolyl-, Chinolyl- oder Piperazin-1-yl-ethyl-Reste oder

$Z^4$ mit $Z^5$ oder $V^3$ oder $Y^3$ — eine Brücke der Formeln $-CH_2CH_2-$, $-CH=CH-$, $-CH_2CH_2CH_2-$, $-CH_2CH_2CH_2CH_2-$,

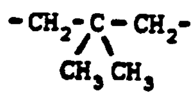 , 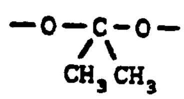 ,

$-CH=CH-CH_2-$, $-CH=CH-CH=CH-$,

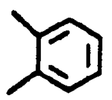 ,

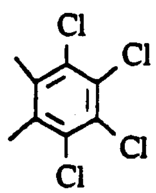 , 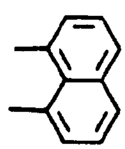 , 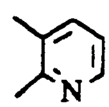 , 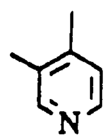 ,

$G^1$ und $G^2$ — unabhängig voneinander Wasserstoff, $C_1$-$C_8$-Alkyl, das durch Chlor, $C_1$-$C_4$-Alkoxy, Cyano oder $C_1$-$C_4$-Alkoxycarbonyl substituiert sein kann, Allyl, Cyclopentyl, Cyclohexyl, Hydroxy, Chlor, $C_1$-$C_8$-Alkoxy, Cyano, $C_1$-$C_8$-Alkoxycarbonyl, Nitro, $C_1$-$C_8$-Alkylsulfonyl, ggf. durch $C_1$-$C_4$-Alkyl, Chlor, $C_1$-$C_4$-Alkoxy, Cyano, Nitro oder $C_1$-$C_4$-Alkoxycarbonyl substituierte Benzyl-, Phenethyl-, Picolyl-, Phenyl-, Naphthyl-, Pyridyl-, Imidazolyl-, Oxazolyl-, Thiazolyl-, Triazolyl-, Benzimidazolyl-, Benzthiazolyl- oder Benzoxazolyl-Reste,

$G^3$ — Wasserstoff, $C_1$-$C_8$-Alkyl, das durch Chlor, $C_1$-$C_4$-Alkoxy, Cyano oder $C_1$-$C_4$-Alkoxycarbonyl substituiert sein kann, Allyl, Cyclopentyl, Cyclohexyl, ggf. durch $C_1$-$C_4$-Alkyl, Chlor, $C_1$- $C_4$-Alkoxy, Cyano, Nitro oder $C_1$-$C_4$-Alkoxycarbonyl substituierte Benzyl-, Phenethyl-, Picolyl-, Phenyl-, Naphthyl- oder Pyridyl-Reste und

$n^1$,$m^1$,$m^1$ u. $q^1$ — unabhängig voneinander 1 oder 2 und

$(An^1)^-$ — Chlorid, Bromid, $BF_4^-$, $ClO_4^-$, $SiF_6^{2-}$, $PF_6^-$, $B(C_6H_5)_4^-$, $H_2PO_4^-$ oder die Anionen von ggf. durch Halogen, $C_1$-$C_4$-Alkyl, $C_1$-$C_4$-Alkoxy, Hydroxy, Cyano, $C_1$-$C_4$-Alkoxycarbonyl, Nitro oder $C_1$-$C_4$-Alkylsulfonyl substituierten $C_1$- bis $C_{18}$-Carbonsäuren, $C_2$-$C_{18}$-Dicarbonsäuren, $C_1$-$C_{18}$-Alkansulfonsäuren, Benzol- oder Naphthalin-mono- oder -dicarbon- oder -sulfonsäuren bedeuten.

3. Pentamethinfarbstoffe und Derivate von Pentamethinfarbstoffen der Formeln des Anspruchs 2, worin

$R^5$ — $C_1$-$C_4$-Alkoxy, das durch Chlor oder Methoxy substituiert sein kann, Cyclohexoxy-, Benzyloxy- oder Phenoxy-Reste, die durch Methyl, Methoxy und/oder Chlor substituiert sein können, oder $NP^3P^4$,

$R^6$ — Wasserstoff, Chlor, $C_1$-$C_4$-Alkyl oder die Bedeutung von $R^5$ hat,

$R^7$ und $R^8$ — unabhängig voneinander Wasserstoff, Chlor, Methyl, Methoxy oder Phenyl,

$P^3$ und $P^4$ — unabhängig voneinander Wasserstoff, $C_1$-$C_4$-Alkyl, das durch Chlor, Hydroxy, Methoxy, Ethoxy, Cyano, Methoxycarbonyl und/oder Acetoxy substituiert sein kann, Cyclohexyl, Allyl, Benzyl-, Phenethyl- oder Phenyl-Reste, die durch Chlor, Methyl, Methoxy, Ethoxy, Nitro, Cyano und/oder Methoxycarbonyl substituiert sein können, oder

$NP^3P^4$ Pyrrolidino, Piperidino, Piperazino, N-Methyl- oder -Ethylpiperazino, Morpholino, Pyrazolino, 3,5,5-Trimethylpyrazolino, 5-Methyl-3,5-diphenylpyrazolino oder

$P^3$-$R^7$, $P^4$-$R^7$, $P^3$-$R^8$ oder $P^4$-$R^8$ eine Atomgruppe der Formeln $-CH_2-CH_2-$, $-CH_2-CH_2-CH_2-$,

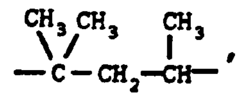

$-CH_2-CH_2-O-$,

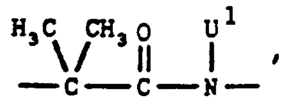

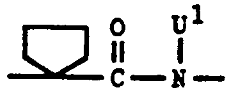 , 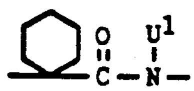 , 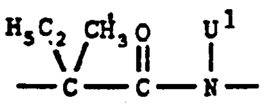 ,

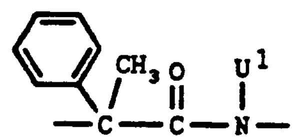

$U^1$ Wasserstoff oder Methyl,

$Q^1$ Hydroxy, $C_1$-$C_8$-Alkoxy, das durch Chlor, Methoxy, Ethoxy oder Cyano substituiert sein kann, Allyloxy, Cyclopentoxy, Cyclohexoxy, ggf. durch Methyl, Chlor oder Methoxy substituierte Benzyloxy-, 2-Phenylethoxy- oder Picolyloxy-Reste, $C_1$-$C_8$-Mono- oder Dialkylamino, ggf. durch Methyl, Chlor oder Methoxy substituierte Pyrrolidino-, Piperidino-, Morpholino-, Piperazino-, Hydroxyethylpiperazino-, Pyrazolo-, Imidazolo-, Triazolo-, Tetrazolo-Reste, ggf. durch Methyl, Ethyl, Chlor, Cyano oder Nitro substituierte Anilino-, N-$C_1$-$C_4$-Alkylanilino-, Diphenylamino-, Benzylamino-, N-$C_1$-$C_4$-Alkyl-N-benzylamino-, Pyridylamino-, Benzoylamino-, N-$C_1$-$C_4$-Alkylbenzoylamino-, N-Phenylbenzoylamino-, Benzolsulfonylamino-, N-$C_1$-$C_4$-Alkylbenzolsulfonylamino-, Phthalimido-, Naphthalimido-, Homophthalimido-, Benzoesäure-2-sulfonsäureimido-, Succinimido-, Maleinimido-Reste, Aminocarbonylamino, $C_1$-$C_8$-Alkoxycarbonylamino, $C_1$-$C_8$-Alkylthio, ggf. durch Methyl, Chlor oder Methoxy substituiertes Phenylthio,

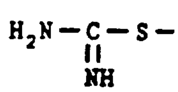

$C_1$-$C_8$-Alkylsulfonyl, ggf. durch Methyl, Ethyl, Chlor, Brom, Cyano oder Methoxycarbonyl substituierte Phenylsulfonyl-, Benzylsulfonyl-, Naphthylsulfonyl-Reste, in α-Stellung durch Cyano, $C_1$-$C_4$-Alkoxycarbonyl, $C_1$-$C_4$-Alkylsulfonyl, $C_1$-$C_4$-Alkanoyl oder Benzoyl substituierte, ggf. weiterhin durch Methyl, Ethyl, Chlor, Brom, Cyano, Nitro oder Methoxycarbonyl substituierte Benzyl-, Naphthylmethyl-, Picolyl-, Chinolylmethyl-, Imidazolylmethyl-,

Benzimidazolylmethyl-, Oxazolylmethyl-, Benzoxazolylmethyl-, Thiazolylmethyl-, Benzthiazolylmethyl-, Triazolylmethyl-, Tetrazolylmethylreste, Dicyanomethyl, Cyano-$C_1$-$C_4$-alkoxycarbonylmethyl, Bis-$C_1$-$C_4$-alkoxycarbonylmethyl, Cyano-$C_1$-$C_4$-alkanoylmethyl, Bis-$C_1$-$C_4$-alkanoylmethyl, ggf. durch Methyl, Ethyl, Chlor, Cyano, Nitro oder Methoxycarbonyl substituierte Cyanobenzoylmethyl-, $C_1$-$C_4$- Alkanoylbenzoylmethyl-, $C_1$-$C_4$-Alkoxycarbonyl-benzoylmethyl-, Dibenzoylmethyl-, Cyanophenylsulfonylmethyl-, $C_1$-$C_4$-Alkanoyl-phenylsulfonylmethyl-, $C_1$-$C_4$-Alkoxycarbonyl-phenylsulfonylmethyl-, Bisphenylsulfonylmethyl-Reste, die Reste von ggf. durch Methyl, Ethyl, Chlor, Methoxy, Ethoxy, Phenyl, Cyano, Methoxy- oder Ethoxycarbonyl substituiertem 1,3-Cyclopentandion, 1,3-Cyclohexandion, 1,3-Indandion, Meldrumsäure, Pyrazolon, 2-Hydroxy-6-pyridon oder Barbitursäure,

$S^7$ und $S^8$ unabhängig voneinander Wasserstoff, $C_1$-$C_8$-Alkyl, das durch Chlor, Methoxy, Ethoxy, Cyano oder Methoxycarbonyl substituiert sein kann, Allyl, Cyclopentyl, Cyclohexyl, ggf. durch Methyl, Chlor oder Methoxy substituierte Benzyl-, Phenethyl- oder Picolyl-Reste,

$S^9$ u. $S^{10}$ unabhängig voneinander Wasserstoff, $C_1$-$C_8$-Alkyl, das durch Chlor, Methoxy, Ethoxy, Cyano oder Methoxycarbonyl substituiert sein kann, Allyl, Cyclopentyl, Cyclohexyl, ggf. durch Methyl, Chlor, Methoxy, Cyano, Nitro und/oder Methoxycarbonyl substituierte Benzyl-, Phenethyl-, Picolyl-, Phenyl-, Naphthyl-, Pyridyl-, Pyrimidyl-, Benzimidazolyl-, Benzoxazolyl-, Benzthiazolyl- oder Chinolyl-Reste,

$T^4$ u. $T^6$ Wasserstoff, $C_1$-$C_8$-Alkyl, das durch Chlor, Methoxy, Cyano oder Methoxycarbonyl substituiert sein kann, Vinyl, Allyl, Cyclopentyl, Cyclohexyl, Chlor, $C_1$-$C_8$-Alkoxy, Cyano, Methoxycarbonyl, Nitro, Benzyl, ggf. durch Methyl, Chlor, Cyano oder Methoxy substituierte Phenyl- oder Pyridyl-Reste,

$T^5$ Wasserstoff oder Methyl,

$S^{11}$u. $S^{12}$ unabhängig voneinander Wasserstoff, $C_1$-$C_4$-Alkyl, Cyclohexyl, Benzyl, $C_1$-$C_4$-Alkoxy, Chlor, $C_1$-$C_4$-Dialkylamino, Nitro, Cyano, Methoxy- oder Ethoxycarbonyl oder Methylsulfonyl, wobei $S^{11}$ oder $S^{12}$ in 5-, 6- und/oder 7-Position am Indolyl-Rest stehen kann, oder ein in 7-Position stehender Rest $S^{11}$ oder $S^{12}$ zusammen mit $S^7$ bzw. $S^8$ eine Brücke der Formeln $-CH_2CH_2-$,

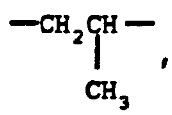
,

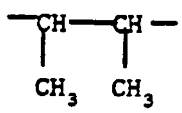
,
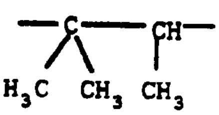
,

$-CH_2CH_2CH_2-$,

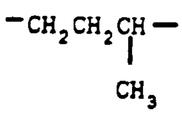
,
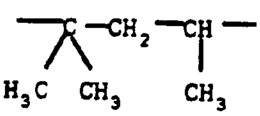

bilden kann, und

$n^1$, $m^1$, $p^1$, $q^1$ unabhängig voneinander 1 oder 2 und

$(An^1)^-$ Chlorid, Bromid, $BF_4^-$, $ClO_4^-$, $SiF_6^{2-}$ oder die Anionen von durch Fluor,

Chlor, Methyl, Methoxy, Hydroxy, Cyano oder Methoxycarbonyl substituierten $C_1$-$C_8$-Carbonsäuren, $C_2$-$C_8$-Dicarbonsäuren, $C_1$-$C_8$-Alkansulfonsäuren, Benzoesäure, Benzolsulfonsäure oder Phthalsäure bedeuten.

**4.** Pentamethinfarbstoffe der Formel

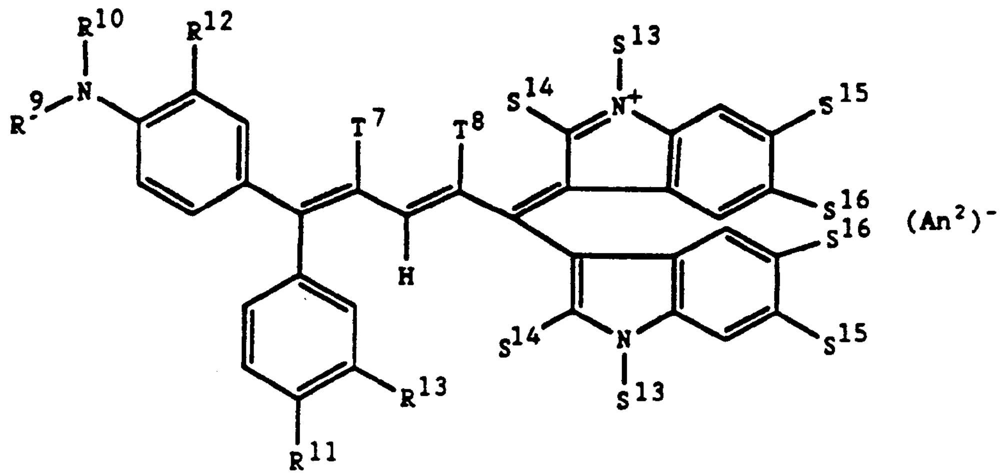

sowie Derivate von Pentamethinfarbstoffen der Formel

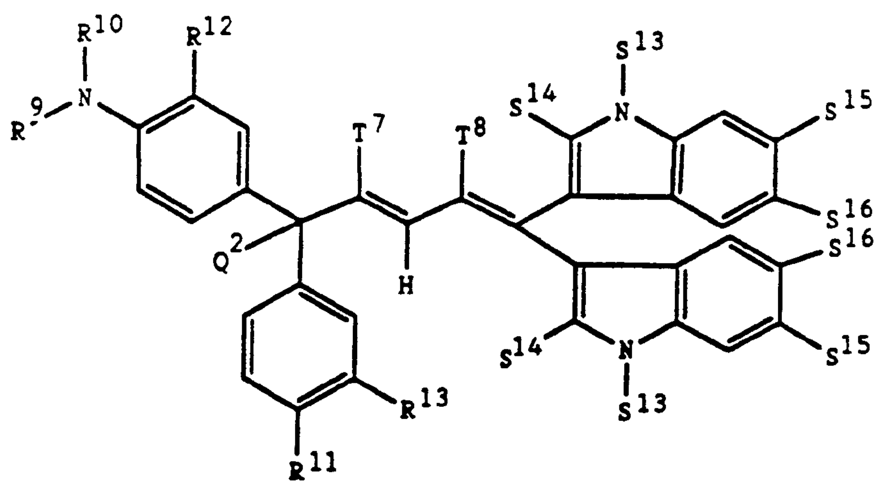

und ihre bezüglich der Stellung der $Q^2$-Gruppe isomeren Formen, wie sie in Anspruch 1 wiedergegeben sind, worin

$R^9$ u. $R^{10}$ unabhängig voneinander Wasserstoff, Methyl, Ethyl, 1- oder 2-Propyl, 1- oder 2-Butyl, 2-Methyl-1-propyl, Cyclohexyl, Allyl, Benzyl, 4-Tolyl, 4-Anisyl, 4-Ethoxyphenyl, 4-Cyanophenyl oder

$NR^9R^{10}$ Pyrrolidino, Piperidino, Morpholino, 3,5,5-Trimethylpyrazolino,

$R^{11}$ Wasserstoff, Chlor, Methyl, Ethyl, Methoxy, Ethoxy, Phenoxy oder $NR^9R^{10}$,

$R^{12}$u. $R^{13}$ unabhängig voneinander Wasserstoff, Methyl, Chlor, Methoxy oder zusammen mit $R^9$ eine Gruppe der Formeln $-CH_2-CH_2-$, $-CH_2-CH_2-CH_2-$,

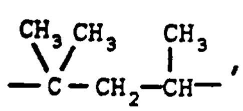

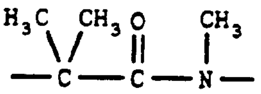, 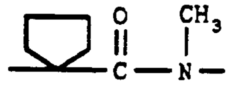,

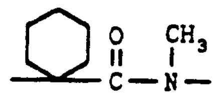,

$Q^2$ Hydroxy, Methoxy, Ethoxy, 1- oder 2-Propoxy, 1- oder 2-Butoxy, 2-Methyl-1-propoxy, 1,1-Dimethylethoxy, Dimethylamino, Diethylamino, Dipropylamino, Dibutylamino, Propylamino, Butylamino, Pyrrolidino, Piperidino, Morpholino, Piperazino, Pyrazolo, Imidazolo, Triazolo, Anilino, 4-Methylanilino, 4-Chloranilino, 4-Methoxyanilino, 4-Nitroanilino, N-Methylanilino, Benzylamino, N-Methylbenzylamino, N-Ethylbenzylamino, Benzoylamino, Benzolsulfonylamino, Phthalimido, Naphthalimido, Succinimido, Maleinimido, Methylthio, Ethylthio, Phenylthio, Methylsulfonyl, Ethylsulfonyl, Propylsulfonyl, Butylsulfonyl, Hexylsulfonyl, Octylsulfonyl, Benzolsulfonyl, 4-Methylbenzolsulfonyl, 4-Chlorbenzolsulfonyl, α-Cyanobenzyl, α-Cyano-4-methylbenzyl, α-Cyano-4-chlorbenzyl, α-Cyano-4-nitrobenzyl, α-Cyano-α-picolyl, α-Cyano-γ-picolyl, Dicyanomethyl, Cyanomethoxycarbonylmethyl, Cyanoethoxycarbonylmethyl, Bis-methoxycarbonylmethyl, Bis-ethoxycarbonylmethyl, 1-Cyanoaceton-1-yl, 1-Cyanobutanon-1-yl, 1-Methoxycarbonylaceton-1-yl, 1-Ethoxycarbonylaceton-1-yl, 1,3-Pentandion-3-yl, 1-Benzoylaceton-1-yl, 2-Cyano-1-phenylethanon-2-yl, 2-Methoxycarbonyl-1-phenylethanon-2-yl, Dibenzoylmethyl, Cyano-phenylsulfonylmethyl, Bisphenylsulfonylmethyl, 1,3-Cyclopentandion-2-yl, 1,3-Cyclohexandion-2-yl, 5,5-Dimethyl-1,3-cyclohexandion-2-yl, 1,3-Indandion-2-yl, 2,2-Dimethylperhydro-1,3-dioxin-4,6-dion-5-yl, 3-Methyl-1-phenyl-2-pyrazolin-5-on-4-yl, 1-(2-Chlorphenyl)-3-methyl-2-pyrazolin-5-on-4-yl, 3-Methyl-1-(4-methylphenyl)-2-pyrazolin-5-on-4-yl, 3-Methyl-1-(4-nitrophenyl)-2-pyrazolin-5-on-4-yl, 3-Methyl-1-phenyl-5-imino-2-pyrazolin-4-yl, 3-Methyl-1-(3-sulfolanyl)-2-pyrazolin-5-on-4-yl, 3-Ethoxycarbonyl-1-phenyl-2-pyrazolin-5-on-4-yl, 3-Aminocarbonyl-1-phenyl-2-pyrazolin-5-on-4-yl, 4-Hydroxy-1-methyl-2(1H)-chinolinon-3-yl, 3-Cyano-4-methyl-6-hydroxy-2(1H)-pyridon-5-yl, 3-Cyano-1,4-dimethyl-6-hydroxy-2(1H)-pyridon-5-yl, 2,4,6-(1H,3H,5H)-Pyrimidintrion-5-yl,

$S^{13}$ Methyl, Ethyl, Propyl, Butyl, Hexyl, Octyl, 2-Cyanoethyl, 2-Methoxyethyl, 2-Methoxycarbonylethyl, 2-Chlorethyl, 2-Acetoxyethyl, Cyclohexyl, Allyl oder Benzyl,

$S^{14}$ Methyl, Ethyl, Propyl, Butyl, Hexyl, Octyl, Cyclohexyl, Benzyl, Phenyl, 2-, 3- oder 4-Chlorphenyl, 2-, 3- oder 4-Methoxyphenyl, 4-Nitrophenyl, 2,4-Dichlorphenyl, 2-, 3- oder 4-Tolyl oder 2-, 3- oder 4-Pyridyl,

$T^7$ und $T^8$ unabhängig voneinander Wasserstoff oder Methyl,

$S^{15}$u. $S^{16}$ Wasserstoff, Methyl, Methoxy, Chlor, Cyano, Methoxycarbonyl oder Nitro und

$(An^2)^-$ Chlorid, Bromid, Formiat, Acetat, Propionat, Butyrat, Hydroxyacetat, Chloracetat, Oxalat, Lactat, Benzoat, Salicylat, Methansulfonat, Ethansulfonat, Trifluormethansulfonat, Monofluorbutansulfonat, Benzolsulfonat, Toluolsulfonat, Chlorbenzolsulfonat, Dodecylbenzolsulfonat, $ClO_4^-$, $BF_4^-$ bedeuten.

**5.** Verfahren zur Herstellung von Pentamethinfarbstoffen und Derivaten von Pentamethinfarbstoffen des Anspruchs 1, dadurch gekennzeichnet, daß man einen Aldehyd oder ein Keton der Formel

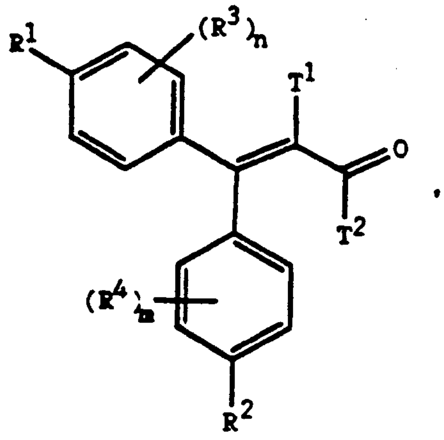

mit einem Ethen der Formel

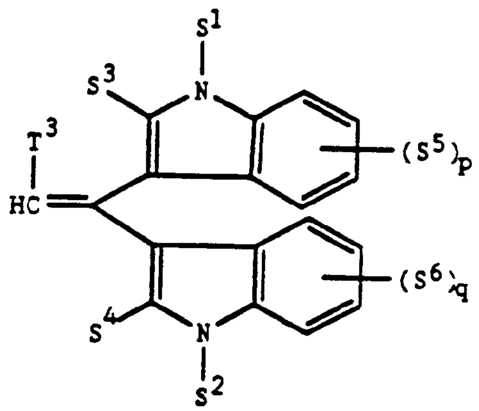

oder ein Ethen der Formel

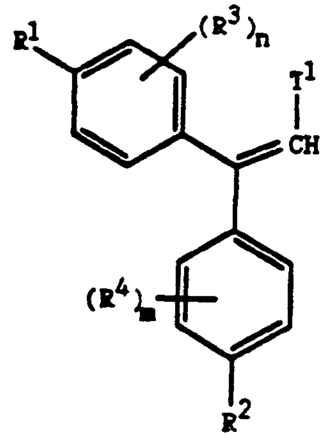

mit einem Aldehyd oder Keton der Formel

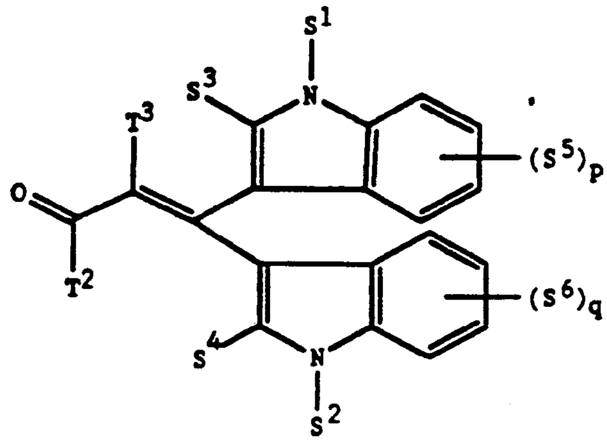

kondensiert und - im Falle der Derivate - mit einer Verbindung der Formel

HQ

umsetzt, worin

$R^1$-$R^4$, $T^1$-$T^3$, $S^1$-$S^6$, Q, n, m, p, q und $An^-$ die in Anspruch 1 angegebene Bedeutung besitzen.

6. Mischungen von Derivaten von Pentamethinfarbstoffen der in Anspruch 1 angegebenen isomeren Formeln.

7. Verwendung der Derivate von Pentamethinfarbstoffen des Anspruchs 1 für druck- und thermoempfindliche Aufzeichnungsmaterialien.

8. Druck- oder thermoempfindliches Aufzeichnungsmaterial, dadurch gekennzeichnet, daß es Derivate von Pentamethinfarbstoffen des Anspruchs 1 enthält.

9. Verwendung von Pentamethinfarbstoffen des Anspruchs 1 für optische Aufzeichnungsmaterialien.

10. Optisches Aufzeichnungsmaterial, dadurch gekennzeichnet, daß es Pentamethinfarbstoffe des Anspruchs 1 enthält.

## Claims

1. Pentamethine dyestuffs of the formula

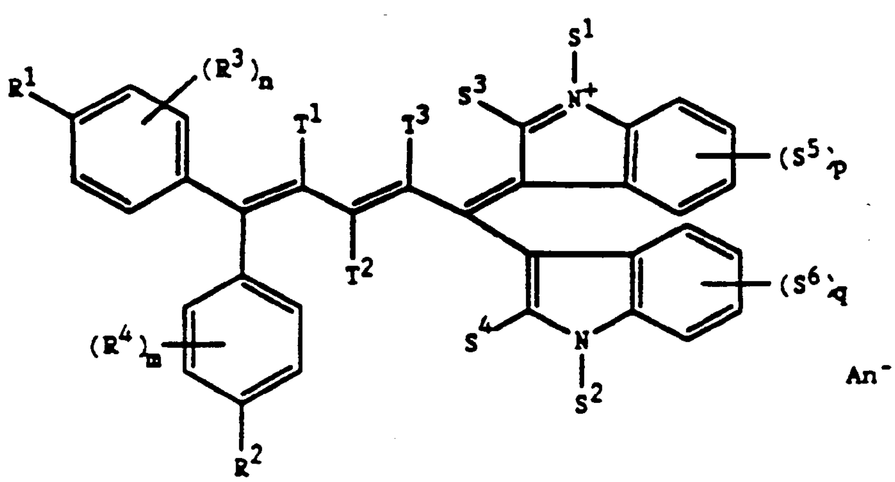

and derivatives of pentamethine dyestuffs of the isomeric formulae

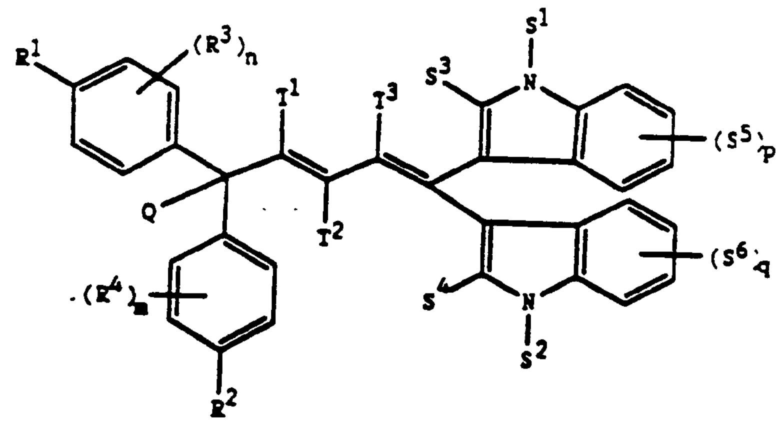

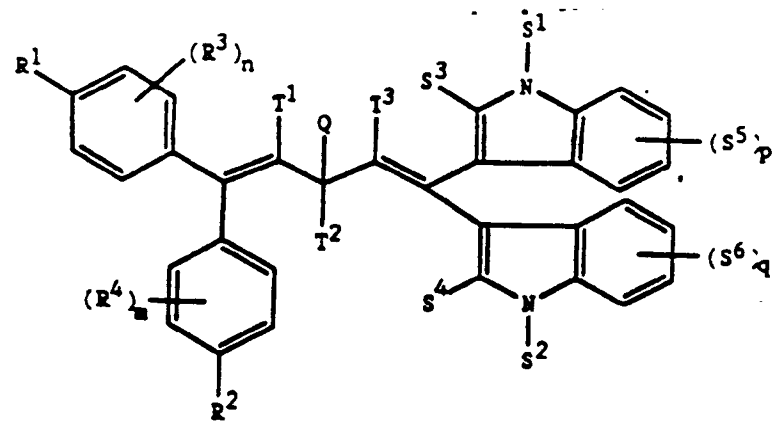

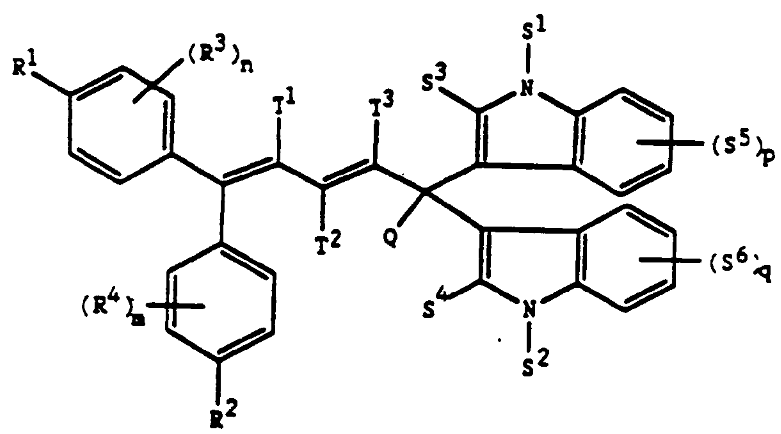

in which

$R^1$ and $R^2$ — independently of one another denote hydrogen, halogen, alkyl, cycloalkyl, aralkyl, alkoxy, cycloalkoxy, phenoxy, alkylthio or $NP^1P^2$,

$R^3$ and $R^4$ — independently of one another denote hydrogen, halogen, alkyl, alkoxy or phenyl,

$P^1$ and $P^2$ — independently of one another denote hydrogen, alkyl, cycloalkyl, alkenyl, aralkyl, aryl or a heterocyclic radical which is optionally bonded via alkyl, or

$P^1$ and $P^2$, — together with N, denote a 5-, 6- or 7-membered saturated or partially unsaturated ring, which may contain 0-2 other heteroatoms such as N, O or S and may be substituted by alkyl or phenyl, or

$P^1$ and/or $P^2$ with $R^3$ and/or $R^4$ — form the remaining atoms of a 5- or 6-membered ring, which may still contain an O or N and may be substituted by alkyl or phenyl,

| | |
|---|---|
| Q | denotes OV, $NV^1V^2$, SW, $SO_2X$ or $CLY^1Y^2$, |
| $S^1$ and $S^2$ | independently of one another denote hydrogen, alkyl, alkenyl, cycloalkyl, aralkyl or a heterocyclic radical which is bonded via alkyl, |
| $S^3$ and $S^4$ | independently of one another denote hydrogen, alkyl, alkenyl, cycloalkyl, aralkyl, aryl or a heterocyclic radical which is optionally bonded via alkyl, |
| $T^1$ to $T^3$ | denote hydrogen, alkyl, alkenyl, cycloalkyl, aralkyl, halogen, alkoxy, dialkylamino, cyano, hydroxycarbonyl, alkoxycarbonyl, aryl, a heterocyclic radical optionally bonded via alkyl or, in each case, two of the radicals $T^1$ to $T^3$ denote the missing members of a 5- to 7-membered ring, which may be aromatic or partially hydrogenated and may contain up to two heteroatoms from the series comprising O, N or S, |
| $S^5$ and $S^6$ | independently of one another denote hydrogen, alkyl, alkenyl, cycloalkyl, aralkyl, aryl, hydroxyl, alkoxy, halogen, dialkylamino, nitro, cyano, alkylthio, alkoxycarbonyl, dialkylaminocarbonyl, alkoxycarbonyloxy or alkylsulphonyl or, together with $S^1$ or $S^2$, denote a $C_2$- or $C_3$-bridge, |
| V, $V^1$ & $V^2$ | independently of one another denote hydrogen, alkyl, alkenyl, cycloalkyl, or aryl or heterocyclic radicals which are bonded via alkyl, -CO-$Z^1$, 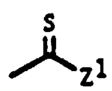 , 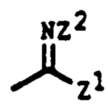 , CN or $V^1$ and $V^2$, together with the nitrogen atom, denote an optionally completely or partially hydrogenated ring containing 0-3 heteroatoms from the series comprising O, N, S and $SO_2$, |
| W | denotes hydrogen, alkyl, alkenyl, cycloalkyl, or aryl or heterocyclic radicals which are optionally bonded via alkyl, 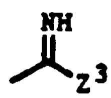 or CN, |
| X | denotes alkyl, alkenyl, cycloalkyl, or aryl or heterocyclic radicals which are optionally bonded via alkyl, |
| L | denotes hydrogen, alkyl, alkenyl, cycloalkyl, halogen, or aryl or heterocyclic radicals which are bonded via alkyl, or has the meaning of $Y^1$ or $Y^2$, |
| $Y^1$ and $Y^2$ | denote -CO-$Z^1$, 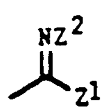 , -CN, -$SO_2$-$Z^1$, $NO_2$, aryl or a heterocyclic radical, |
| $Z^1$ to $Z^3$ | denote hydrogen, alkyl, alkenyl, cycloalkyl, alkoxy, alkylthio, cycloalkoxy, amino, mono- or bisalkylamino, arylamino, or aryl or heterocyclic radicals which are optionally bonded via alkyl or alkoxy, or |
| $Z^1$ and $Z^2$ | with $V^1$ or $V^2$ or with $Y^1$ or $Y^2$ or with another radical $Z^{1'}$ or $Z^{2'}$ denote the missing members of a ring which contains 0-2 heteroatoms from the series comprising O, N, S and $SO_2$ and which is optionally completely or partially hydrogenated and optionally benzo-fused, where |
| $Z^{1'}$ and $Z^{2'}$ | have the meaning of $Z^1$ and $Z^2$, |
| n, m, p and q | denote 1 or 2 and |
| $An^-$ | represents an anion |

and all cyclic and non-cyclic radicals can carry nonionic substituents customary in dyestuff chemistry.

2. Pentamethine dyestuffs of the formula

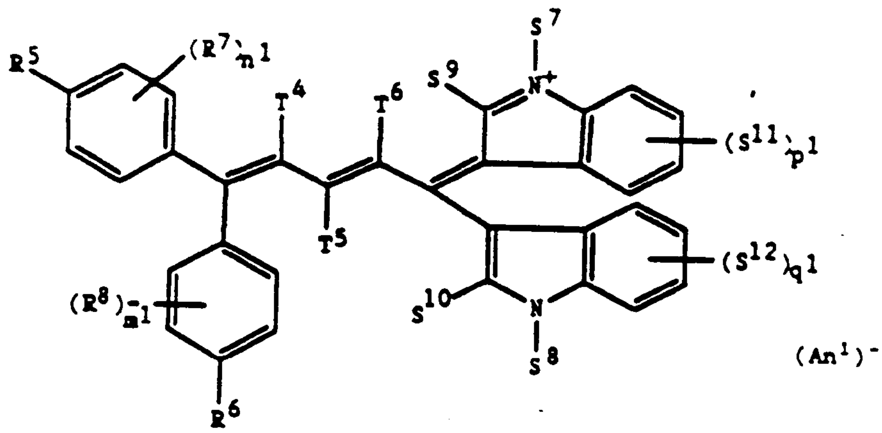

and derivatives of pentamethine dyestuffs of the isomeric formulae

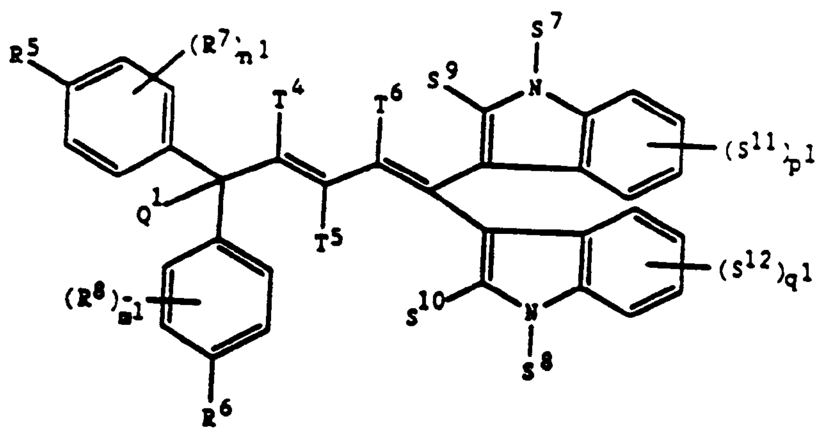

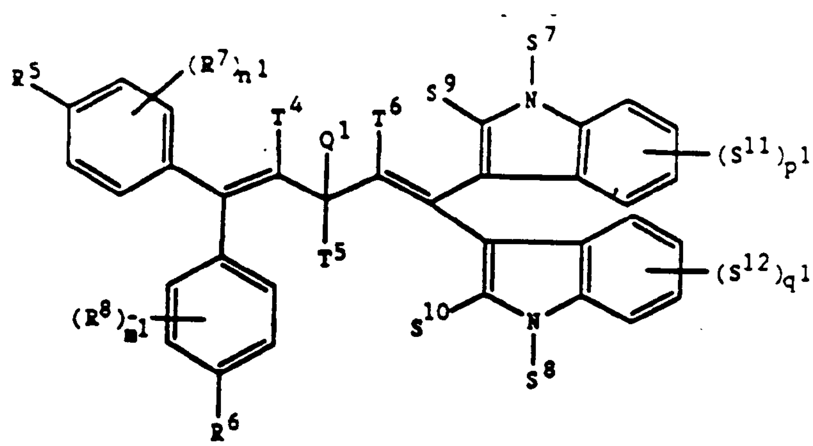

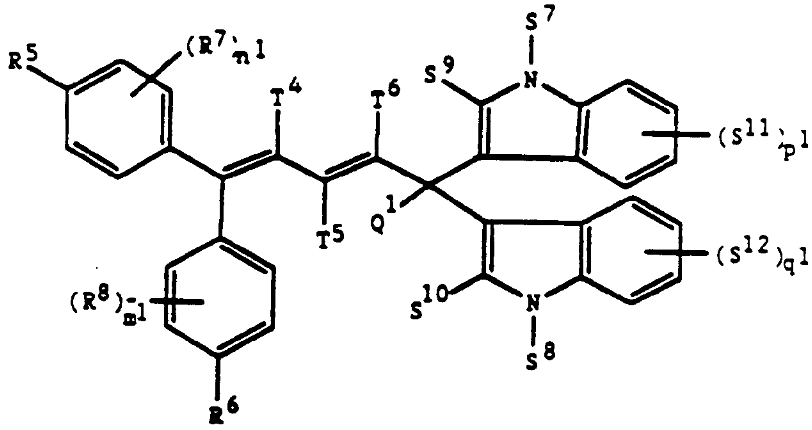

in which

| | |
|---|---|
| $R^5$ | denotes $C_1$-$C_{18}$-alkoxy or $C_1$-$C_{18}$-alkylthio radicals, which can be substituted by chlorine or $C_1$-$C_4$-alkoxy, or cyclopentoxy, cyclohexoxy, benzyloxy or phenyloxy radicals, which can be substituted by $C_1$-$C_4$-alkyl, $C_1$-$C_4$-alkoxy and/or chlorine, or $NP^3P^4$, |
| $R^6$ | denotes hydrogen, chlorine, $C_1$-$C_{18}$-alkyl, cyclopentyl, cyclohexyl, benzyl or has the meaning of $R^5$, |
| $R^7$ and $R^8$ | independently of one another denote hydrogen, chlorine, $C_1$-$C_4$-alkyl, $C_1$-$C_4$-alkoxy or phenyl, |
| $P^3$ and $P^4$ | independently of one another denote hydrogen, $C_1$-$C_{18}$-alkyl, which can also be substituted by chlorine, hydroxyl, $C_1$-$C_4$-alkoxy, cyano, $C_1$-$C_4$-alkoxycarbonyl and/or $C_1$-$C_4$-alkanoyloxy, or cyclopentyl, cyclohexyl, $C_3$-$C_{10}$-alkenyl, or benzyl, phenethyl, phenyl, pyridylmethyl or pyridylethyl radicals which can be substituted by chlorine, $C_1$-$C_4$-alkyl, $C_1$-$C_4$-alkoxy, nitro, cyano and/or $C_1$-$C_4$-alkoxycarbonyl, or |
| $P^3$ and $P^4$, | together with N, denote a pyrrolidine, piperidine, piperazine, morpholine or pyrazoline radical which is optionally substituted by chlorine, $C_1$-$C_4$-alkyl and/or phenyl |
| $P^3$-$R^7$, $P^4$-$R^7$, $P^3$-$R^8$ or $P^4$-$R^8$ | denotes an atom group of the formulae $-CH_2-CH_2-$, $-CH_2-CH_2-CH_2-$, |

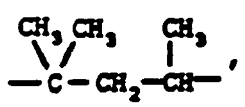,

$-CH_2-CH_2-O-$,

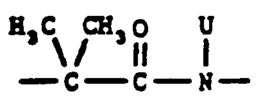,

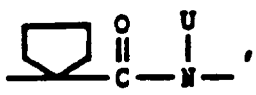, 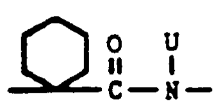,

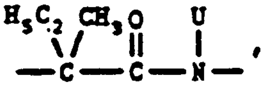, 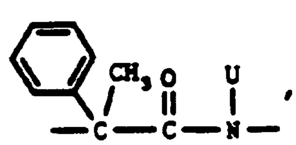,

U denotes hydrogen, $C_1$-$C_4$-alkyl or benzyl,

$Q^1$ denotes hydroxyl, $C_1$-$C_{18}$-alkoxy which can be substituted by chlorine, $C_1$-$C_4$-alkoxy, cyano or $C_1$-$C_4$-alkoxycarbonyl, or allyloxy, cyclopentoxy, cyclohexoxy, or benzyloxy, phenethoxy, naphthylmethoxy, picolyloxy, phenoxy or naphthoxy radicals which are optionally substituted by $C_1$-$C_4$-alkyl, chlorine and/or $C_1$-$C_4$-alkoxy, or $-NV^3V^4$,

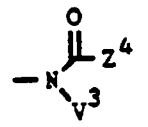 , 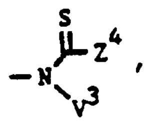 , 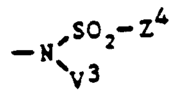 ,

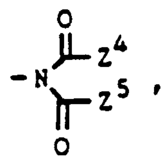 , 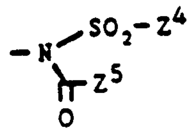 , 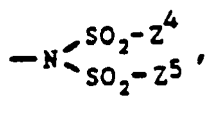 ,

$-SW^1$,

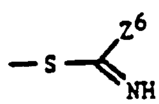 ,

$-SO_2X^1$,

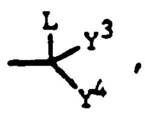 , 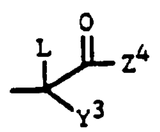 ,

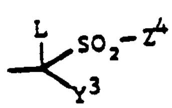 , 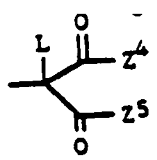 , 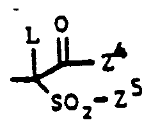 ,

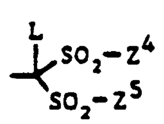 , 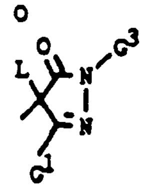 , 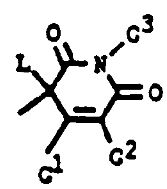 ,

$S^7$ and $S^8$ independently of one another denote hydrogen, $C_1$-$C_{18}$-alkyl which can be substituted by chlorine, $C_1$-$C_4$-alkoxy, cyano or $C_1$-$C_4$-alkoxycarbonyl, or allyl, cyclopentyl, cyclohexyl, or benzyl, phenethyl, naphthylmethyl or picolyl radicals which are optionally substituted by $C_1$-$C_4$-alkyl, chlorine and/or $C_1$-$C_4$-alkoxy,

$S^9$ and $S^{10}$ independently of one another denote hydrogen, $C_1$-$C_{18}$-alkyl which can be substituted by chlorine, $C_1$-$C_4$-alkoxy, cyano or $C_1$-$C_4$-alkoxycarbonyl, or allyl, cyclopentyl, cyclohexyl, or benzyl, phenethyl, naphthylmethyl, picolyl, quinolylmethyl, phenyl, naphthyl, pyridyl, pyrimidyl, pyrazinyl, imidazolyl, oxazolyl, thiazolyl, triazolyl, benzimidazolyl, benzoxazolyl, benzothiazolyl or quinolyl radicals which are optionally substituted by $C_1$-$C_4$-alkyl, chlorine, bromine, $C_1$-$C_4$-alkoxy, cyano, nitro and/or $C_1$-$C_4$-alkoxycarbonyl,

$T^4$-$T^6$ denote hydrogen, $C_1$-$C_8$-alkyl which can be substituted by chlorine, $C_1$-$C_4$-alkoxy, cyano or $C_1$-$C_4$-alkoxycarbonyl, or vinyl, allyl, cyclopentyl, cyclohexyl, fluorine, chlorine bromine, $C_1$-$C_8$-alkoxy which can further be substituted by $C_1$-$C_4$-alkoxy, or $C_1$-$C_4$-dialkylamino, piperidino, pyrrolidino, nitro, cyano, $C_1$-$C_4$-alkoxycarbonyl, or benzyl, phenethyl, naphthylmethyl, picolyl, phenyl, naphthyl, pyridyl, quinolyl, pyrimidyl, pyrazinyl, indolyl, indolenyl, indolizinyl, imidazolyl, oxazolyl, thiazolyl, triazolyl, benzimidazolyl, benzoxazolyl or benzothiazolyl radicals which are optionally substitued by $C_1$-$C_4$-alkyl, chlorine, $C_1$-$C_4$-alkoxy, $C_1$-$C_4$-alkylsulphonyl, cyano and/or $C_1$-$C_4$-alkoxycarbonyl, or in each case two of the radicals $T^4$ to $T^6$ denote a bridge of the formulae $-CH_2-CH_2-$, $-CH_2CH_2CH_2-$, $-CH_2CH_2CH_2CH_2-$, $-CH_2SCH_2-$,

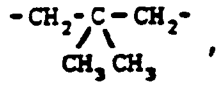 , 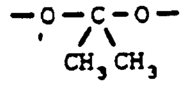 ,

$-CH=CH-CH_2-$, $-CH=CH-CH=CH-$,

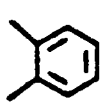 , 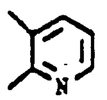 ,

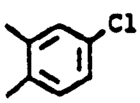 ,

$S^{11}$ and $S^{12}$ denote hydrogen, $C_1$-$C_8$-alkyl, allyl, cyclohexy 1, benzyl, phenyl, hydroxyl, $C_1$-$C_4$-alkoxy, chlorine, bromine, $C_1$-$C_4$-dialkylamino, nitro, cyano, $C_1$-$C_4$-alkylthio, $C_1$-$C_4$-alkoxycarbonyl, $C_1$-$C_4$-dialkylaminocarbonyl, $C_1$-$C_4$-alkoxycarbonyloxy or $C_1$-$C_4$-alkylsulphonyl or, together with $S^7$ or $S^8$, denote a $-CH_2CH_2-$ or $-CH_2CH_2CH_2-$-bridge which can be substituted by a maximum of three methyl groups,

$V^3$, $V^4$ & $W^1$ independently of one another denote hydrogen, $C_1$-$C_{18}$-alkyl which can be substituted by chlorine, $C_1$-$C_4$-alkoxy, cyano or $C_1$-$C_4$-alkoxycarbonyl, or allyl, cyclopentyl, cyclohexyl, cyano, or benzyl, phenethyl, naphthylmethyl, picolyl, quinolylmethyl, phenyl, naphthyl, pyridyl, pyrimidyl, pyrazinyl, imidazolyl, oxazolyl, thiazolyl, triazolyl, benzimidazolyl, benzoxazolyl, benzothiazolyl, quinolyl, 1,1-dioxo-tetrahydrothien-3-yl, piperidin-4-yl, or piperazin-1-yl-ethyl radicals which are optionally substituted by $C_1$-$C_4$-alkyl, chlorine, bromine, $C_1$-$C_4$-alkoxy, cyano, nitro or $C_1$-$C_4$-alkoxycarbonyl, or

$V^3$ and $V^4$, together with the nitrogen, denote pyrrolidine, piperidine, piperazine, morpholine, pyrazoline, pyrazole, imidazole, triazole or tetrazole radicals which are optionally substituted by $C_1$-$C_4$-alkyl, chlorine, $C_1$-$C_4$-alkoxy or phenyl,

$X^1$ denotes $C_1$-$C_{18}$-alkyl which can be substituted by chlorine, $C_1$-$C_4$-alkoxy, cyano or $C_1$-$C_4$-alkoxycarbonyl, or allyl, cyclopentyl, cyclohexyl, or benzyl, phenethyl, naphthylmethyl, picolyl, quinolylmethyl, phenyl, naphthyl, pyridyl, pyrimidyl, pyrazinyl, imidazolyl, oxazolyl, thiazolyl, triazolyl, benzimidazolyl, benzoxazolyl, benzothiazolyl or quinolyl radicals which are optionally substituted by $C_1$-$C_4$-alkyl, chlorine, bromine, $C_1$-$C_4$-alkoxy, cya-

no, nitro or $C_1$-$C_4$-alkoxycarbonyl,

L denotes hydrogen, $C_1$-$C_8$-alkyl which can be substitued by chlorine, $C_1$-$C_4$-alkoxy, cyano or $C_1$-$C_4$-alkoxycarbonyl, or allyl, cyclopentyl, cyclohexyl, chlorine, cyano, $C_1$-$C_8$-alkoxycarbonyl, or benzyl, phenethyl, picolyl, phenyl, naphthyl or pyridyl radicals which are optionally substituted by $C_1$-$C_4$-alkyl, chlorine, $C_1$-$C_4$-alkoxy, cyano, nitro or $C_1$-$C_4$-alkoxycarbonyl,

$Y^3$ and $Y^4$ denote cyano, nitro or phenyl, naphthyl, pyridyl, pyrimidyl, pyrazinyl, imidazolyl, oxazolyl, thiazolyl, triazolyl, benzimidazolyl, benzoxazolyl, benzothiazolyl or quinolyl radicals which are optionally substituted by $C_1$-$C_4$-alkyl, chlorine, bromine, $C_1$-$C_4$-alkoxy, cyano, nitro, $C_1$-$C_4$-alkylsulphonyl or $C_1$-$C_4$-alkoxycarbonyl,

$Z^4$, $Z^5$ & $Z^6$ independently of one another denote hydrogen, $C_1$-$C_{18}$-alkyl which can be substituted by chlorine, $C_1$-$C_4$-alkoxy, cyano or $C_1$-$C_4$-alkoxycarbonyl, or allyl, cyclopentyl, cyclohexyl, $C_1$-$C_{18}$-alkoxy, $C_1$-$C_{18}$-alkylthio, cyclopentoxy, cyclohexoxy, amino, mono- or bis-$C_1$-$C_{12}$-alkylamino, or anilino, N-$C_1$-$C_4$-alkylanilino, diphenylamino, benzyl, benzyloxy, benzylamino, N-$C_1$-$C_4$-alkylbenzylamino, dibenzylamino, phenethyl, phenethoxy, phenethamino, pyridylethoxy, pyridylamino, picolyl, phenyl, naphthyl, pyridyl, pyrimidyl, pyrazinyl, imidazolyl, oxazolyl, thiazolyl, triazolyl, benzimidazolyl, benzoxazolyl, benzothiazolyl, quinolyl or piperazin-1-yl-ethyl radicals which are optionally substituted by $C_1$-$C_4$-alkyl, chlorine, bromine, $C_1$-$C_4$-alkoxy, cyano, nitro or $C_1$-$C_4$-alkoxycarbonyl, or

$Z^4$ with $Z^5$ or $V^3$ or $Y^3$ denotes a bridge of the formulae $-CH_2CH_2-$, $-CH{=}CH-$, $-CH_2CH_2CH_2-$, $-CH_2CH_2CH_2CH_2-$,

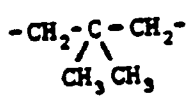 , 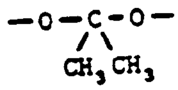 ,

$-CH{=}CH-CH_2-$, $-CH{=}CH-CH{=}CH-$,

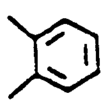 ,

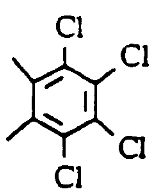 , 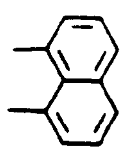 , 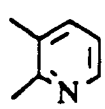 , 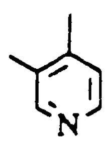 ,

$G^1$ and $G^2$ independently of one another denote hydrogen, $C_1$-$C_8$-alkyl which can be substituted by chlorine, $C_1$-$C_4$-alkoxy, cyano or $C_1$-$C_4$-alkoxycarbonyl, or allyl, cyclopentyl, cyclohexyl, hydroxyl, chlorine, $C_1$-$C_8$-alkoxy, cyano, $C_1$-$C_8$-alkoxycarbonyl, nitro, $C_1$-$C_8$-alkylsulphonyl, or benzyl, phenethyl, picolyl, phenyl, naphthyl, pyridyl, imidazolyl, oxazolyl, thiazolyl, triazolyl, benzimidazolyl, benzothiazolyl or benzoxazolyl radicals which are optionally substituted by $C_1$-$C_4$-alkyl, chlorine, $C_1$-$C_4$-alkoxy, cyano, nitro or $C_1$-$C_4$-alkoxycarbonyl,

$G^3$ denotes hydrogen, $C_1$-$C_8$-alkyl which can be substituted by chlorine, $C_1$-$C_4$-alkoxy, cyano or $C_1$-$C_4$-alkoxycarbonyl, or allyl, cyclopentyl, cyclohexyl, or benzyl, phenethyl, picolyl, phenyl, naphthyl or pyridyl radicals which are optionally substituted by $C_1$-$C_4$-alkyl, chlorine, $C_1$-$C_4$-alkoxy, cyano, nitro or $C_1$-$C_4$-alkoxycarbonyl,

$n^1$, $m^1$, $p^1$ and $q^1$ independently of one another denote 1 or 2 and

$(An^1)^-$ denotes chloride, bromide, $BF_4^-$, $ClO_4^-$, $SiF_6^{2-}$, $PF_6^-$, $B(C_6H_5)_4^-$, $H_2PO_4^-$ or the anions of $C_1$- to $C_{18}$-carboxylic acids, $C_2$-$C_{18}$-dicarboxylic acids, $C_1$-$C_{18}$-alkanesulphonic acids, benzene- or naphthalene-mono- or -dicarboxylic or -sulphonic acids which are optionally substituted by halogen, $C_1$-$C_4$-alkyl, $C_1$-$C_4$-alkoxy, hydroxyl, cyano, $C_1$-$C_4$-alkoxycarbonyl, nitro or $C_1$-$C_4$-alkylsulphonyl.

3. Pentamethine dyestuffs and derivatives of pentamethine dyestuffs of the formulae of Claim 2, in which

$R^5$ denotes $C_1$-$C_4$-alkoxy which can be substituted by chlorine or methoxy, or cyclohexoxy, benzyloxy or phenoxy radicals which can be substituted by methyl, methoxy and/or chlorine, or $NP^3P^4$,

$R^6$ denotes hydrogen, chlorine, $C_1$-$C_4$-alkyl or has the meaning of $R^5$,

$R^7$ and $R^8$ independently of one another denote hydrogen, chlorine, methyl, methoxy or phenyl,

$P^3$ and $P^4$ independently of one another denote hydrogen, $C_1$-$C_4$-alkyl which can be substituted by chlorine, hydroxyl, methoxy, ethoxy, cyano, methoxycarbonyl and/or acetoxy, or cyclohexyl, allyl, or benzyl, phenethyl or phenyl radicals which can be substituted by chlorine, methyl, methoxy, ethoxy, nitro, cyano and/or methoxycarbonyl, or

$NP^3P^4$ denotes pyrrolidino, piperidino, piperazino, N-methyl- or -ethylpiperazino, morpholino, pyrazolino, 3,5,5-trimethylpyrazolino, 5-methy-1-3,5-diphenylpyrazolino or

$P^3$-$R^7$, $P^4$-$R^7$, $P^3$-$R^8$ or $P^4$-$R^8$ denotes an atom group of the formulae $-CH_2-CH_2-$, $-CH_2-CH_2-CH_2-$,

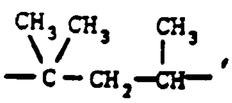

$-CH_2-CH_2-O-$,

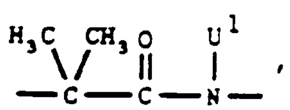

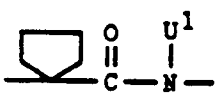 , 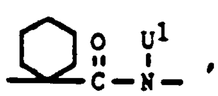 , 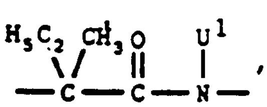

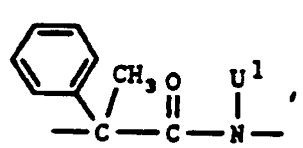

$U^1$ denotes hydrogen or methyl,

$Q^1$ denotes hydroxyl, $C_1$-$C_8$-alkoxy which can be substituted by chlorine, methoxy, ethoxy or cyano, or allyloxy, cyclopentoxy, cyclohexoxy, or benzyloxy, 2-phenylethoxy or picolyloxy radicals which are optionally substituted by methyl, chlorine or methoxy, or $C_1$-$C_8$-mono- or dialkylamino, or pyrrolidino, piperidino, morpholino, piperazino, hydroxyethylpiperazino, pyrazolo, imidazolo, triazolo or tetrazolo radicals which are optionally substituted by methyl, chlorine or methoxy, or anilino, N-$C_1$-$C_4$-alkylanilino, diphenylamino, benzylamino, N-$C_1$-$C_4$-alkyl-N-benzylamino, pyridylamino, benzoylamino, N-$C_1$-$C_4$-alkylbenzoylamino, N-phenylbenzoylamino, ben-

zenesulphonylamino, N-$C_1$-$C_4$-alkylbenzenesulphonylamino, phthalimido, naphthalimido, homophthalimido, 2-sulphobenzoic imido, succinimido or maleimido radicals which are optionally substituted by methyl, ethyl, chlorine, cyano or nitro, or aminocarbonylamino, $C_1$-$C_8$-alkoxycarbonylamino, $C_1$-$C_8$-alkylthio, phenylthio, which is optionally substituted by methyl, chlorine or methoxy, or

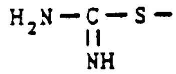

$C_1$-$C_8$-alkysulphonyl or phenylsulphonyl, benzylsulphonyl or naphthylsulphonyl radicals optionally substituted by methyl, ethyl, chlorine, bromine, cyano or methoxycarbonyl, or benzyl, naphthylmethyl, picolyl, quinolylmethyl, imidazolylmethyl, benzimidazolylmethyl, oxazolylmethyl, benzoxazolylmethyl, thiazolylmethyl, benzothiazolylmethyl, triazolylmethyl or tetrazolylmethyl radicals substituted in the α-position by cyano, $C_1$-$C_4$-alkoxycarbonyl, $C_1$-$C_4$-alkylsulphonyl, $C_1$-$C_4$-alkanoyl or benzoyl and optionally further substituted by methyl, ethyl, chlorine, bromine, cyano, nitro or methoxycarbonyl, or dicyanomethyl, cyano-$C_1$-$C_4$-alkoxycarbonylmethyl, bis-$C_1$-$C_4$-alkoxycarbonylmethyl, cyano-$C_1$-$C_4$-alkanoylmethyl, bis-$C_1$-$C_4$-alkanoylmethyl, or cyano-benzoylmethyl, $C_1$-$C_4$-alkanoyl-benzoylmethyl, $C_1$-$C_4$-alkoxycarbonylbenzoylmethyl, dibenzoylmethyl, cyanophenylsulphonylmethyl, $C_1$-$C_4$-alkanoyl-phenylsulphonylmethyl, $C_1$-$C_4$-alkoxycarbonyl-phenylsulphonylmethyl or bisphenylsulphonylmethyl radicals which are optionally substituted by methyl, ethyl, chlorine, cyano, nitro or methoxycarbonyl, or the radicals of 1,3-cyclopentanedione, 1,3-cyclohexanedione, 1,3-indanedione, Meldrum's acid, pyrazolone, 2-hydroxy-6-pyridone or barbituric acid which are optionally substituted by methyl, ethyl, chlorine, methoxy, ethoxy, phenyl, cyano, methoxy- or ethoxycarbonyl,

$S^7$ and $S^8$ independently of one another denote hydrogen, $C_1$-$C_8$-alkyl which can be substituted by chlorine, methoxy, ethoxy, cyano or methoxycarbonyl, or allyl, cyclopentyl, cyclohexyl, or benzyl, phenethyl or picolyl radicals which are optionally substituted by methyl, chlorine or methoxy,

$S^9$ and $S^{10}$ independently of one another denote hydrogen, $C_1$-$C_8$-alkyl which can be substituted by chlorine, methoxy, ethoxy, cyano or methoxycarbonyl, or allyl, cyclopentyl, cyclohexyl, or benzyl, phenethyl, picolyl, phenyl, naphthyl, pyridyl, pyrimidyl, benzimidazolyl, benzoxazolyl, benzothiazolyl or quinolyl radicals which are optionally substituted by methyl, chlorine, methoxy, cyano, nitro and/or methoxycarbonyl,

$T^4$ and $T^6$ denote hydrogen, $C_1$-$C_8$-alkyl which can be substituted by chlorine, methoxy, cyano or methoxycarbonyl, or vinyl, allyl, cyclopentyl, cyclohexyl, chlorine, $C_1$-$C_8$-alkoxy, cyano, methoxycarbonyl, nitro, benzyl, or phenyl or pyridyl radicals which are optionally substituted by methyl, chlorine, cyano or methoxy,

$T^5$ denotes hydrogen or methyl,

$S^{11}$ and $S^{12}$ independently of one another denote hydrogen, $C_1$-$C_4$-alkyl, cyclohexyl, benzyl, $C_1$-$C_4$-alkoxy, chlorine, $C_1$-$C_4$-dialkylamino, nitro, cyano, methoxy- or ethoxycarbonyl or methylsulphonyl, it being possible for $S^{11}$ or $S^{12}$ to be in the 5-, 6- and/or 7-position on the indolyl radical, or a radical $S^{11}$ or $S^{12}$ in the 7-position can form, together with $S^7$ or $S^8$, a bridge of the formulae $-CH_2CH_2-$,

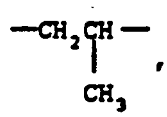,

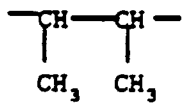, 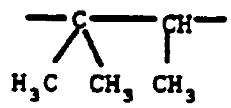,

$-CH_2CH_2CH_2-$,

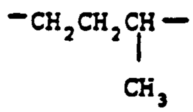, 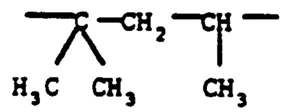

and

n[1], m[1], p[1] and q[1] independently of one another denote 1 or 2 and

$(An^1)^-$ denotes chloride, bromide, $BF_4^-$, $ClO_4^-$, $SiF_6^{2-}$ or the anions of $C_1$-$C_8$-carboxylic acids, $C_2$-$C_8$-dicarboxylic acids, $C_1$-$C_8$-alkanesulphonic acids, benzoic acid, benzenesulphonic acid or phthalic acid which are substituted by fluorine, chlorine, methyl, methoxy, hydroxyl, cyano or methoxycarbonyl.

**4.** Pentamethine dyestuffs of the formula

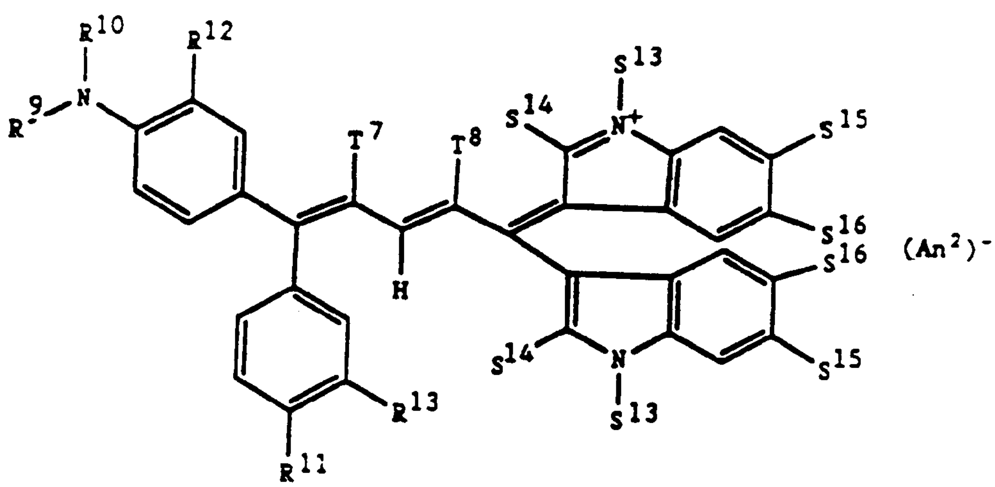

and derivatives of pentamethine dyestuffs of the formula

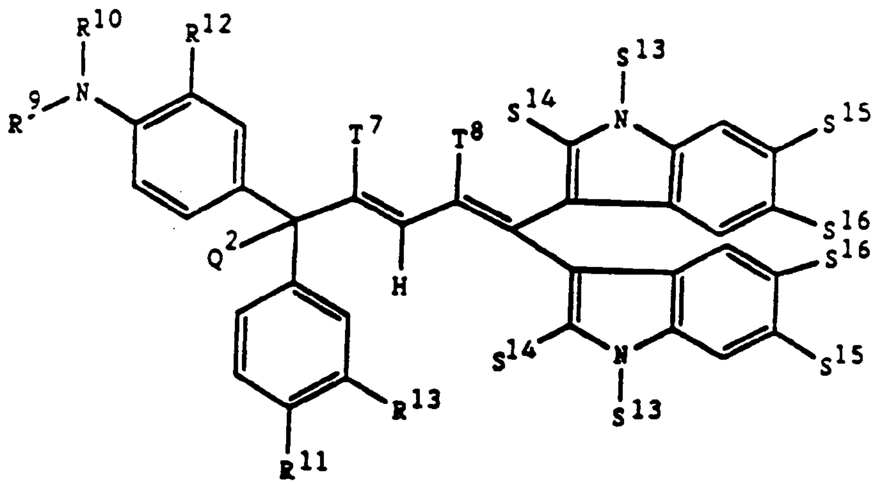

and their isomeric forms with reference to the position of the $Q^2$ group, as they are represented in Claim 1, in which

$R^9$ and $R^{10}$ independently of one another denote hydrogen, methyl, ethyl, 1- or 2-propyl, 1- or 2-butyl, 2-methyl-1-propyl, cyclohexyl, allyl, benzyl, 4-tolyl, 4-anisyl, 4-ethoxyphenyl or 4-cyanophenyl, or

$NR^9R^{10}$ denotes pyrrolidino, piperidino, morpholino or 3,5,5-trimethylpyrazolino,

$R^{11}$ denotes hydrogen, chlorine, methyl, ethyl, methoxy, ethoxy, phenoxy or $NR^9R^{10}$,

$R^{12}$ and $R^{13}$ independently of one another denote hydrogen, methyl, chlorine, methoxy or, together with $R^9$, denote a group of the formulae $-CH_2-CH_2-$, $-CH_2-CH_2-CH_2-$,

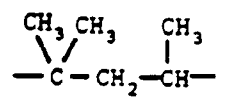,

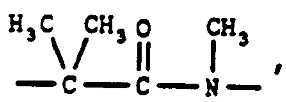, 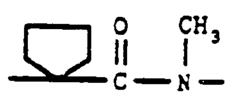,

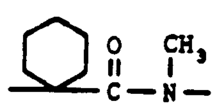,

$Q^2$ denotes hydroxyl, methoxy, ethoxy, 1- or 2-propoxy, 1- or 2-butoxy, 2-methyl-1-propoxy, 1,1-dimethylethoxy, dimethylamino, diethylamino, dipropylamino, dibutylamino, propylamino, butylamino, pyrrolidino, piperidino, morpholino, piperazino, pyrazolo, imidazolo, triazolo, anilino, 4-methylanilino, 4-chloroanilino, 4-methoxyanilino, 4-nitroanilino, N-methylanilino, benzylamino, N-methylbenzylamino, N-ethylbenzylamino, benzoylamino, benzenesulphonylamino, phthalimido, naphthalimido, succinimido, maleimido, methylthio, ethylthio, phenylthio, methylsulphonyl, ethylsulphonyl, propylsulphonyl, butylsulphonyl, hexylsulphonyl, octylsulphonyl, benzenesulphonyl, 4-methylbenzenesulphonyl, 4-chlorobenzenesulphonyl, α-cyanobenzyl, α-cyano-4-methylbenzyl, α-cyano-4-chlorobenzyl, α-cyano-4-nitrobenzyl, α-cyano-α-picolyl, α-cyano-γ-picolyl, dicyanomethyl, cyanomethoxycarbonylmethyl, cyanoethoxycarbonylmethyl, bis-methoxycarbonylmethyl, bis-ethoxycarbonylmethyl, 1-cyanoaceton-1-yl, 1-cyanobutanon-1-yl, 1-methoxycarbonylaceton-1-yl, 1-ethoxycarbonylaceton-1-yl, 1,3-pentanedion-3-yl, 1-benzoylaceton-1-yl, 2-cyano-1-phenylethanon-2-yl, 2-methoxycarbonyl-1-phenylethanon-2-yl, dibenzoylmethyl, cyano-phenylsulphonylmethyl, bisphenylsulphonylmethyl, 1,3-cyclopentanedion-2-yl, 1,3-cyclohexanedion-2-yl, 5,5-dimethyl-1,3-cyclohexanedion-2-yl, 1,3-indanedion-2-yl, 2,2-dimethylperhydro-1,3-dioxin-4,6-dion-5-yl, 3-methyl-1-phenyl-2-pyrazolin-5-on-4-yl, 1-(2-chlorophenyl)-3-methyl-2-pyrazolin-5-on-4-yl, 3-methyl-1-(4-methylphenyl)-2-pyrazolin-5-on-4-yl, 3-methyl-1-(4-nitrophenyl)-2-pyrazolin-5-on-4-yl, 3-methyl-1-phenyl-5-imino-2-pyrazolin-4-yl, 3-methyl-1-(3-sulfolanyl)-2-pyrazolin-5-on-4-yl, 3-ethoxycarbonyl-1-phenyl-2-pyrazolin-5-on-4-yl, 3-aminocarbonyl-1-phenyl-2- pyrazolin-5-on-4-yl, 4-hydroxy-1-methyl-2(1H)-quinolinon-3-yl, 3-cyano-4-methyl-6-hydroxy-2(1H)-pyridon-5-yl, 3-cyano-1,4-dimethyl-6-hydroxy-2(1H)-pyridon-5-yl or 2,4,6-(1H,3H,5H)-pyrimidinetrion-5-yl,

| | |
|---|---|
| $S^{13}$ | denotes methyl, ethyl, propyl, butyl, hexyl, octyl, 2-cyanoethyl, 2-methoxyethyl, 2-methoxycarbonylethyl, 2-chloroethyl, 2-acetoxyethyl, cyclohexyl, allyl or benzyl, |
| $S^{14}$ | denotes methyl, ethyl, propyl, butyl, hexyl, octyl, cyclohexyl, benzyl, phenyl, 2-, 3- or 4-chlorophenyl, 2-, 3- or 4-methoxyphenyl, 4-nitrophenyl, 2,4-dichlorophenyl, 2-, 3- or 4-tolyl or 2-, 3- or 4-pyridyl, |
| $T^7$ and $T^8$ | independently of one another denote hydrogen or methyl, |
| $S^{15}$ and $S^{16}$ | denote hydrogen, methyl, methoxy, chlorine, cyano, methoxycarbonyl or nitro and |
| $(An^2)^-$ | denotes chloride, bromide, formate, acetate, propionate, butyrate, hydroxyacetate, chloroacetate, oxalate, lactate, benzoate, salicylate, methanesulphonate, ethanesulphonate, trifluoromethanesulphonate, monofluorobutanesulphonate, benzenesulphonate, toluenesulphonate, chlorobenzenesulphonate, dodecylbenzenesulphonate, $ClO_4^-$ or $BF_4^-$. |

**5.** Process for the preparation of pentamethine dyestuffs and derivatives of pentamethine dyestuffs of Claim 1, characterized in that an aldehyde or a ketone of the formula

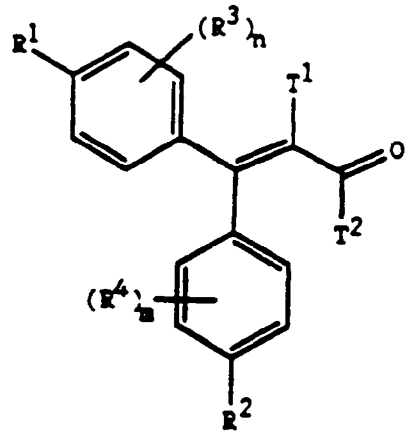

is condensed with an ethene of the formula

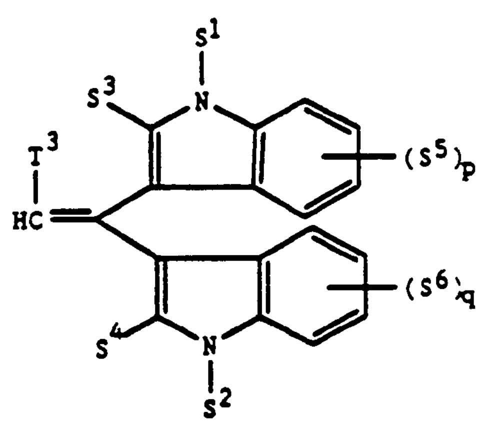

or an ethene of the formula

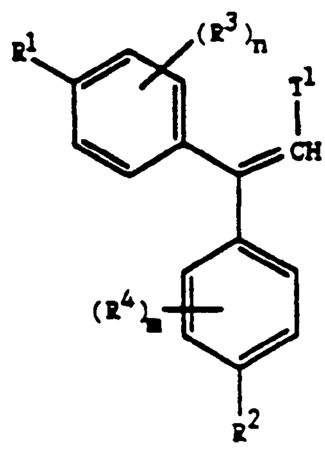

is condensed with an aldehyde or ketone of the formula

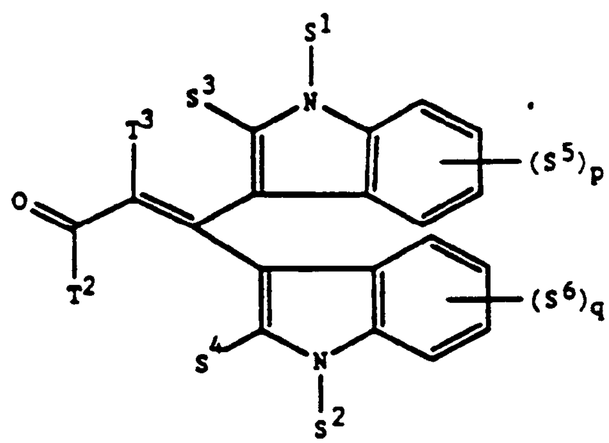

and - in the case of the derivatives - reacted with a compound of the formula

HQ

in which

$R^1$-$R^4$, $T^1$-$T^3$, $S^1$-$S^6$, Q, n, m, p, q and $An^-$ have the meaning given in Claim 1.

6. Mixtures of derivatives of pentamethine dyestuffs of the isomeric formulae given in Claim 1.

7. Use of the derivatives of pentamethine dyestuffs of Claim 1 for pressure- and thermosensitive recording materials.

8. Pressure- or thermosensitive recording material, characterized in that it contains derivatives of pentamethine dyestuffs of Claim 1.

9. Use of pentamethine dyestuffs of Claim 1 for optical recording materials.

10. Optical recording material, characterized in that it contains pentamethine dyestuffs of Claim 1.

## Revendications

1. Colorants pentaméthiniques de formule

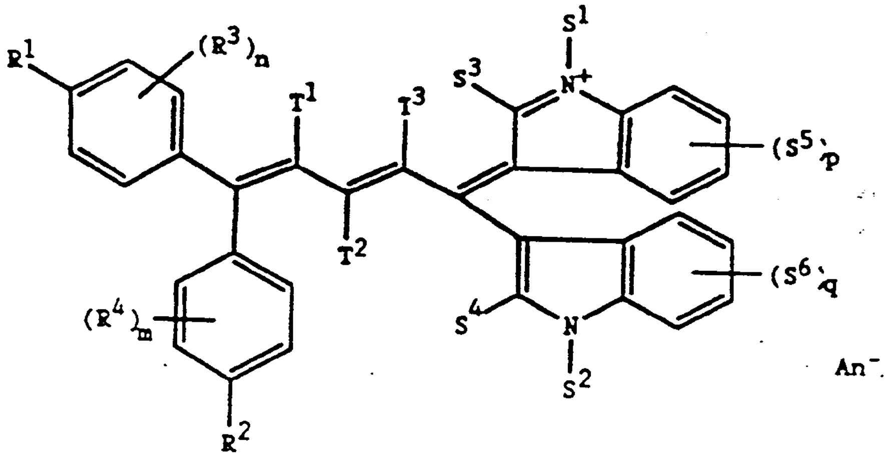

ainsi que des dérivés de colorants pentaméthiniques des formules isomères

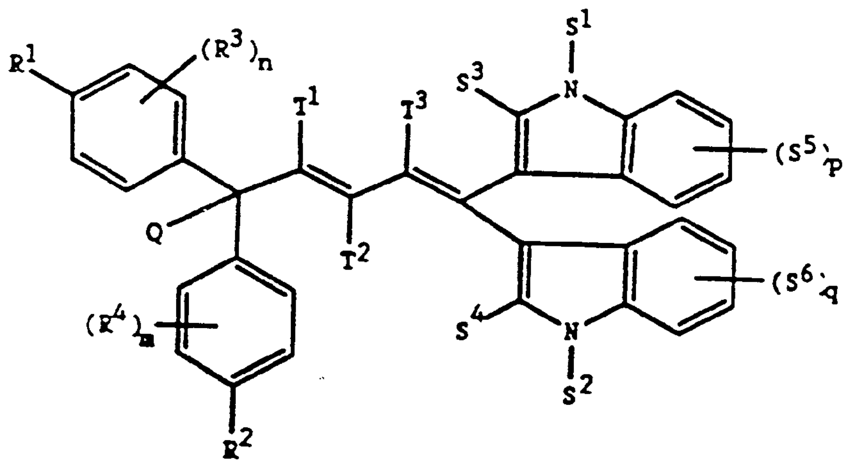

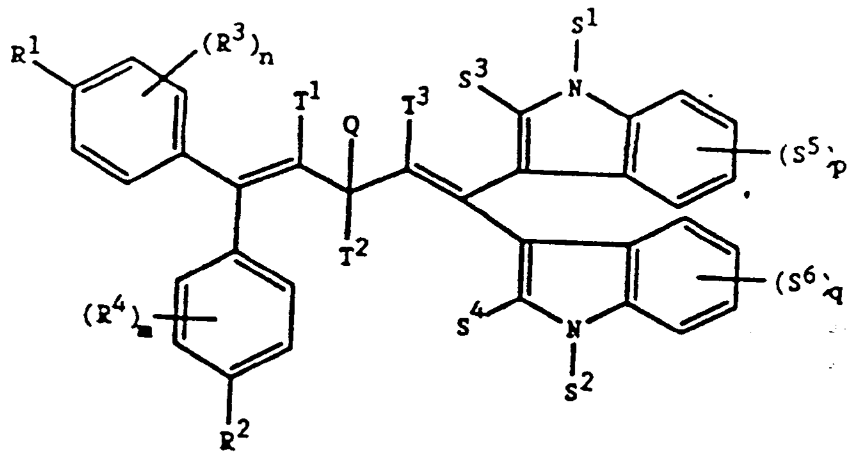

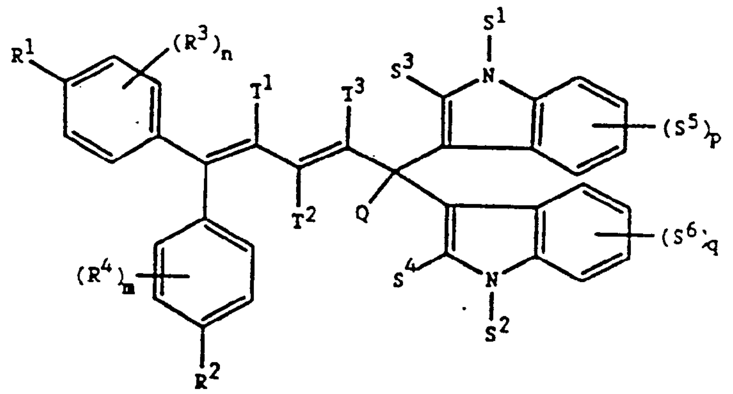

formules dans lesquelles

| | |
|---|---|
| $R^1$ et $R^2$ | représentent, indépendamment l'un de l'autre, l'hydrogène, un halogène, un groupe alkyle, cycloalkyle, aralkyle, alkoxy, cycloalkoxy, phénoxy, alkylthio ou $NP^1P^2$, |
| $R^3$ et $R^4$ | représentent, indépendamment l'une de l'autre, l'hydrogène, un halogène, un groupe alkyle, alkoxy ou phényle, |
| $P^1$ et $P^2$ | représentent, indépendamment l'un de l'autre, l'hydrogène, un groupe alkyle, cycloalkyle, alcényle, aralkyle, aryle ou un reste hétérocyclique éventuellement lié par l'intermédiaire d'un radical alkyle |
| $P^1$ et $P^2$ | forment conjointement avec l'atome N un noyau pentagonal, hexagonal ou heptagonal saturé ou partiellement insaturé, qui peut contenir 0-2 autres hétéro-atomes tels que N, O ou S et qui peut être substitué par un radical alkyle ou phényle, ou bien |
| $P^1$ et/ou $P^2$ | forment avec $R^3$ et/ou $R^4$ les atomes restants d'un noyau pentagonal ou hexagonal qui peut encore contenir un atome O ou N et peut être substitué par un radical alkyle ou phényle |
| Q | est un groupe OV, $NV^1V^2$, SW, $SO_2X$ ou $CLY^1Y^2$, |
| $S^1$ et $S^2$ | représentent, indépendamment l'un de l'autre, l'hydrogène, un groupe alkyle, alcényle, cycloalkyle, aralkyle ou un reste hétérocyclique lié par l'intermédiaire d'un radical alkyle, |
| $S^3$ et $S^4$ | représentent indépendamment l'un de l'autre l'hydrogène, un groupe alkyle, alcényle, cycloalkyle, aralkyle, aryle ou un reste hétérocyclique éventuellement lié par l'intermédiaire d'un radical alkyle, |
| $T^1$ à $T^3$ | représentent l'hydrogène, un groupe alkyle, alcényle, cycloalkyle, aralkyle, un halogène, un groupe alkoxy, dialkylamino, cyano, hydroxycarbonyle, alkoxycarbonyle, aryle, un reste hétérocyclique éventuellement lié par l'intermédiaire d'un radical alkyle, ou bien deux des restes $T^1$ à $T^3$ sont les chaînons manquants d'un noyau pentagonal à heptagonal qui peut être aromatique ou partiellement hydrogéné et peut contenir jusqu'à deux hétéro-atomes de la série O, N ou S, |
| $S^5$ et $S^6$ | représentent indépendamment l'un de l'autre l'hydrogène, un groupe alkyle, alcényle, cycloalkyle, aralkyle, aryle, hydroxy, alkoxy, halogéno, dialkylamino, nitro, cyano, alkylthio, alkoxycarbonyle, dialkylaminocarbonyle, alkoxycarbonyloxy ou alkylsulfonyle ou forment conjointement avec $S^1$ ou respectivement $S^2$ un pont en $C_2$ ou $C_3$, |
| V, $V^1$, $V^2$ | représentent, indépendamment l'un de l'autre, l'hydrogène, un groupe alkyle, alcényle, cycloalkyle des restes aryle ou hétérocycliques éventuellement liés par l'intermédiaire d'un radical alkyle, -CO-$Z^1$, |

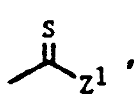 , 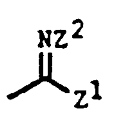 ,

CN, ou bien $V^1$ et $V^2$ forment, conjointement avec l'azote, un noyau le cas échéant entièrement ou partiellement hydrogéné, contenant 0 à 3 hétéro-atomes de la série O, N, S, $SO_2$

W est l'hydrogène, un groupe alkyle, alcényle, cycloalkyle, des restes aryle ou hétérocycliques éventuellement liés par l'intermédiaire d'un radical alkyle,

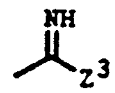

ou CN,

X est un groupe alkyle, alcényle, cycloalkyle ou des restes aryle ou hétérocycliques éventuellement liés par l'intermédiaire de radicaux alkyle,

L est l'hydrogène, un groupe alkyle, alcényle, cycloalkyle, un halogène, des restes aryle ou hétérocycliques éventuellement liés par l'intermédiaire d'un radical alkyle ou a la définition de $Y^1$ ou $Y^2$,

$Y^1$ et $Y^2$ représentent $-CO-Z^1$,

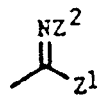 ,

$-CN$, $-SO_2-Z^1$, $NO_2$, un reste aryle ou un reste hétérocyclique,

$Z^1$ à $Z^3$ représentent l'hydrogène, un groupe alkyle, alcényle, cycloalkyle, alkoxy, alkylthio, cycloalkoxy, amino, mono- ou bisalkylamino, arylamino ou des restes aryle ou hétérocycliques éventuellement substitués par l'intermédiaire d'un radical alkyle ou alkoxy,

$Z^1$ et $Z^2$ forment avec $V^1$ ou $V^2$ ou respectivement $Y^1$ ou $Y^2$ ou un autre reste $Z^{1'}$ ou $Z^{2'}$ les chaînons manquants d'un noyau éventuellement condensé au benzène, entièrement ou partiellement hydrogéné, contenant 0-2 hétéro-atomes de la série O, N, S ou $SO_2$,

$Z^{1'}$ et $Z^{2'}$ ayant la définition de $Z^1$ ou respectivement $Z^2$ et

n, m, p et q ayant la valeur 1 ou 2 et

$An^-$ représente un anion,

et tous les restes cycliques ou non cycliques peuvent porter des substituants non ioniques classiques dans la chimie des colorants.

**2.** Colorants pentaméthiniques de formule

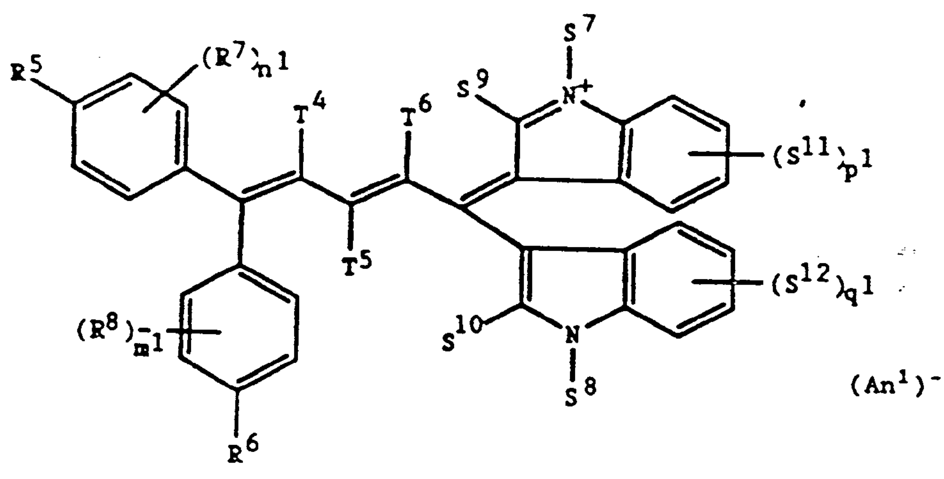

ainsi que des dérivés de colorants pentaméthiniques des formules isomères

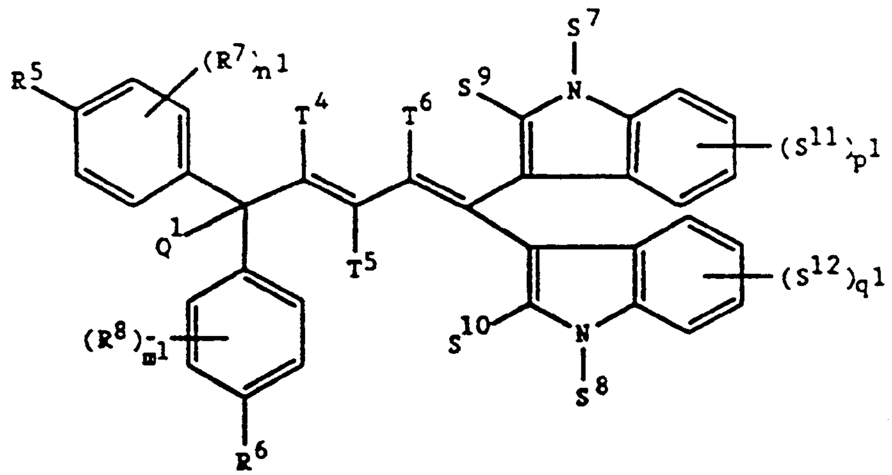

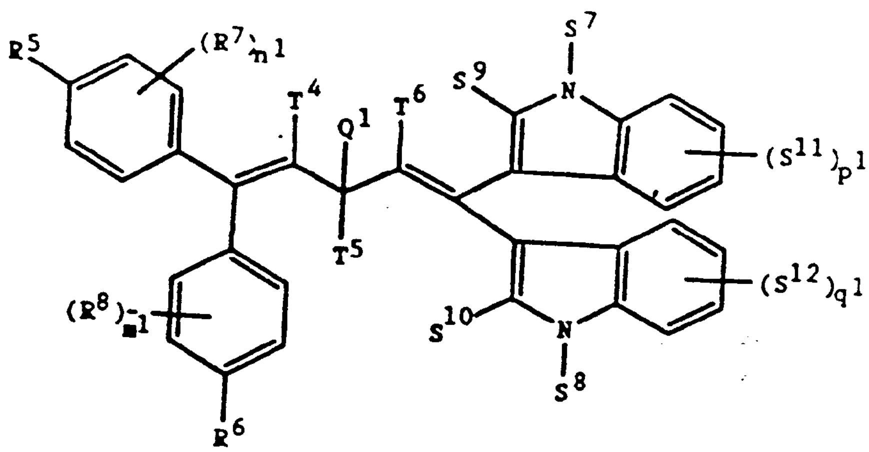

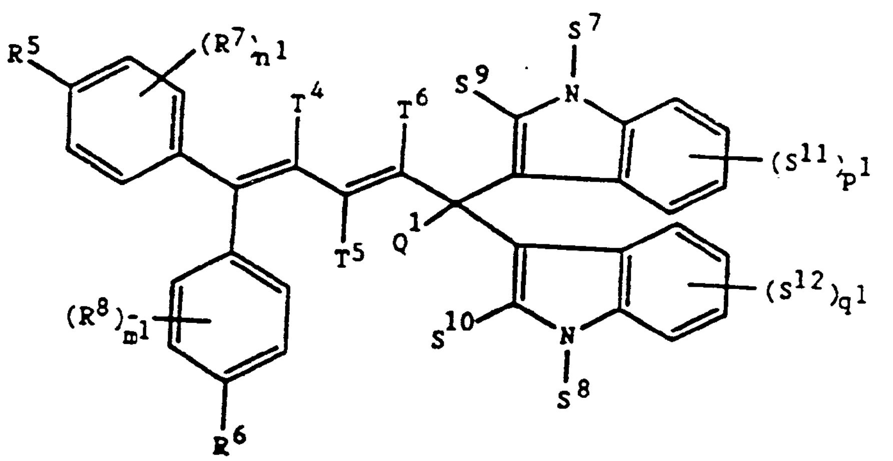

où

$R^5$ désigne des restes alkoxy en $C_1$ à $C_{18}$ ou alkylthio en $C_1$ à $C_{18}$ qui peuvent être substitués par du chlore ou un radical alkoxy en $C_1$ à $C_4$, des restes cyclopentoxy, cyclohexoxy, benzyloxy ou phényloxy qui peuvent être substitués par des radicaux alkyle en $C_1$ à $C_4$, alkoxy en $C_1$ à $C_4$ et/ou du chlore, ou des restes $NP^3P^4$,

$R^6$ désigne l'hydrogène, le chlore, un groupe alkyle en $C_1$ à $C_{18}$, cyclopentyle, cy-

clohexyle, benzyle ou a la définition de $R^5$,

$R^7$ et $R^8$ désignent, indépendamment l'un de l'autre, l'hydrogène, le chlore, un groupe alkyle en $C_1$ à $C_4$, alkoxy en $C_1$ à $C_4$ ou phényle,

$P^3$ et $P^4$ désignent indépendamment l'un de l'autre l'hydrogène, un groupe alkyle en $C_1$ à $C_{18}$ qui peut être substitué par du chlore, un radical hydroxy, alkoxy en $C_1$ à $C_4$, cyano, (alkoxy en $C_1$ à $C_4$)carbonyle et/ou par un radical alcanoyloxy en $C_1$ à $C_4$, des restes cyclopentyle, cyclohexyle, alcényle en $C_3$ à $C_{10}$, benzyle, phénéthyle, phényle, pyridylméthyle ou pyridyléthyle qui peuvent être substitués par du chlore ou un radical alkyle en $C_1$ à $C_4$, alkoxy en $C_1$ à $C_4$, nitro, cyano et/ou (alkoxy en $C_1$ à $C_4$)carbonyle, ou bien

$P^3$ et $P^4$ forment conjointement avec l'atome d'azote un reste de pyrrolidine, pipéridine, pipérazine, morpholine ou pyrazoline éventuellement substitué par du chlore, un radical alkyle en $C_1$ à $C_4$ ou un radical phényle, ou bien

$P^3$-$R^7$, $P^4$-$R^7$, $P^3$-$R^8$ ou $P^4$-$R^8$ représentent un groupe d'atomes de formules $-CH_2-CH_2-$, $-CH_2-CH_2-CH_2-$,

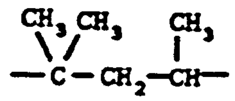,

$-CH_2-CH_2-O-$,

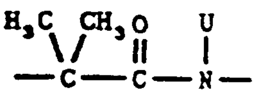,

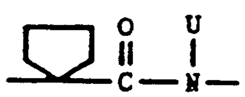, 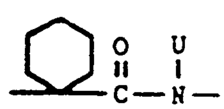,

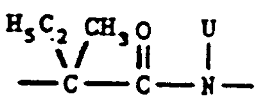, 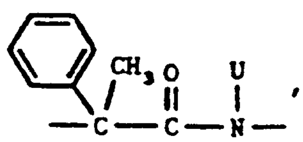,

U est l'hydrogène, un groupe alkyle en $C_1$ à $C_4$ ou benzyle,

$Q^1$ est un groupe hydroxy, alkoxy en $C_1$ à $C_{18}$ qui peut être substitué par du chlore, un radical alkoxy en $C_1$ à $C_4$, cyano ou (alkoxy en $C_1$ à $C_4$)carbonyle, un reste allyloxy, cyclopentoxy, cyclohexoxy, des restes benzyloxy, phénéthoxy, naphtylméthoxy, picolyloxy, phénoxy ou natphoxy éventuellement substitué par un radical alkyle en $C_1$ à $C_4$, chloro et/ou alkoxy en $C_1$ à $C_4$,
$-NV^3V^4$,

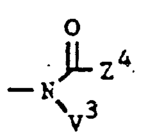, 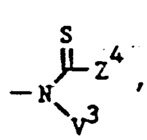, 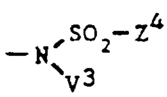,

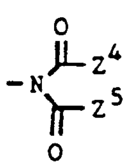, 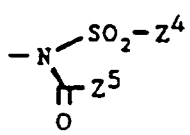, 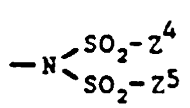,

-SW¹,

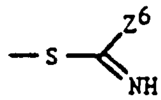 ,

$-SO_2X^1$,

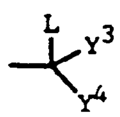 , 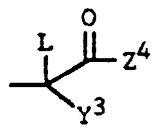 ,

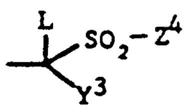 , 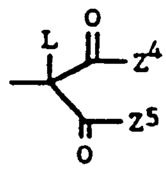 , 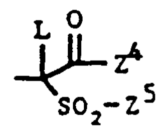 ,

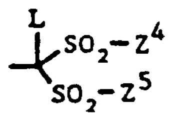 , 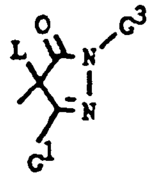 , 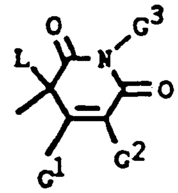 ,

$S^7$ et $S^8$ représentent indépendamment l'un de l'autre l'hydrogène, un groupe alkyle en $C_1$ à $C_{18}$ qui peut être substitué par un radical chloro, alkoxy en $C_1$ à $C_4$, cyano ou (alkoxy en $C_1$ à $C_4$)carbonyle, un groupe allyle, cyclopentyle, cyclohexyle, des restes benzyle, phénéthyle, naphtylméthyle ou picolyle éventuellement substitué par un radical alkyle en $C_1$ à $C_4$, chloro et/ou alkoxy en $C_1$ à $C_4$,

$S^9$ et $S^{10}$ représentent, indépendamment l'un de l'autre, l'hydrogène, un groupe alkyle en $C_1$ à $C_{18}$ qui peut être substitué par un radical chloro, alkoxy en $C_1$ à $C_4$ , cyano ou (alkoxy en $C_1$ à $C_4$)carbonyle, un groupe allyle, cyclopentyle, cyclohexyle, des restes benzyle, phénéthyle, naphtylméthyle, picolyle, quinolylméthyle, phényle, naphtyle, pyridyle, pyrimidyle, pyrazinyle, imidazolyle, oxazolyle, thiazolyle, triazolyle, benzimidazolyle, benzoxaxolyle, benzènethiazolyle ou quinolyle éventuellement substitués par un radical alkyle en $C_1$ à $C_4$, du chlore, du brome, un radical alkoxy en $C_1$ à $C_4$, cyano, nitro et/ou (alkoxy en $C_1$ à $C_4$)carbonyle,

$T^4$ à $T^6$ représentent l'hydrogène, un groupe alkyle en $C_1$ à $C_8$ qui peut être substitué par du chlore, un radical alkoxy en $C_1$ à $C_4$, cyano ou (alkoxy en $C_1$ à $C_4$)carbonyle, un groupe vinyle, allyle, cyclopentyle, cyclohexyle, du fluor, du chlore, du brome, un groupe alkoxy en $C_1$ à $C_8$ qui peut encore être substitué par un radical alkoxy en $C_1$ à $C_4$, un groupe di(alkyle en $C_1$ à $C_4$)amino, pipéridino, pyrrolidino, nitro, cyano, (alkoxy en $C_1$ à $C_4$)carbonyle, des restes benzyle, phénéthyle, naphtylméthyle, picolyle, phényle, naphtyle, pyridyle, quinolyle, pyrimidyle, pyrazinyle, indolyle, indolényle, indolizinyle, imidazolyle, oxazolyle, thiazolyle, triazolyle, benzimidazolyle, benzoxazolyle ou benzothiazolyle éventuellement substitués par un radical alkyle en $C_1$ à $C_4$, chloro, alkoxy en $C_1$ à $C_4$ (alkyle en $C_1$ à $C_4$)sulfonyle, cyano et/ou (alkoxy en $C_1$ à $C_4$)carbonyle, ou bien deux des restes $T^4$ à $T^6$ forment dans chaque cas un pont de formules $-CH_2CH_2-$, $-CH_2CH_2CH_2-$, $-CH_2CH_2CH_2CH_2-$, $-CH_2SCH_2-$,

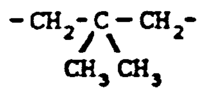 , 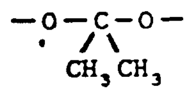 ,

$-CH=CH-CH_2-$, $-CH=CH-CH=CH-$,

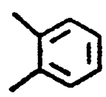 , 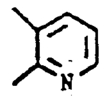 ,

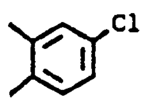 ,

$S^{11}$ et $S^{12}$ représentent l'hydrogène, un groupe alkyle en $C_1$ à $C_8$, allyle, cyclohexyle, benzyle, phényle, hydroxy, alkoxy en $C_1$ à $C_4$, du chlore, du brome, un groupe di(alkyle en $C_1$ à $C_4$)amino, nitro, cyano, alkylthio en $C_1$ à $C_4$, (alkoxy en $C_1$ à $C_4$)carbonyle, di(alkyle en $C_1$ à $C_4$)aminocarbonyle, (alkoxy en $C_1$ à $C_4$)carbonyloxy ou alkylsulfonyle en $C_1$ à $C_4$ ou forment conjointement avec $S^7$ ou $S^8$ un pont $-CH_2CH_2-$ ou $-CH_2CH_2CH_2$ qui peut être substitué par un maximum de trois groupes méthyle,

$V^3$, $V^4$ et $W^1$ représentent indépendamment l'un de l'autre l'hydrogène, un groupe alkyle en $C_1$ à $C_{18}$ qui peut être substitué par un radical chloro, alkoxy en $C_1$ à $C_4$, cyano ou (alkoxy en $C_1$ à $C_4$)carbonyle, un groupe allyle, cyclopentyle, cyclohexyle, cyano, des restes benzyle phénéthyle, naphtylméthyle, picolyle, quinolylméthyle, phényle, naphtyle, pyridyle, pyrimidyle, pyrazinyle, imidazolyle, oxazolyle, thiazolyle, triazolyle, benzimidazolyle, benzoxazolyle, benzthiazolyle, quinolyle, 1,1-dioxotétrahydrothién-3-yle, pipéridine-4-yle ou pipérazine-1-yléthyle qui peuvent être substitués le cas échéant par un radical alkyle en $C_1$ à $C_4$, chloro, bromo, alkoxy en $C_1$ à $C_4$, cyano, nitro, ou (alkoxy en $C_1$ à $C_4$)carbonyle ou bien

$V^3$ et $V^4$ forment conjointement avec l'atome d'azote des restes pyrrolidine, pipéridine, pipérazine, morpholine, pyrazoline, pyrazole, imidazole, triazole ou tétrazole éventuellement substitués par un radical alkyle en $C_1$ à $C_4$, chloro, alkoxy en $C_1$ à $C_4$ ou phényle,

$X^1$ est un groupe alkyle en $C_1$ à $C_{18}$ qui peut être substitué par un radical chloro, alkoxy en $C_1$ à $C_4$, cyano ou (alkoxy en $C_1$ à $C_4$)carbonyle, un groupe allyle, cyclopentyle, cyclohexyle, des restes benzyle, phénéthyle, naphtylméthyle, picolyle, quinolylméthyle, phényle, naphtyle, pyridyle, pyrimidyle, pyrazinyle, imidazolyle, oxazolyle, thiazolyle, triazolyle, benzimidazolyle, benzoxazolyle, benzthiazolyle ou quinolyle éventuellement substitués par un radical alkyle en $C_1$ à $C_4$, chloro, bromo, alkoxy en $C_1$ à $C_4$, cyano, nitro ou (alkoxy en $C_1$ à $C_4$)carbonyle,

L est l'hydrogène, un groupe alkyle en $C_1$ à $C_8$ qui peut être substitué par un radical chloro, alkoxy en $C_1$ à $C_4$, cyano ou (alkoxy en $C_1$ à $C_4$)carbonyle, un groupe allyle, cyclopentyle, cyclohexyle, du chlore, un groupe cyano, (alkoxy en $C_1$ à $C_8$)carbonyle, des restes benzyle, phénéthyle, picolyle, phényle, naphtyle ou pyridyle éventuellement substitués par un radical alkyle en $C_1$ à $C_4$, chloro, alkoxy en $C_1$ à $C_4$, cyano, nitro ou (alkoxy en $C_1$ à $C_4$)carbonyle,

$Y^3$ et $Y^4$ représentent un groupe cyano, nitro ou des restes phényle, naphtyle, pyridyle, pyrimidyle, pyrazinyle, imidazolyle, oxazolyle, thiazolyle, triazolyle, benzimidazolyle, benzoxazolyle, benzthiazolyle ou quinolyle éventuellement substitués par un radical alkyle en $C_1$ à $C_4$, chloro, bromo, alkoxy en $C_1$ à $C_4$, cyano, nitro, alkylsulfonyle en $C_1$ à $C_4$ ou (alkyle en $C_1$ à $C_4$)carbonyle,

$Z^4$, $Z^5$, $Z^6$ représentent, indépendamment l'un de l'autre, l'hydrogène, un groupe alkyle

en $C_1$ à $C_{18}$, qui peut être substitué par un radical chloro, alkoxy en $C_1$ à $C_4$, cyano ou (alkoxy en $C_1$ à $C_4$)carbonyle, un groupe allyle, cyclopentyle, cyclohexyle, alkoxy en $C_1$ à $C_{18}$, alkylthio en $C_1$ à $C_{18}$, cyclopentoxy, cyclohexoxy, amino mono- ou bis(alkyle en $C_1$ à $C_{12}$)amino, des restes anilino, N-(alkyle en $C_1$ à $C_4$)anilino, diphénylamino, benzyle, benzyloxy, benzylamino, N-(alkyle en $C_1$ à $C_4$)benzylamino, dibenzylamino, phénéthyle, phénéthoxy, phénéthylamino, pyridyléthoxy, pyridylamino, picolyle, phényle, naphtyle, pyridyle, pyrimidyle, pyrazinyle, imidazolyle, oxazolyle, thiazolyle, triazolyle, benzimidazolyle, benzoxazolyle, benzthiazolyle, quinolyle ou pipérazine-1-yl-éthyle éventuellement substitués par un radical alkyle en $C_1$ à $C_4$, chloro, bromo, alkoxy en $C_1$ à $C_4$, cyano, nitro ou (alkoxy en $C_1$ à $C_4$)carbonyle, ou bien

$Z^4$ forme avec $Z^5$ ou $V^3$ ou $Y^3$ un pont de formules $-CH_2CH_2-$, $-CH=CH-$, $-CH_2CH_2CH_2-$, $CH_2CH_2CH_2CH_2-$,

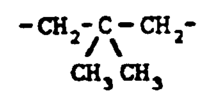 , 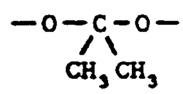 ,

$-CH=CH-CH_2-$, $-CH=CH-CH=CH-$,

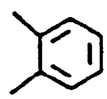 ,

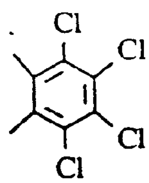 , 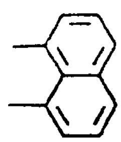 , 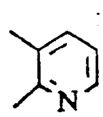 , 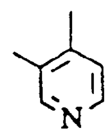 ,

$G^1$ et $G^2$ représentent indépendamment l'un de l'autre l'hydrogène, un groupe alkyle en $C_1$ à $C_8$ qui peut être substitué par un radical chloro, alkoxy en $C_1$ à $C_4$, cyano ou (alkoxy en $C_1$ à $C_4$)carbonyle, un groupe allyle, cyclopentyle, cyclohexyle, hydroxy, du chlore, un groupe alkoxy en $C_1$ à $C_8$, cyano, (alkoxy en $C_1$ à $C_8$)carbonyle, nitro, alkylsulfonyle en $C_1$ à $C_8$, des restes benzyle, phénéthyle, picolyle, phényle, naphtyle, pyridyle, imidazolyle, oxazolyle, thiazolyle, triazolyle, benzylimidazolyle, benzothiazolyle ou benzoxazolyle éventuellement substitués par un radical alkyle en $C_1$ à $C_4$, chloro, alkoxy en $C_1$ à $C_4$, cyano, nitro ou (alkoxy en $C_1$ à $C_4$)carbonyle,

$G^3$ représente l'hydrogène, un groupe alkyle en $C_1$ à $C_8$, qui peut être substitué par un radical chloro, alkoxy en $C_1$ à $C_4$, cyano ou (alkoxy en $C_1$ à $C_4$)carbonyle, un groupe allyle, cyclopentyle, cyclohexyle, des restes benzyle, phénéthyle, picolyle, phényle, naphtyle ou pyridyle portant éventuellement un substituant alkyle en $C_1$ à $C_4$, chloro, alkoxy en $C_1$ à $C_4$, cyano, nitro ou (alkoxy en $C_1$ à $C_4$)carbonyle, et

$n^1$, $m^1$, $p^1$ et $q^1$ ont, indépendamment les uns des autres, la valeur 1 ou 2 et

$(An^1)^-$ désigne un anion chlorure, bromure, $BF_4^-$, $ClO_4^-$, $SiF_6^{2-}$, $PF_6^-$, $B(C_6H_5)_4^-$, $H_2PO_4^-$ ou les anions d'acides carboxyliques en $C_1$ à $C_{18}$, d'acides dicarboxyliques en $C_2$ à $C_{18}$, d'acides alcanesulfoniques en $C_1$ à $C_{18}$, d'acides benzène- ou naphtalène-mono- ou -dicarboxyliques ou -sulfoniques portant éventuellement un substituant halogéno, alkyle en $C_1$ à $C_4$, alkoxy en $C_1$ à $C_4$, hydroxy, cyano, (alkoxy en $C_1$ à $C_4$)carbonyle, nitro ou alkylsulfonyle en $C_1$ à $C_4$.

3. Colorants pentaméthiniques et dérivés de colorants pentaméthiniques de formules suivant la revendication 2, dans lesquelles

$R^5$ est un groupe alkoxy en $C_1$ à $C_4$ qui peut être substitué par du chlore ou

un radical méthoxy, des restes cyclohexoxy, benzyloxy ou phénoxy qui peuvent être substitués par un radical méthyle, méthoxy et/ou du chlore, ou un groupe $NP^3P^4$,

$R^6$ représente l'hydrogène, le chlore, un groupe alkyle en $C_1$ à $C_4$ ou a la définition de $R^5$,

$R^7$ et $R^8$ représentent, indépendamment l'un de l'autre, l'hydrogène, le chlore, un groupe méthyle, méthoxy ou phényle,

$P^3$ et $P^4$ représentent indépendamment l'un de l'autre l'hydrogène, un groupe alkyle en $C_1$ à $C_4$ qui peut être substitué par un radical chloro, hydroxy, méthoxy, éthoxy, cyano, méthoxycarbonyle et/ou acétoxy, un groupe cyclohexyle, allyle, des restes benzyle, phénéthyle ou phényle qui peuvent être substitués par un radical chloro, méthyle, méthoxy, éthoxy, nitro, cyano et/ou méthoxycarbonyle, ou bien

$NP^3P^4$ est un groupe pyrrolidino, pipéridino, pipérazino, N-méthyl- ou -éthylpipérazino, morpholino, pyrazolino, 3,5,5-triméthylpyrazolino, 5-méthyl-3,5-diphénylpyrazolino ou

$P^3$-$R^7$, $P^4$-$R^7$, $P^3$-$R^8$ ou $P^4$-$R^8$ est un groupe d'atomes de formules $CH_2$-$CH_2$-, -$CH_2$-$CH_2$-$CH_2$-,

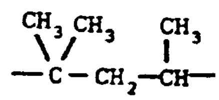,

-$CH_2$-$CH_2$-O-,

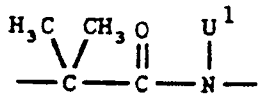,

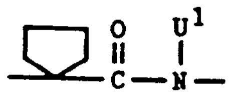, 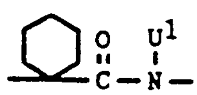, 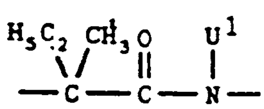,

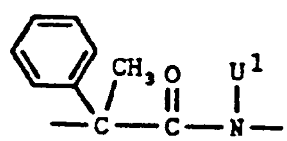,

$U^1$ est l'hydrogène ou le groupe méthyle,

$Q^1$ est un groupe hydroxy, alkoxy en $C_1$ à $C_8$ qui peut être substitué par un radical chloro, méthoxy, éthoxy ou cyano, un groupe allyloxy, cyclopentoxy, cyclohexoxy, des restes benzyloxy, 2-phényléthoxy ou picolyloxy éventuellement substitués par un radical méthyle, chloro, ou méthoxy, un groupe mono- ou di(alkyle en $C_1$ à $C_8$)amino, des restes pyrrolidino, pipéridino, morpholino, pipérazino, hydroxyéthylpipérazino, pyrazolo, imidazolo, triazolo, tétrazolo portant éventuellement un substituant méthyle, chloro ou méthoxy, des restes anilino, N-(alkyle en $C_1$ à $C_4$)anilino, diphénylamino, benzylamino, N-(alkyle en $C_1$ à $C_4$)-N-benzylamino, pyridylamino, benzoylamino, N-(alkyle en $C_1$ à $C_4$)benzoylamino, N-phénylbenzoylamino, benzènesulfonylamino, N-(alkyle en $C_1$ à $C_4$)benzènesulfonylamino, phtalimido, naphtalimido, homophtalimido, (acide benzoïque)-2-sulfonimido, succinimido, maléimido, aminocarbonylamino, (alkoxy en $C_1$ à $C_8$)carbonylamino, alkylthio en $C_1$ à $C_8$ portant éventuellement un substituant méthyle, éthyle, chloro, cyano ou nitro, un groupe phénylthio portant éventuellement un substituant méthyle, chloro ou méthoxy, un groupe

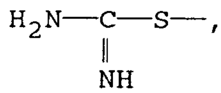

(alkyle en $C_1$ à $C_8$)-sulfonyle, des restes phénylsulfonyle, benzylsulfonyle, naphtylsulfonyle portant éventuellement un substituant méthyle, éthyle, chloro, bromo, cyano ou méthoxycarbonyle, des restes benzyle, naphtylméthyle, picolyle, quinolylméthyle, imidazolylméthyle, benzyimidazolylméthyl, oxazolyméthyle, benzoxazolylméthyle, thiazolylméthyle, benzothiazolylméthyle, triazolyméthyle, tétrazolylméthyle substitués en position alpha par un radical cyano, (alkoxy en $C_1$ à $C_4$)carbonyle, alkylsulfonyle en $C_1$ à $C_4$, alcanoyle en $C_1$ à $C_4$ ou benzoyle et portant en outre un substituant méthyle, éthyle, chloro, bromo, cyano, nitro ou méthoxycarbonyle, un groupe dicyanométhyle, cyano-(alkoxy en $C_1$ à $C_4$)carbonylméthyle, bis(alkoxy en $C_1$ à $C_4$)carbonylméthyle, cyano-(alcanoyle en $C_1$ à $C_4$) méthyle, bis(alcanoyle en $C_1$ à $C_4$)méthyle, des restes cyanobenzoylméthyle, (alcanoyle en $C_1$ à $C_4$)benzoylméthyle, (alkoxy en $C_1$ à $C_4$)carbonylbenzoylméthyle, dibenzoylméthyle, cyanophénylsulfonylméthyle, (alcanoyle en $C_1$ à $C_4$)phénylsulfonylméthyle, (alkoxy en $C_1$ à $C_4$)carbonylphénylsulfonylméthyle, bisphénylsulfonylméthyle portant éventuellement un substituant méthyle, éthyle, chloro, cyano, nitro ou méthoxycarbonyle, les restes de 1,3-cyclopentanedione, de 1,3-cyclohexanedione, de 1,3-indanedione, d'acide de meldrum, de pyrazolone, de 2-hydroxy-6-pyridone ou d'acide barbiturique portant éventuellement un substituant méthyle, éthyle, chloro, méthoxy, éthoxy, phényle, cyano, méthoxy ou éthoxycarbonyle,

$S^7$ et $S^8$ représentent, indépendamment l'un de l'autre, l'hydrogène, un groupe alkyle en $C_1$ à $C_8$ qui peut être substitué par un radical chloro, méthoxy, éthoxy, cyano ou méthoxycarbonyle, un groupe allyle, cyclopentyle, cyclohexyle, des restes benzyle, phénéthyle ou picolyle éventuellement substitués par un radical méthyle, chloro ou méthoxy,

$S^9$ et $S^{10}$ représentent, indépendamment l'un de l'autre, l'hydrogène, un groupe alkyle en $C_1$ à $C_8$ qui peut être substitué par un radical chloro, méthoxy, éthoxy, cyano ou méthoxycarbonyle, un groupe allyle, cyclopentyle, cyclohexyle, des restes benzyle, phénéthyle, picolyle, phényle, naphtyle, pyridyle, pyrimidyle, benzimidazolyle, benzoxazolyle, benzothiazolyle ou quinolyle portant éventuellement un substituant méthyle, chloro, méthoxy, cyano, nitro et/ou méthoxycarbonyle,

$T^4$ et $T^6$ représentent l'hydrogène, un groupe alkyle en $C_1$ à $C_8$, qui peut être substitué par un radical chloro, méthoxy, cyano ou méthoxycarbonyle, un groupe vinyle, allyle, cyclopentyle, cyclohexyle, du chlore, un groupe alkoxy en $C_1$ à $C_8$, cyano, méthoxycarbonyle, nitro, benzyle, des restes phényle ou pyridyle éventuellement substitués par un radical méthyle, chloro, cyano ou méthoxy,

$T^5$ est l'hydrogène ou le groupe méthyle,

$S^{11}$ et $S^{12}$ représentent, indépendamment l'un de l'autre, l'hydrogène, un groupe alkyle en $C_1$ à $C_4$, cyclohexyle, benzyle, alkoxy en $C_1$ à $C_4$, du chlore, un groupe di(alkyle en $C_1$ à $C_4$)amino, nitro, cyano, méthoxy- ou éthoxycarbonyle ou méthylsulfonyle, $S^{11}$ ou $S^{12}$ pouvant être substitué en position 5, 6 et/ou 7 sur le reste indolyle, ou bien un reste $S^{11}$ ou $S^{12}$ en position 7 forme conjointement avec $S^7$ ou respectivement $S^8$ un pont de formules

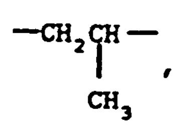

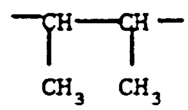, 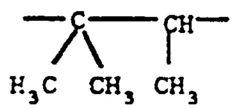,

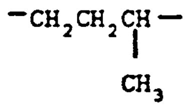, 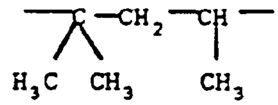

et

$n^1$, $m^1$, $p^1$ et $q^1$ ont indépendamment les uns des autres, la valeur 1 ou 2 et

$(An^1)^-$ est un anion chlorure, bromure, $BF_4^-$, $ClO_4^-$, $SiF_6^{2-}$ ou représente les anions d'acides carboxyliques en $C_1$ à $C_{18}$, d'acides dicarboxyliques en $C_2$ à $C_8$, d'acides alcanesulfoniques en $C_1$ à $C_8$, d'acide benzoïque, d'acide benzènesulfonique ou d'acide phtalique portant éventuellement un substituant fluoro, chloro, méthyle, méthoxy, hydroxy, cyano ou méthoxycarbonyle.

**4.** Colorants pentaméthiniques de formule

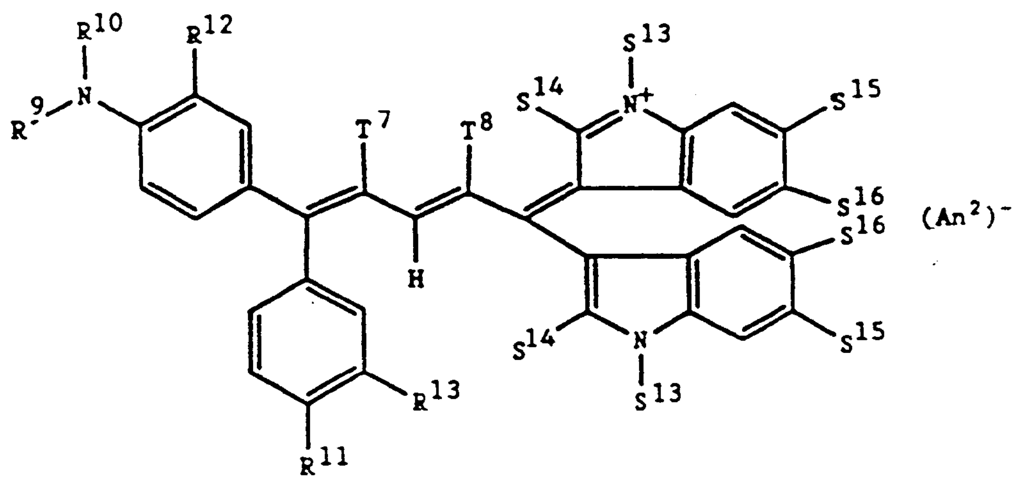

ainsi que dérivés de colorants pentaméthiniques de formule

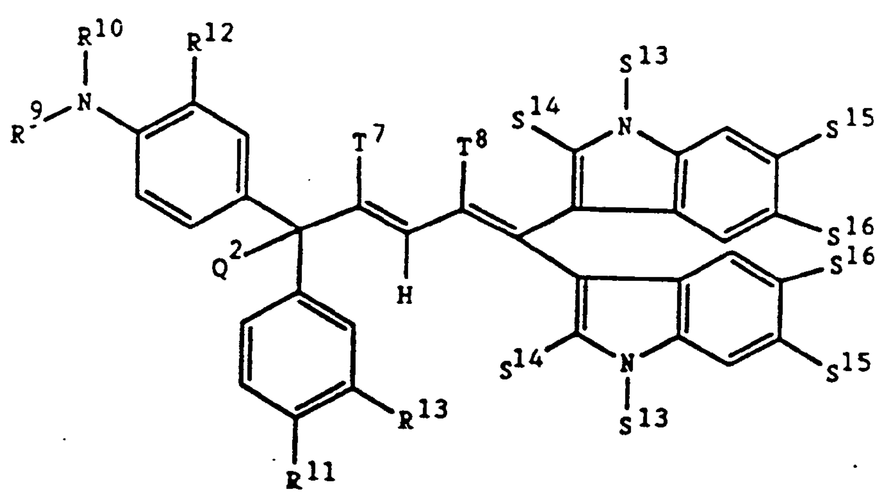

et leurs formes isomères par rapport à la position du groupe $Q^2$, comme indiqué dans la revendication 1, où

$R^9$ et $R^{10}$ représentent indépendamment l'un de l'autre l'hydrogène, un groupe méthyle, éthyle, 1- ou 2-propyle, 1- ou 2-butyle, 2-méthyl-1-propyle, cyclohexyle, allyle, benzyle, 4-tolyle, 4-anisyle, 4-éthoxyphényle, 4-cyanophényle, ou bien

$NR^9R^{10}$ représentent un reste pyrrolidino, pipéridino, morpholino, 3,5,5-triméthylpyrazolino,

$R^{11}$ est l'hydrogène, le chlore, un groupe méthyle, éthyle, méthoxy, éthoxy, phénoxy ou $NR^9R^{10}$,

$R^{12}$ et $R^{13}$ représentent indépendamment l'un de l'autre l'hydrogène, un groupe méthyle, du chlore, un groupe méthoxy ou forment conjointement avec $R^9$ un groupe de formules $-CH_2-CH_2-$, $-CH_2-CH_2-CH_2-$,

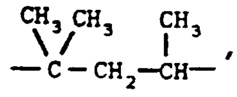

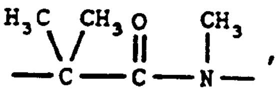

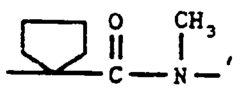

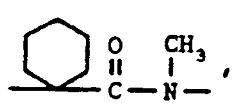

$Q^2$ est un groupe hydroxy, méthoxy, éthoxy, 1- ou 2-propoxy, 1- ou 2-butoxy, 2-méthyl-1-propoxy, 1,1-diméthyléthoxy, diméthylamino, diéthylamino, dipropylamino, dibutylamino, propylamino, butylamino, pyrrolidino, pipéridino, morpholino, pipérazino, pyrazolo, imidazolo, triazolo, anilino, 4-méthylanilino, 4-chloranilino, 4-méthoxyanilino, 4-nitroanilino, N-méthylanilino, benzylamino, N-méthylbenzylamino, N-éthylbenzylamino, benzoylamino, benzènesulfonylamino, phtalimido, naphtalimido, succinimido, maléimido, méthylthio, éthylthio, phénylthio, méthylsulfonyle, éthylsulfonyle, propylsulfonyle, butylsulfonyle, hexylsulfonyle, octylsulfonyle, benzènesulfonyle, 4-méthylbenzènesulfonyle, 4-chlorobenzènesulfonyle, α-cyanobenzyle, α-cyano-4-méthylbenzyle, α-cyano-4-chlorobenzyle, α-cyano-4-nitrobenzyle, α-cyano-α-picolyle, α-cyano-γ-picolyle, dicyanométhyle, cyanométhoxycarbonylméthyle, cyanoéthoxycarbonylméthyle, bis-méthoxycarbonylméthyle, bis-éthoxycarbonylméthyle, 1-cyanacétone-1-yle, 1-cyanobutanone-1-yle, 1-méthoxycarbonylacétone-1-yle, 1-éthoxycarbonylacétone-1-yle, 1,3-pentanedione-3-yle, 1-benzoylacétone-1-yle, 2-cyano-1-phényléthanone-2-yle, 2-méthoxycarbonyl-1-phényléthanone-2-yle, dibenzoylméthyle, cyanophénylsulfonylméthyle, bisphénylsulfonylméthyle, 1,3-cyclopentanedione-2-yle, 1,3-cyclohexanedione-2-yle, 5,5-diméthyl-1,3-cyclohexanedione-2-yle, 1, 3-indanedione-2-yle, 2,2-diméthylperhydro-1,3-dioxine-4,6-dione-5-yle, 3-méthyl-1-phényl-2-pyrazoline-5-one-4-yle, 1-(2-chlorophényl)-3-méthyl-2-pyrazoline-5-one-4-yle, 3-méthyl-1-(4-méthylphényl)-2-pyrazoline-5-one-4-yle,3-méthyl-1-(4-nitrophényl)-2-pyrazoline-5-one-4-yle, 3-méthyl-1-phényl-5-imino-2-pyrazoline-4-yle, 3-méthyl-1-(3-sulfolanyl)-2-pyrazoline-5-one-4-yle, 3-éthoxycarbonyl-1-phényl-2-pyrazoline-5-one-4-yle, 3-aminocarbonyl-1-phényl-2-pyrazoline-5-one-4-yle, 4-hydroxy-1-méthyl-2-(1H)-quinolinone-3-yle,3-cyano-4-méthyl-6-hydroxy-2(1H)-pyridone-5-yle, 3-cyano-1,4-diméthyl-6-hydroxy-2(1H)-pyridone-5-yle, 2,4,6-(1H,3H,5H)-pyrimidinetrione-5-yle,

$S^{13}$ est un groupe méthyle, éthyle, propyle, butyle, hexyle, octyle, 2-cyanéthyle, 2-méthoxyéthyle, 2-méthoxycarbonyléthyle, 2-chloréthyle, 2-acétoxyéthyle, cyclohexyle, allyle ou benzyle,

$S^{14}$ est un groupe méthyle, éthyle, propyle, butyle, hexyle, octyle, cyclohexyle, benzyle, phényle, 2-, 3- ou 4-chlorophényle, 2-, 3- ou 4-méthoxyphényle, 4-nitrophényle, 2,4-dichlorophényle, 2-, 3- ou 4-tolyle ou 2-, 3- ou 4-pyridyle,

$T^7$ et $T^8$ représentent, indépendamment l'un de l'autre, l'hydrogène ou un groupe méthyle,

$S^{15}$ et $S^{16}$ représentent l'hydrogène, un groupe méthyle, méthoxy, du chlore, un groupe cyano, méthoxycarbonyle ou nitro et

$(An^2)^-$ est un anion chlorure, bromure formiate, acétate, propionate, butyrate, hydroxyacétate, chloracétate, oxalate, lactate, benzoate, salicylate, méthanesulfonate, éthanesulfonate, trifluorométhanesulfonate, monofluorobutanesulfonate, benzènesulfonate, toluènesulfonate, chlorobezènesulfonate, dodécylbenzènesulfonate, $ClO_4^-$, $BF_4^-$.

5. Procédé de production de colorants pentaméthiniques et de dérivés de colorants pentaméthiniques suivant la revendication 1, caractérisé en ce qu'on condense un aldéhyde ou une cétone de formule

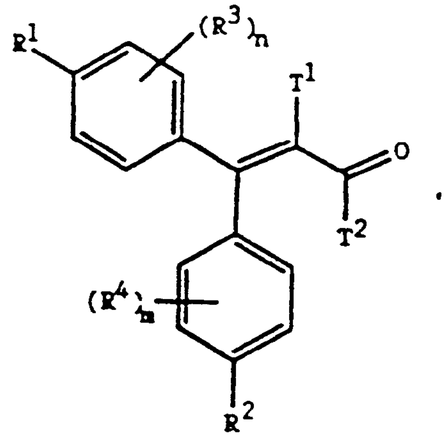

avec un éthène de formule

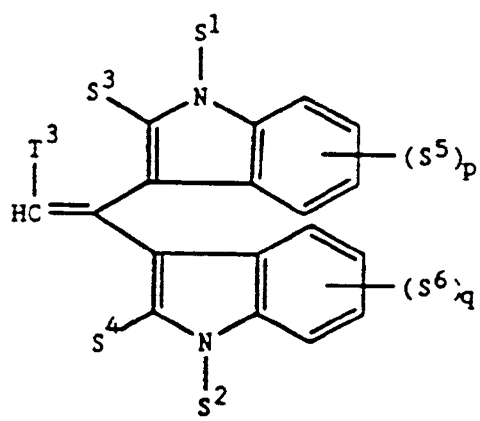

ou un éthène de formule

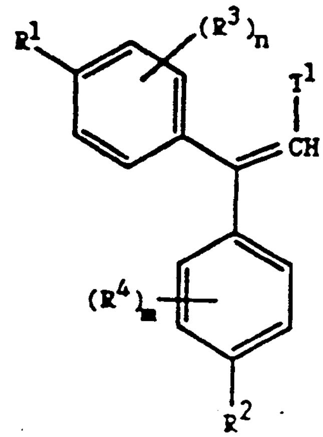

avec un aldéhyde ou une cétone de formule

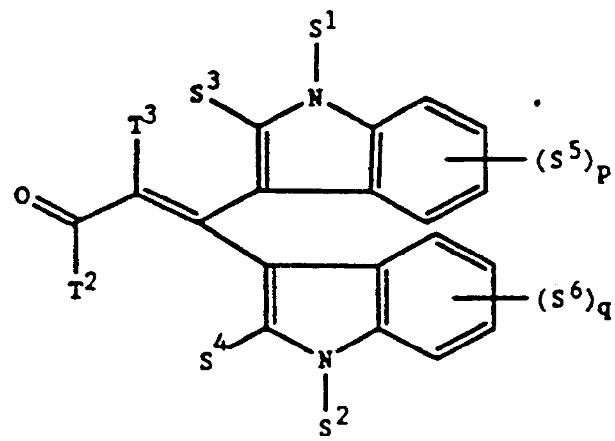

et, - dans le cas des dérivés - on fait réagir le produit avec un composé de formule

HQ

formules dans lesquelles

$R^1$-$R^4$, $T^1$-$T^3$, $S^1$-$S^6$, Q, n, m, p, q et $An^-$ ont la définition indiquée dans la revendication 1.

6. Mélanges de dérivés de colorants pentaméthiniques des formules isomères indiquées dans la revendication 1.

7. Utilisation des dérivés de colorants pentaméthiniques suivant la revendication 1 pour des supports d'enregistrement sensibles à la pression et à la chaleur.

8. Support d'enregistrement sensible à la pression ou à la chaleur, caractérisé en ce qu'il contient des dérivés de colorants pentaméthiniques suivant la revendication 1.

9. Utilisation de colorants pentaméthiniques suivant la revendication 1 pour des supports optiques d'enregistrement.

10. Support optique d'enregistrement, caractérisé en ce qu'il contient des colorants pentaméthiniques suivant la revendication 1.